(19) Europäisches Patentamt
European Patent Office
Office européen des brevets

(11) **EP 3 763 860 A1**

(12) **EUROPEAN PATENT APPLICATION**
published in accordance with Art. 153(4) EPC

(43) Date of publication:
**13.01.2021 Bulletin 2021/02**

(21) Application number: **19764162.4**

(22) Date of filing: **04.03.2019**

(51) Int Cl.:
*D02G 3/36* (2006.01)    *B29B 11/16* (2006.01)
*B29B 15/14* (2006.01)    *B29C 48/15* (2019.01)
*B29C 48/34* (2019.01)    *B29C 70/16* (2006.01)
*C08J 5/04* (2006.01)    *B29K 105/18* (2006.01)

(86) International application number:
**PCT/JP2019/008480**

(87) International publication number:
**WO 2019/172208 (12.09.2019 Gazette 2019/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 05.03.2018  JP 2018039109
05.03.2018  JP 2018039100
05.03.2018  JP 2018039102
05.03.2018  JP 2018039094
05.03.2018  JP 2018039112
05.03.2018  JP 2018039095
22.03.2018  JP 2018055254
25.04.2018  JP 2018083949

(71) Applicant: **Asahi Kasei Kabushiki Kaisha**
**Tokyo 1000006 (JP)**

(72) Inventors:
• **KOMATSUBARA, Yoshiaki**
**Tokyo 100-0006 (JP)**
• **AKIYAMA, Tsutomu**
**Tokyo 100-0006 (JP)**
• **YASUDA, Kazuharu**
**Tokyo 100-0006 (JP)**
• **ARATANI, Yusuke**
**Tokyo 100-0006 (JP)**

(74) Representative: **D Young & Co LLP**
**120 Holborn**
**London EC1N 2DY (GB)**

(54) **THERMOPLASTIC RESIN-COATED REINFORCING FIBER COMPOSITE YARN, PRODUCTION METHOD FOR SAID COMPOSITE YARN, CONTINUOUS FIBER REINFORCED RESIN MOLDING, AND PRODUCTION METHOD FOR COMPOSITE MATERIAL MOLDING**

(57)    Provided are: a thermoplastic resin-coated reinforcing fiber composite yarn, which has excellent resin-impregnation properties during molding, with which moldings of excellent properties can be produced even in short-time molding, and which, as a yarn, has excellent softness and excellent handling in weaving and knitting; a production method for said composite yarn; a continuous fiber-reinforced resin molding; and a production method for a composite material molding.

FIG. 1-1

Cross-section of thermoplastic resin coating-reinforcing fiber composite yarn

**Description**

FIELD

The present invention relates to a thermoplastic resin coating-reinforcing fiber composite yarn, to a method for producing the composite yarn, to a continuous fiber-reinforced molded resin and to a method for producing a molded composite material. More specifically, the invention relates to a thermoplastic resin coating-reinforcing fiber composite yarn wherein the entire circumference of a multifilament bundle of continuous reinforcing fibers is covered by a thermoplastic resin, the composite yarn having the continuous reinforcing fibers densely present inside the bundle of continuous reinforcing fibers, and/or the surface roughness of the composite yarn being low, or the thermoplastic resin being composed of two or more different types of resins, to a method for producing the composite yarn, to a continuous fiber-reinforced molded resin having high resin impregnating properties, high strength and rigidity, and to a method for producing a molded composite material (including a pultrusion molding method).

BACKGROUND

In the past, composite molded articles having a reinforcing material, such as glass fibers or other reinforcing fibers, added to a matrix resin, have been used as materials in structural parts of various machines and vehicles, or in pressure vessels or tubular structures. In a preferred continuous fiber-reinforced molded resin, the reinforcing fibers are continuous fibers from the viewpoint of strength, and the resin is a thermoplastic resin from the viewpoint of the molding cycle and recycling properties.

The composite molded article must have properties allowing it to follow arbitrary shapes, in order both to be lightweight and to exhibit sufficient strength for practical use.

Starting materials for composite molded articles have been proposed in the past, which are combined filament yarns comprising homogeneously mixed continuous reinforcing fibers and continuous thermoplastic resin fibers, and woven fabrics composed of such combined filament yarns. PTL 1, for example, proposes heating a woven fabric made of composite mixed fiber yarn to about 280°C to melt the thermoplastic resin, and then cooling it to 50°C for solidification to form a molded article.

PTL 4 proposes composite yarn having reinforcing fibers covered with a plurality of thermoplastic resin fibers, to obtain both impregnating properties and interface properties.

In PTLs 2 and 3, composite yarns having the peripheries of reinforcing fibers covered with a thermoplastic resin are proposed, instead of the aforementioned combined filament yarn, in order to reduce the number of production steps.

Examples of proposed continuous fiber-reinforced molded resins wherein the resin is a thermoplastic resin include a type having an increased difference between the melting temperature and crystallization temperature of the thermoplastic resin, and having the reinforcing fibers impregnated with a low-melting-point thermoplastic resin beforehand to improve the impregnating property (see PTLs 5 and 6, for example), and a type having satisfactory resistance to interlayer separation by using two types of resins with different melting points as surface resins (see PTL 7, for example).

In these patent documents, however, nothing is mentioned regarding the relationship between the compactness of the continuous reinforcing fiber bundles or the surface roughness of the composite yarn, and the resin impregnating property or manageability during molding.

[CITATION LIST]

[PATENT LITERATURE]

[PTL 1] Japanese Unexamined Patent Publication No. 2015-101794
[PTL 2] Japanese Unexamined Patent Publication HEI No. 11-20059
[PTL 3] Japanese Unexamined Patent Publication HEI No. 8-336879
[PTL 4] International Patent Publication No. WO2013/042763
[PTL 5] Japanese Patent Publication No. 5987335
[PTL 6] Japanese Unexamined Patent Publication HEI No. 10-138379
[PTL 7] Japanese Patent Publication No. 5878544

SUMMARY

[TECHNICAL PROBLEM]

For molding of composite yarn, it must be heated to above the melting point of the thermoplastic resin while being held in the predetermined shape, and the melted thermoplastic resin must be impregnated between the reinforcing fibers in a short period of time. With the aforementioned combined filament yarn or composite yarn of the prior art, however, a long time has been necessary for impregnation of the resin during molding, often making it impossible for a molded article to be obtained in a short period of time.

PTL 2 uses a reinforcing fiber base material for a composite material, with resin-coated continuous reinforcing fibers arranged in a straight linear diagonal manner for warp and weft, which facilitates production and results in satisfactory manageability and shapeability during molding, while also resulting in a satisfactory impregnating property of the resin and increased content in molded articles, preventing directional bias of strength during molding and producing molded articles with excellent mechanical properties, but since the continuous fiber layers move against each other in a shape-dependent manner there is significant shifting between the continuous reinforcing fibers. Still, no solution means is provided against such shifting of the continuous reinforcing fibers in three-dimensional molded composite materials that have lateral walls, or in regard to pultrusion molding or the resin impregnation rate.

Moreover, the covered yarn described in PTL 2 is produced by the method described in PTL 3, wherein insufficient pressure is applied to the resin surrounding the reinforcing fibers, leading to creation of sections that are partially uncovered by the thermoplastic resin.

In light of these problems of the prior art, it is an object of the invention to provide a thermoplastic resin coating-reinforcing fiber composite yarn that has an excellent resin impregnating property during molding, that can produce molded articles with excellent physical properties even by molding for short time periods, that has excellent flexibility as yarn and that also has excellent manageability for weaving and knitting, as well as a novel method for producing the composite yarn.

In light of the problems of the prior art, it is also an object of this invention to provide a method for producing a molded composite material with no disorder of the continuous reinforcing fiber bundles and especially having a three-dimensional shape with high strength at corner sections.

The composite yarn can also be woven, knitted and braided for various purposes of use. In particular, when reinforcing fiber composite yarn is used together with a thermoplastic resin as a matrix resin, it is important for it to be processable into intermediate materials such as woven or knitted fabrics, and for the intermediate materials themselves to be manageable. Composite yarn of the prior art, however, has not been considered in terms of its manageability as yarn with focus on the moldability of the composite yarn itself, and it has therefore been problematic from the viewpoint of increasing processing speeds using the composite yarn. It has also been less than satisfactory in terms of the resin impregnating property and displaying high strength, when molding of fiber-reinforced resins containing the composite yarn has been carried out in short time periods.

In light of the problems of the prior art, it is an object of the invention to provide a composite yarn that has excellent manageability as a yarn for processing into intermediate materials such as woven or knitted fabrics and excellent manageability of the intermediate materials themselves, as well as an excellent resin impregnating property during molding, and that can produce molded articles with excellent physical properties even by molding for short periods of time.

It has been found that continuous fiber-reinforced molded resins of the prior art all have low resin impregnating properties in the continuous reinforcing fibers and insufficient bonding between the resins and continuous reinforcing fibers, and are inferior both in terms of the physical properties such as strength and rigidity, and productivity.

Considering the technical level of the prior art, it is another object of the invention to provide a continuous fiber-reinforced molded resin that has a high resin impregnating property, and high strength and rigidity.

It is yet another object of the invention, in light of the problems of the prior art, to provide a method for producing a molded composite material (including pultrusion molding), that has a high impregnation rate at high speed.

[SOLUTION TO PROBLEM]

As a result of much research and experimentation directed toward achieving these objects, the present inventors have completed this invention based on the unexpected finding that an excellent resin impregnating property during molding is exhibited by a composite yarn comprising a multifilament continuous long reinforcing fiber bundle covered by a thermoplastic resin that is in a specific compact state, and/or having a surface roughness within a predetermined range, or by a composite yarn comprising a continuous reinforcing fiber bundle covered by two or more different thermoplastic resins, and that the composite yarn therefore allows production of molded articles with excellent physical properties even when molded for short time periods, and/or has excellent manageability in production of intermediate materials such as woven fabrics, and furthermore that if a continuous fiber-reinforced molded resin comprising two or more thermoplastic resins is designed so that the proportion of each resin in the boundary interface region between the continuous reinforcing fibers and the resin is different from the proportion of each resin in the other resin regions, then the continuous fiber-reinforced molded resin exhibits high strength and rigidity and it is possible to obtain a fabric such as a woven or knitted fabric, or a braid, as an intermediate base material with excellent weaving and knitting properties. It was further found that by using such an intermediate base material as a base material for molding, it is possible to produce a molded composite material without disorder of the continuous reinforcing fibers and particularly having a three-dimensional shape with high hardness at corner sections, or to produce a molded composite material with a high impregnation rate at high speed, using a predetermined method which may include pultrusion molding.

Specifically, the present invention is as follows.

[1] A thermoplastic resin coating-reinforcing fiber composite yarn in which the entire circumference of a multifilament bundle of continuous reinforcing fibers is covered by a thermoplastic resin, wherein the compactness index is 0.45 or greater, as represented by the following formula:

$$\text{Compactness index} = A/B$$

where the total area of the continuous reinforcing fibers in a cross-section of the composite yarn is A ($\mu m^2$) and the area occupied by the continuous reinforcing fiber bundles in the composite yarn is B ($\mu m^2$).

[2] A monofilament thermoplastic resin coating-reinforcing fiber composite yarn in which the entire circumference of a multifilament bundle of continuous reinforcing fibers is covered by a thermoplastic resin, wherein the surface roughness of the composite yarn is 0.25 $\mu$m or smaller.

[3] The composite yarn according to [1] or [2] above, wherein the eccentricity, which is the value of the distance between the area center of gravity of the composite yarn in an arbitrary cross-section of the composite yarn and the area center of gravity of the continuous reinforcing fiber bundle in the composite yarn, divided by the circle area-equivalent radius of the composite yarn, is 12% or lower.

[4] A thermoplastic resin coating-reinforcing fiber composite yarn in which the entire circumference of a multifilament bundle of continuous reinforcing fibers is covered by a thermoplastic resin, wherein the thermoplastic resin is composed of two or more different resins.

[5] A thermoplastic resin coating-reinforcing fiber composite yarn in which the entire circumference of a multifilament bundle of continuous reinforcing fibers is covered by a thermoplastic resin, according to any one of [1] to [4] above, wherein the thermoplastic resin is composed of two or more different resins.

[6] The composite yarn according to [5] above, wherein the thermoplastic resin forms a microphase-separated structure.

[7] The composite yarn according to any one of [4] to [6] above, wherein the difference between the melting point of the thermoplastic resin that is the main component present at greater than 50 wt% and the melting point of the thermoplastic resin that is the accessory component is 20 to 170°C.

[8] The composite yarn according to any one of [1] to [7] above, wherein essentially no thermoplastic resin is present inside the continuous reinforcing fiber bundle.

[9] A wound body composed of thermoplastic resin coating-reinforcing fiber composite yarn according to any one of [1] to [8] above.

[10] A fabric composed of thermoplastic resin coating-reinforcing fiber composite yarn according to any one of [1] to [8] above.

[11] A braid of thermoplastic resin coating-reinforcing fiber composite yarn according to any one of [1] to [8] above.

[12] A method for producing a thermoplastic resin coating-reinforcing fiber composite yarn, the method comprising the following steps:

a step in which a thermoplastic resin feeder is provided comprising a die having at the tip, a hole A, and a hole B which has an open area equal to or larger than the open area of hole A and is situated concentrically with hole A;
a step in which the multifilament bundle of continuous reinforcing fibers is passed through hole A and hole B at a predetermined tension while a molten thermoplastic resin is fed from the thermoplastic resin feeder through hole B at a predetermined pressure, to cover the outer periphery of the continuous reinforcing fiber bundle with the thermoplastic resin; and
a cooling/winding step in which the continuous reinforcing fiber bundle covered with the molten thermoplastic resin is cooled and wound up.

[13] The method according to [12] above, wherein the continuous reinforcing fibers are glass fibers or carbon fibers.

[14] The method according to any one of [12] to [13] above, wherein the distance between the exit end of hole A and the entrance end of hole B of the die in the passage direction of the continuous reinforcing fiber bundle is restricted to a predetermined value so that a predetermined volume of molten resin remains pooled inside the die.

[15] The method according to any one of [12] to [14] above, wherein the cross-sectional area of hole A is 101% to 1000% with respect to the cross-sectional area of the continuous reinforcing fiber bundle with closest packing of the continuous reinforcing fibers.

[16] The method according to any one of [12] to [15] above, wherein the cross-sectional area of hole B is 100% to 1000% with respect to the cross-sectional area of hole A.

[17] The method according to any one of [12] to [16] above, wherein the predetermined tension of the continuous reinforcing fibers is 0.01 N to 100 N.

[18] The method according to any one of [12] to [17] above, wherein the predetermined tension is adjusted by a tension control device situated in front of hole A in the passage direction of the continuous reinforcing fiber bundle.

[19] The method according to any one of [12] to [18] above, wherein the reinforcing fiber bundle is guided to hole A by a guiding device situated in front of hole A in the passage direction of the continuous reinforcing fiber bundle.

[20] The method according to any one of [12] to [19] above, wherein the drawdown ratio of the thermoplastic resin coating-reinforcing fiber composite yarn is 0% to 50%.

[21] The method according to any one of [12] to [20] above, wherein the surface temperature of hole B is 0°C to 100°C higher than the melting point of the thermoplastic resin.

[22] The method according to any one of [12] to [21] above, wherein the resin pressure of the die or between the die and the thermoplastic resin feeder is 0.01 MPa to 50 MPa.

[23] The method according to any one of [12] to [22] above, wherein operation is initiated by the following operation start-up procedures:

(1) the continuous reinforcing fiber bundle is passed through hole A and hole B at a speed of 800 m/min or lower;
(2) the thermoplastic resin is supplied from hole B at a throughput such that the continuous reinforcing fibers of the reinforcing fiber composite yarn after coating are not exposed, and
(3) after confirming that the resin has covered the outer periphery of the continuous reinforcing fiber bundle, the take-up speed (m/min) of the thermoplastic resin coating-reinforcing fiber composite yarn, as the final product, is increased while adjusting the throughput of the thermoplastic resin so that the continuous reinforcing fibers of the reinforcing fiber composite yarn after coating are not exposed.

[24] The method according to [23] above, wherein the operation start-up procedure further includes the following procedure after the procedure of (3):
(4) forced cooling is initiated.

[25] A method for producing the composite yarn according to any one of [4] to [8] above, which includes the following steps:

a step of preparing a multifilament bundle of continuous reinforcing fibers;
a step of preparing resin pellets comprising two or more compounded thermoplastic resins; and
a step of supplying the resin pellets to a melt extruder and covering the outer periphery of the continuous reinforcing fiber bundle with the molten thermoplastic resin mixture.

[26] A method for producing the composite yarn according to any one of [4] to [8] above, which includes the following steps:

a step of preparing a multifilament bundle of continuous reinforcing fibers;
a step of preparing separate resin pellets of two or more thermoplastic resins; and a step of dry blending the two or more different resin pellets and supplying them to a melt extruder, and covering the outer periphery of the continuous reinforcing fiber bundle with the molten thermoplastic resin mixture.

[27] A continuous fiber-reinforced molded resin comprising continuous reinforcing fibers with approximately circular cross-sections and two or more thermoplastic resins, wherein at the boundary interface between a single continuous reinforcing fiber and the thermoplastic resin in a cross-section perpendicular to the lengthwise direction of the continuous reinforcing fiber, in a region of the outer peripheral edge separated from the perimeter of the continuous reinforcing fiber by 1/10 of the radius of a single continuous reinforcing fiber, the proportion of the two or more thermoplastic resins that is occupied by resin other than the resin with the highest occupying proportion of the entire resin region, is higher than the proportion occupied by the resin with the highest occupying proportion of the entire resin region, while in the resin region other than that region of the outer peripheral edge, the resin other than the resin with the highest occupying proportion of the entire resin region, of the two or more thermoplastic resins, is either evenly dispersed or mixed.

[28] The continuous fiber-reinforced molded resin according to [27] above, wherein the resin with the highest occupying proportion of the entire resin region, of the two or more thermoplastic resins, is the resin with the highest melting point.

[29] The continuous fiber-reinforced molded resin according to any one of [27] to [28] above, wherein the melting point of the mixture of the two or more thermoplastic resins is essentially the same as the melting point of the resin with the highest occupying proportion of the entire resin region, of the two or more thermoplastic resins.

[30] The continuous fiber-reinforced molded resin according to any one of [27] to [29] above, wherein the difference between the melting peak temperature during temperature increase and the crystallization peak temperature during temperature decrease for the mixture of the two or more thermoplastic resins is smaller than the difference between the melting peak temperature during temperature increase and the crystallization peak temperature during temperature decrease for the resin with the highest occupying proportion of the entire resin region, of the two or more thermoplastic resins.

[31] The continuous fiber-reinforced molded resin according to any one of [27] to [30] above, wherein the resin impregnation rate is 99% or higher.

[32] A method for producing a molded composite material having a three-dimensional shape, wherein the method includes the following step:
a step in which a thermoplastic resin coating-reinforcing fiber composite yarn that has the entire circumference of a multifilament bundle of continuous reinforcing fibers covered by a thermoplastic resin, is used as the molding substrate.

[33] A method for producing a molded composite material, which includes the following steps:

a preheating step in which a thermoplastic resin coating-reinforcing fiber composite yarn in which the entire circumference of a multifilament bundle of continuous reinforcing fibers is covered by a thermoplastic resin, and/or a woven or knitted fabric of the composite yarn, is inserted into a die at ordinary temperature as a molding substrate, or is inserted into a preheated die as a molding substrate;
a step in which means other than a heat source is used for preheating from the die after insertion of the molding substrate, if necessary;
a temperature-elevating/closing step in which the cavity surface of the die is increased to above the flow temperature of the thermoplastic resin after the die has been closed, or the die is closed after the cavity surface of the die has been increased to above the flow temperature of the thermoplastic resin; and
a cooling/mold release step in which the cavity surface of the die is cooled to below the flow temperature of the thermoplastic resin, and then the die is opened to release the molded article.

[34] A pultrusion molding method for a molded composite material, wherein the method includes the following steps:

a step in which a molding substrate is prepared that is selected from the group consisting of thermoplastic resin coating-reinforcing fiber composite yarns having the entire circumference of a multifilament bundle of continuous reinforcing fibers covered by a thermoplastic resin, and woven fabrics, knitted fabrics and braids of such composite yarns; and
a molding step in which the molding substrate is successively passed through a heating die in a hot melt shaping unit that is above the flow temperature of the thermoplastic resin and a cooling die in a cooling solidification unit that is below the flow temperature, to obtain a molded article.

[35] The method according to [32] above, wherein the linearity of the continuous reinforcing fiber bundle in the molded composite material is 90% or higher.

[36] The method according to [32] or [35] above, wherein the molded composite material with a three-dimensional shape has a structure with a base section and standing wall sections.

[37] The method according to [36] above, wherein the standing wall sections are side walls situated at the edges of the base section, and the relationships E (%) > 2D(°) - 150 and D(°) ≥ 90° are satisfied, where D° is the interior angle formed between the base section and the side walls, and E% is the continuity of the continuous reinforcing fibers straddling the base section and the side walls.

[38] The method according to [33] above, wherein the time (T min) above the flow temperature of the thermoplastic resin in the temperature-elevating step and the impregnation rate (I ≤ 100%) of the thermoplastic resin in the molded composite material satisfy the following inequality (2):

$$\text{Impregnation rate (I)} > 0.2 \times T + 97.4 \qquad \text{Inequality (2).}$$

[39] The method according to [34] above, wherein the molding substrate is a braid, and in the molding step, a core rod is set in the center section of the braid.

A composite yarn produced by the method for producing a thermoplastic resin coating-reinforcing fiber composite yarn according to the invention has an excellent resin impregnating property during molding, since the multifilament bundle of continuous reinforcing fibers is covered with a thermoplastic resin in a specified compact state, and when it is used as a molding material it allows production of molded articles with high strength even by molding for short time periods, and moreover even though the covering by the thermoplastic resin that surrounds the entire circumference of the multifilament bundle of continuous reinforcing fibers is in contact with the continuous long reinforcing fibers at the outermost side of the continuous reinforcing fiber bundle, since it is not bonded or only very weakly bonded with the fibers, it has excellent flexibility as a yarn and excellent manageability for weaving and knitting. In addition, using the method of the invention drastically improves productivity because it allows high-speed production of composite yarn as a molding substrate. The method for producing the composite yarn of the invention can therefore be suitably used for production of composite molded articles having reinforcing materials, such as glass fibers or other reinforcing fibers, added to resins.
In addition, since the thermoplastic resin coating-reinforcing fiber composite yarn of the invention has low surface roughness, it has excellent manageability as yarn for processing into intermediate materials such as woven or knitted fabrics and excellent manageability of the intermediate materials themselves, as well as an excellent resin impregnating property during molding since the multifilament bundle of continuous reinforcing fibers is covered with a thermoplastic resin in a specified compact state, and when used as a molding material it allows production of molded articles with high physical properties even by molding for short time periods. Even though the covering by the thermoplastic resin that surrounds the entire circumference of the multifilament bundle of continuous reinforcing fibers in the thermoplastic resin coating-reinforcing fiber composite yarn of the invention is in contact with the continuous long reinforcing fibers on the outermost side of the continuous reinforcing fiber bundle, since it is not bonded or only very weakly bonded with the fibers, it has excellent flexibility as a yarn, and excellent manageability for weaving and knitting.

The continuous fiber-reinforced molded resin of the invention also has a high resin impregnating property, and high strength and rigidity.

Moreover, by using a thermoplastic resin coating-reinforcing fiber composite yarn of the invention that has excellent flexibility as a yarn and also excellent manageability for weaving and knitting, it is possible to produce a molded composite material having a three-dimensional shape having especially high strength at the corner sections and an excellent outer appearance and strength, without disorder of the continuous reinforcing fiber bundle.

According to the invention it is also possible to produce a molded composite material with a high impregnation rate at high speed, by using a composite yarn that has an excellent resin impregnating property and is able to exhibit excellent physical properties with molding for short time periods, using a predetermined method that includes pultrusion molding.

BRIEF DESCRIPTION OF DRAWINGS

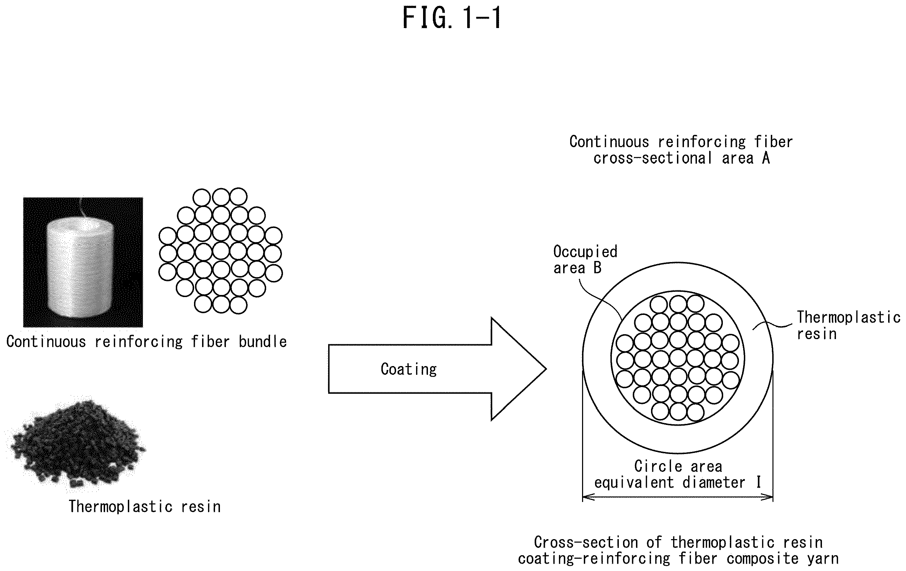

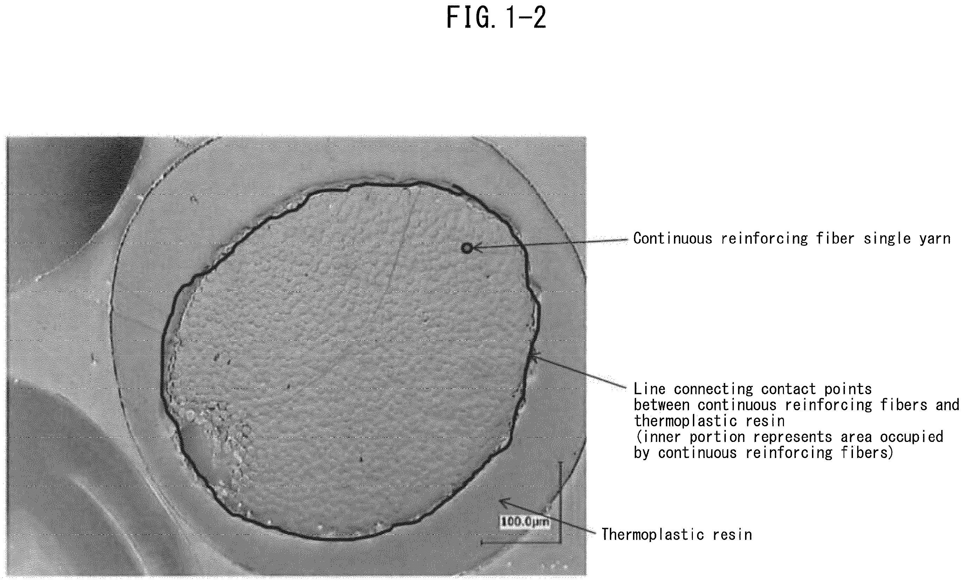

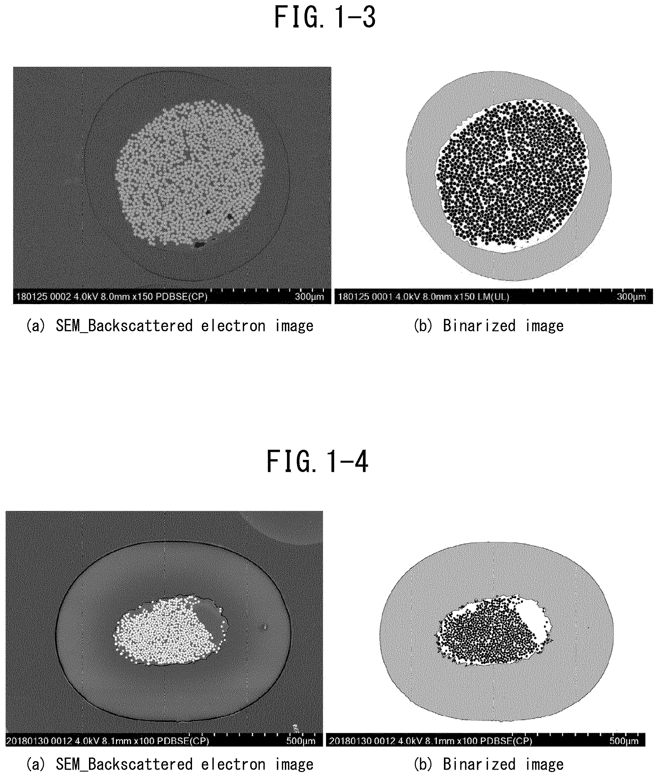

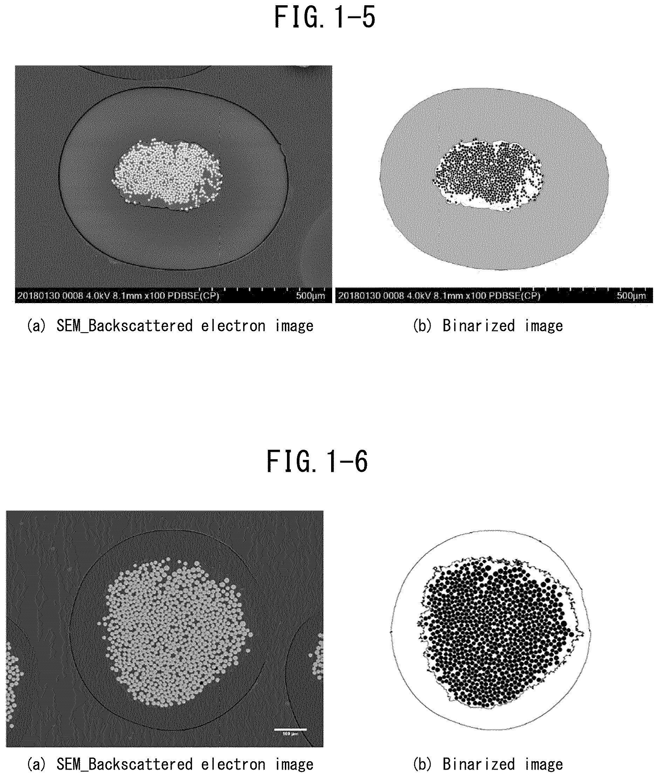

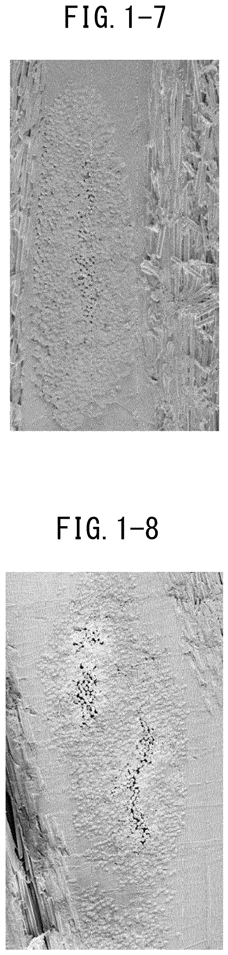

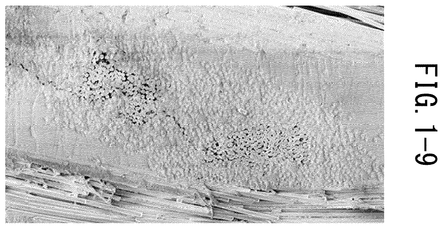

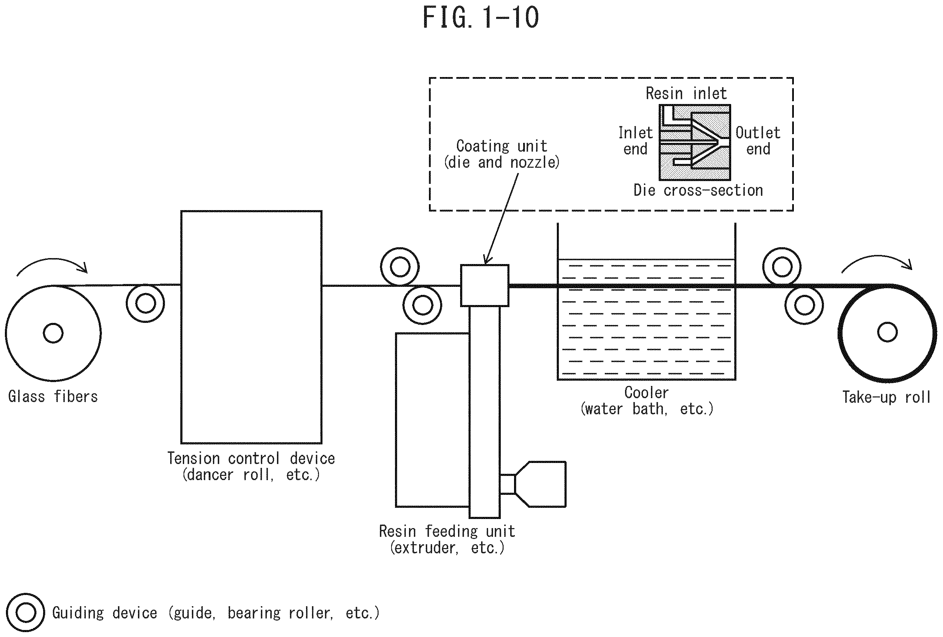

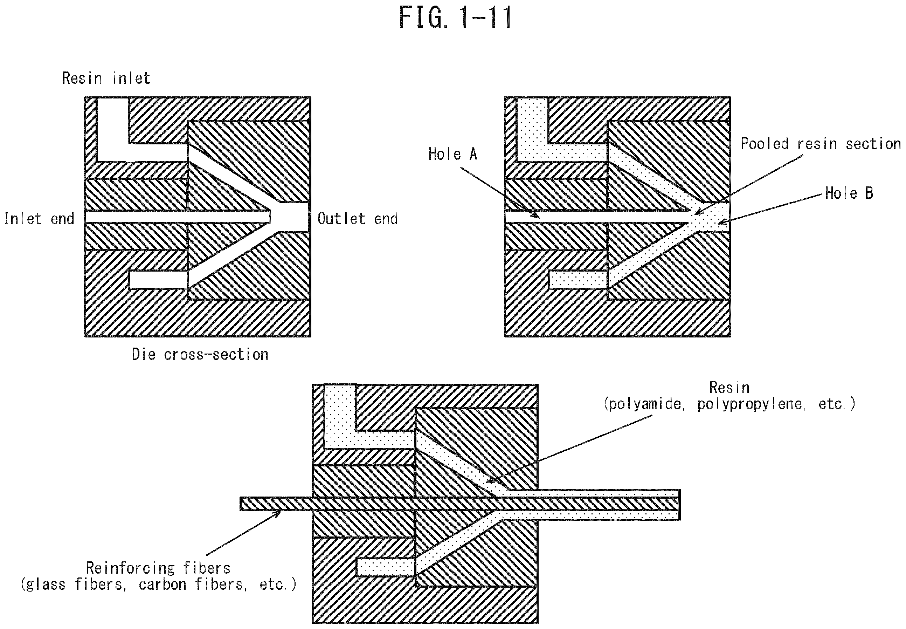

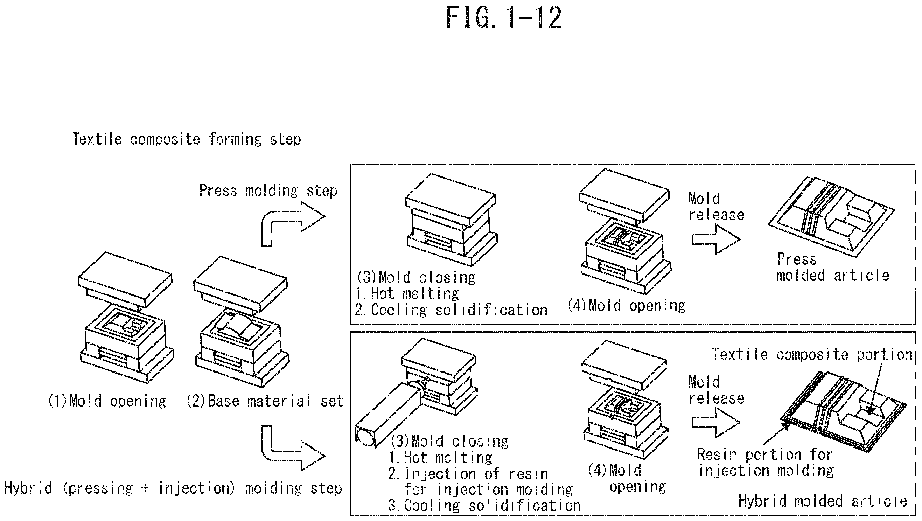

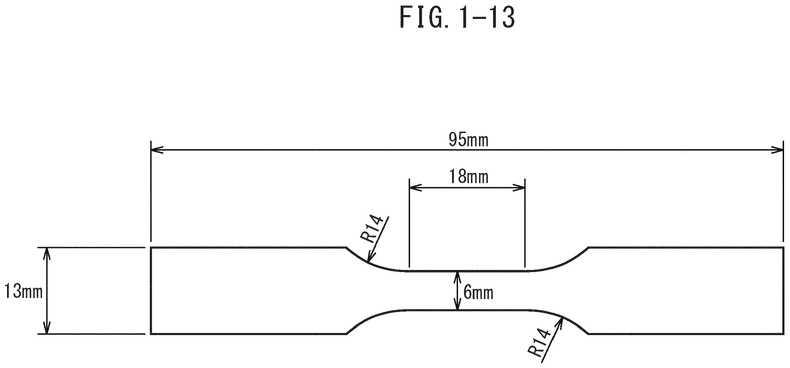

Fig. 1-1 is an illustration of a composite yarn produced by the method according to a preferred embodiment.

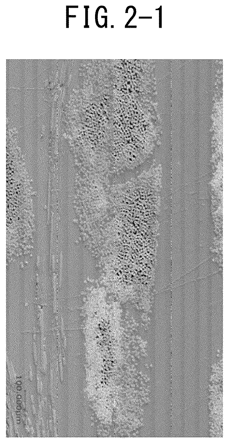

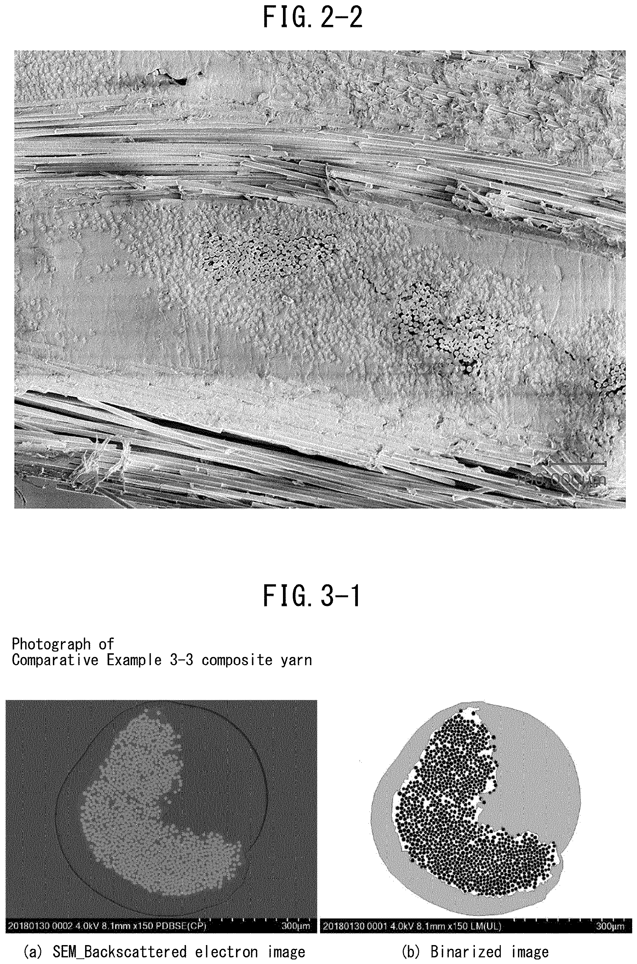

Fig. 1-2 is a scanning electron micrograph of a cross-section of a composite yarn produced by the method of the preferred embodiment.

Fig. 1-3 shows an SEM backscattered electron image (a) and binarized image (b) of a cross-section of the composite yarn of Example 1-6, Example 2-1, Example 3-1 and Example 4-1.

Fig. 1-4 shows an SEM backscattered electron image (a) and binarized image (b) of a cross-section of the composite yarn of Comparative Example 2-4.

Fig. 1-5 shows an SEM backscattered electron image (a) and binarized image (b) of a cross-section of the composite yarn of Comparative Example 1-2.

Fig. 1-6 shows an SEM backscattered electron image (a) and binarized image (b) of a cross-section of the composite yarn of Example 1-10-2.

Fig. 1-7 is a cross-sectional photograph of the molded article of Example 1-6, Example 2-1, Example 3-1 and Reference Example 4-1.

Fig. 1-8 is a cross-sectional photograph of the molded article of Comparative Example 1-1.

Fig. 1-9 is a cross-sectional photograph of the molded article of Comparative Example 1-2.

Fig. 1-10 is an illustration of the production method of the preferred embodiment.

Fig. 1-11 is an illustration of a die used in the production method illustrated in Fig. 1-10.

Fig. 1-12 is an illustration of a molding step.

Fig. 1-13 is a cross-sectional view of the shape of a test piece for measurement of the tensile strength of a continuous reinforcing fiber molded resin.

Fig. 2-1 is a cross-sectional photograph of the molded article 1 of Comparative Example 2-1 and Comparative Example 3-1.

Fig. 2-2 is a cross-sectional photograph of the molded article 1 of Comparative Example 2-4.

Fig. 3-1 shows an SEM backscattered electron image (a) and binarized image (b) of a cross-section of the composite yarn of Comparative Example 3-3.

Fig. 3-2 is a cross-sectional photograph of the molded article 1 of Comparative Example 3-2.

Fig. 4-1 shows an SEM backscattered electron image (a) and binarized image (b) of a cross-section of the composite yarn of Example 4-1.

Fig. 4-2 is a cross-sectional photograph of the molded article of Example 4-1.

Fig. 4-3 is a photograph showing the microphase-separated structure of the composite yarn of Example 4-1.

Fig. 4-4 is a photograph showing the microphase-separated structure of the composite yarn of Example 4-2.

Fig. 5-1 is a photograph in lieu of a drawing, illustrating the boundary interface between a single continuous reinforcing fiber and the synthetic resin in a cross-section of a continuous reinforcing fiber with an approximately circular cross-section, perpendicular to the lengthwise direction, showing the region of the outer peripheral edge separated from the perimeter of the continuous reinforcing fiber by 1/10 of the radius of the single continuous reinforcing fiber.

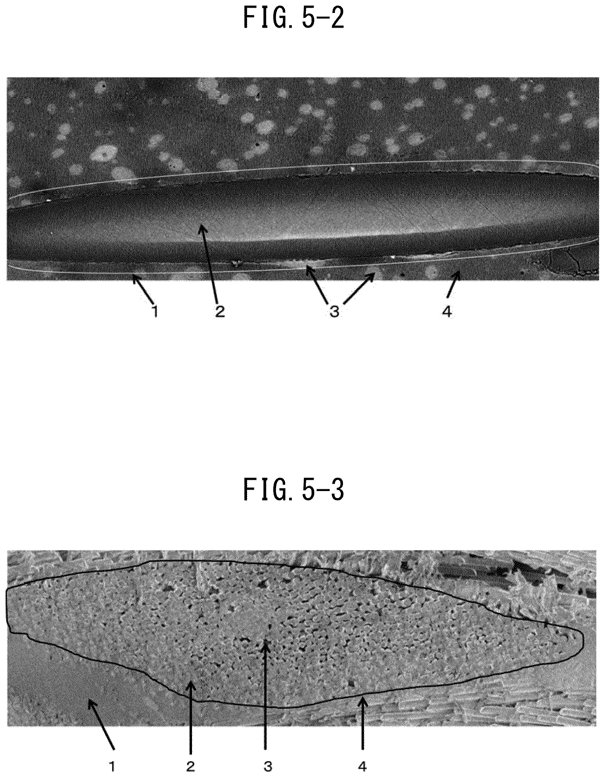

Fig. 5-2 is a photograph in lieu of a drawing, showing a state where, at the boundary interface between a single continuous reinforcing fiber and a synthetic resin in a cross-section along the lengthwise direction of a continuous reinforcing fiber with an approximately circular cross-section, in a region of the outer peripheral edge separated from the perimeter of the continuous reinforcing fiber by 1/10 of the radius of the single continuous reinforcing fiber, wherein the proportion of the two or more thermoplastic resins that is occupied by resin other than the resin with the highest occupying proportion of the entire resin region, is higher than the proportion occupied by the resin with the highest occupying proportion of the entire resin region, but in the resin region other than that region of the outer peripheral edge, the resin other than the resin with the highest occupying proportion of the entire resin region, of the two or more thermoplastic resins, is evenly dispersed.

Fig. 5-3 is a photograph in lieu of a drawing, for illustration of the "impregnation rate" of a synthetic resin in a continuous fiber reinforced composite resin of the preferred embodiment.

Fig. 6-1 is a cross-sectional photograph of the molded article of Example 6-1.

Fig. 6-2 is a cross-sectional photograph of the molded article of Comparative Example 6-2.

Fig. 6-3 is an illustration showing the method of determining the continuous reinforcing fiber bundle linearity for the molded composite materials of Examples 6-1 to 6-5 and Comparative Examples 6-1 and 6-2.

Fig. 6-4 is an illustration showing the method of determining the interior angle between the base section and standing wall sections (side walls), and the continuity of continuous reinforcing fibers straddling the base section and side walls, for the molded composite materials of Examples 6-1 to 6-5 and Comparative Examples 6-1 and 6-2.

Fig. 7 is a graph showing the relationship between time (T min) at above the flow temperature of the thermoplastic resin in the temperature-elevating step, and impregnation rate (I ≤ 100%) of the thermoplastic resin in the molded composite material, for the method for producing a molded composite material of Examples 7-1 to 7-4.

Fig. 8-1 is a process drawing for pultrusion molding.

Fig. 8-2 is a cross-sectional diagram showing an example of tapering at the entrance of a heating die in a hot melt shaping unit in the pultrusion molding step shown in Fig. 8-1. L1 is the length of the tapered part, and L2 is the length of the shaped part. The gap of 2 mm in the shaped part is only an example.

Fig. 8-3 is a cross-sectional diagram showing an example of a heating die in a hot melt shaping unit in the pultrusion molding step shown in Fig. 8-1. L1 is the length of the tapered part, and L2 is the length of the shaped part. A core rod is disposed at the center of the die. The gap of 18 mm in the shaped part and the outer shape of 15 mm for the core rod are only examples.

Fig. 9 is a photograph in lieu of a diagram, showing the outer appearance of a tubular knitted fabric used in a knittability test for a knitted fabric.

DESCRIPTION OF EMBODIMENTS

An embodiment for carrying out the invention (hereunder referred to as "the embodiment") will now be explained in detail. The invention is not limited to the embodiment, however, and various modifications may be implemented within the scope of the gist thereof.

[Method for producing thermoplastic resin coating-reinforcing fiber composite yarn]

The method for producing a thermoplastic resin coating-reinforcing fiber composite yarn of the embodiment comprises the following steps:

a step in which a thermoplastic resin feeder is provided comprising a die having at the tip, a hole A, and a hole B which has an open area equal to or larger than the open area of hole A and is situated concentrically with hole A;

a step in which the multifilament bundle of continuous reinforcing fibers is passed through hole A and hole B at a predetermined tension while a molten thermoplastic resin is fed from the thermoplastic resin feeder through hole B at a predetermined pressure, to cover the outer periphery of the continuous reinforcing fiber bundle with the thermoplastic resin; and

a cooling/winding step in which the continuous reinforcing fiber bundle covered with the molten thermoplastic resin is cooled and wound up.

The final product is preferably a thermoplastic resin coating-reinforcing fiber composite yarn having the entire circumference of a multifilament bundle of continuous reinforcing fibers covered by a thermoplastic resin, and the compactness index is 0.45 or greater, as represented by the following formula:

$$\text{Compactness index} = A/B$$

where the total cross-sectional area of the continuous reinforcing fibers in a cross-section of the composite yarn is A ($\mu m^2$) and the area occupied by the continuous reinforcing fiber bundle in the composite yarn is B ($\mu m^2$), and/or the surface roughness of the composite yarn is 0.25 $\mu m$ or smaller, and more preferably the thermoplastic resin is essentially not present inside the continuous reinforcing fiber bundle.

[Composite yarn with compact continuous reinforcing fiber bundle]

Throughout the present specification, the term "entire circumference of the continuous reinforcing fiber bundle" means the region outside a line connecting the contact points between the continuous reinforcing fibers and the thermoplastic resin, as shown in Fig. 1-2, the entire area outside of the line being covered by the thermoplastic resin, without any exposure of the continuous reinforcing fibers on the surface of the composite yarn.

Also throughout the present specification, the term "inside the continuous reinforcing fiber bundle" means the region on the inside of a line connecting the contact points between the continuous reinforcing fibers and the thermoplastic resin, as shown in Fig. 1-2, and preferably the thermoplastic resin is essentially not present on the inside of the continuous reinforcing fiber bundle of the thermoplastic resin coating-reinforcing fiber composite yarn.

Even though the covering by the thermoplastic resin that surrounds the entire circumference of the multifilament bundle of continuous reinforcing fibers in the thermoplastic resin coating-reinforcing fiber composite yarn produced by the method of the embodiment is in contact with the continuous reinforcing fibers on the outermost side of the continuous reinforcing fiber bundle, it is not bonded or only very weakly bonded with the fibers. In the thermoplastic resin coating-reinforcing fiber composite yarn produced by the method of the embodiment, the continuous reinforcing fibers and the thermoplastic resin in the composite yarn are in contact essentially without bonding, and therefore the flexibility of the yarn is excellent and the manageability for weaving and knitting is consequently excellent. In the state of being "in contact essentially without bonding", gaps are present near the line connecting the contact points between the continuous reinforcing fibers and the thermoplastic resin. The gaps can be observed in a transmission electron microscope photograph (see Fig. 1-3). Since the continuous reinforcing fibers and thermoplastic resin in the composite yarn are in contact essentially without bonding, constraint of the reinforcing fibers is reduced when they form a molded article, and the degree of strength exhibited is increased.

As mentioned above, in the thermoplastic resin coating-reinforcing fiber composite yarn produced by the method of the embodiment, the entire outside region of a line connecting the contact points between the continuous reinforcing fibers and the thermoplastic resin is covered by a thermoplastic resin, with no exposure of the continuous reinforcing fibers on the surface of the composite yarn (see Figs. 1-1 to 1-3). With uniform covering by the thermoplastic resin, there is no exposure of the continuous reinforcing fibers and it is possible to reduce damage to the continuous reinforcing fibers, and especially easily damaged glass fibers, in subsequent steps. With the thermoplastic resin coating-reinforcing fiber composite yarn of the embodiment, the compactness index, represented by the following formula:

$$\text{Compactness index} = A/B$$

(where A ($\mu m^2$) is the total cross-sectional area of the continuous reinforcing fibers in a cross-section of the composite yarn and B ($\mu m^2$) is the area occupied by the continuous reinforcing fiber bundle in the composite yarn), is 0.45 or greater, preferably 0.47 or greater, more preferably 0.50 or greater and even more preferably 0.53 or greater. The total cross-sectional area of the continuous reinforcing fibers can be determined by image processing of a cross-sectional area photograph. The area occupied by the continuous reinforcing fiber bundle B ($\mu m^2$) is the area of the region delineated by a line connecting the contact points between the continuous reinforcing fibers and the thermoplastic resin, as shown in Fig. 1-2. Therefore, the compactness index is the value of the total cross-sectional area of the reinforcing fibers divided by the occupied area B, and it is a value smaller than 1. A larger compactness index (as it approaches 1) means that the continuous long reinforcing fibers are in a more dense state in the continuous reinforcing fiber bundle in the composite yarn, and when the thermoplastic resin covering the entire circumference of the continuous reinforcing fiber bundle has melted during molding, it allows the molten thermoplastic resin inside the continuous reinforcing fiber bundle to be impregnated at higher speed. While it is not our intention to be constrained by any particular theory, the present inventors conjecture that the reason for this is that a dense state of the continuous reinforcing fibers reduces the gaps between the fibers and consequently reduces the amount of air in the gaps, thus facilitating deaeration during molding and helping the molten thermoplastic resin between the continuous reinforcing fibers to infiltrate by capillary movement.

In order to increase the compactness index it is preferred to densify the continuous reinforcing fibers when the thermoplastic resin is used to cover the continuous reinforcing fibers. The densification method may be a method of contacting the molten thermoplastic resin with the continuous reinforcing fibers while they are in a state of tension, for example.

The total area B of the continuous reinforcing fibers in the composite yarn can be measured by observing an arbitrary cross-section of the composite yarn. Specifically, a liquid epoxy resin may be injected through a cut surface of the composite yarn (for example, by soaking the composite yarn cross-section in the epoxy resin, allowing it to be drawn in by capillary action) and allowed to harden, and a cut surface of the hardened section may be polished in a precise manner, after which a reflection electron image may be taken with a transmission electron microscope (SEM) as shown in Fig. 1-3, and the area determined by image processing. The resin, epoxy resin and reinforcing fibers of the composite yarn are distinguished to calculate the total area of the reinforcing fiber cross-section and the area occupied by the reinforcing fiber bundle. The area occupied by the reinforcing fiber bundle is the area defined by a line connecting the innermost sections of the thermoplastic resin.

In a thermoplastic resin coating-reinforcing fiber composite yarn produced by the method of the embodiment, a more nearly circular shape obtained by connecting the points of contact between the reinforcing fibers and the resin corresponds to greater uniformity of the yarn and therefore more excellent manageability, and also generally more excellent resin impregnation. In order to approximate a circular shape, it is preferred for the continuous reinforcing fiber bundle to be formed into a nearly perfect circle immediately before contact between the continuous reinforcing fibers and the thermoplastic resin. Especially when a plurality of continuous reinforcing fibers are used, preferably 3 or more reinforcing fibers are used as a single one through the center section in a nearly circular shape, which will actually be triangular in the case of 3 fibers or square or triangular in the case of 4 fibers, immediately prior to coating. If continuous reinforcing fibers of greater mass than the covering thermoplastic resin are disposed in an even manner, it will be possible to match the center of gravity of the composite yarn with the center of the cross-sectional area, and to inhibit yarn breakage during post-processing of the composite yarn, such as weaving and knitting. As mentioned above, the shape obtained by connecting the points of contact between the continuous reinforcing fibers and the thermoplastic resin can be determined by embedding the composite yarn in a resin, precision polishing it, observing it under an optical microscope and conducting image processing of a cross-sectional photograph.

[Composite yarn with surface roughness in predetermined range]

For thermoplastic resin coating-reinforcing fiber composite yarn produced by the method of the embodiment, the surface roughness of the composite yarn is 0.25 $\mu$m or smaller, preferably 0.20 $\mu$m or smaller, more preferably 0.15 $\mu$m or smaller and most preferably 0.10 $\mu$m or smaller. Since the composite yarn of the embodiment has low surface roughness and is in a monofilament form, it has low friction at sites of contact with the mechanical devices in the steps of reeling, warping, hammering, beating or winding when the yarn is being handled, and it can be stably handled at high speed, while it also contributes to reduced yarn breakage during molding and reduced physical patches when intermediate materials such as the woven fabric are placed in the die.

The surface roughness of the composite yarn can be measured at an arbitrary location of the composite yarn, within 100 $\mu$m along the lengthwise direction of the yarn using a depth-adjustable optical microscope.

The composite yarn of the embodiment has a long-range surface roughness of preferably 6 $\mu$m or lower, more preferably 5 $\mu$m or lower, even more preferably 4 $\mu$m or lower and most preferably 3.5 $\mu$m or lower. The long-range surface roughness can be obtained by measuring 4000 $\mu$m along the lengthwise direction of the yarn.

In order to reduce the surface roughness, a method may be employed as shown in Figs. 1-10 and 1-11, wherein an apparatus provided with a nozzle comprising at least hole A and hole B at the tip of a resin feeding unit is used for passage of the continuous reinforcing fibers alone through hole A, while the thermoplastic resin and the continuous reinforcing fibers that have passed through hole A are simultaneously passed through hole B, and the sizes of hole A and hole B are adjusted depending on the thickness of the continuous reinforcing fibers and the coverage of the thermoplastic resin.

The composite yarn of the embodiment preferably has an eccentricity of 12% or lower, more preferably 11% or lower, even more preferably 10% or lower and most preferably 9% or lower, as the value of the distance between the area center of gravity of the composite yarn and the area center of gravity of the continuous reinforcing fiber bundle in the composite yarn, divided by the circle area-equivalent radius of the composite yarn, based on an arbitrary cross-section of the composite yarn.

Greater stability of the yarn path, when traveling at high speed, is associated with closer values for the center of gravity of the composite yarn and the center of gravity of the continuous reinforcing fiber bundle. The area center of gravity of the composite yarn and the area center of gravity of the reinforcing fiber bundle in the composite yarn can be measured by observing an arbitrary cross-section of the composite yarn. Specifically, the composite yarn may be cut at a point and a liquid epoxy resin may be injected through the cross-section (for example, by soaking the composite yarn cross-section in the epoxy resin, allowing it to be drawn in by capillary action) and allowed to harden, and a cut surface of the hardened section may be polished in a precise manner, after which a reflection electron image may be taken with a transmission electron microscope (SEM), and the area determined by image processing. Strictly speaking, weight correction is required for the area center of gravity and the center of gravity, but it is difficult to carry out accurate correction because in some cases there may even be maldistribution of the reinforcing fibers in the reinforcing fiber bundle. However, since the center of gravity is expected to shift toward the side of reinforcing fibers of larger weight, the two centers will approach each other as correction is made, and therefore the center of gravity will be close if the center of the area is close.

[Thermoplastic resin coating-reinforcing fiber composite yarn]

The thermoplastic resin coating-reinforcing fiber composite yarn of the embodiment is a thermoplastic resin coating-reinforcing fiber composite yarn having the entire circumference of a multifilament bundle of continuous reinforcing fibers covered by a thermoplastic resin, wherein the thermoplastic resin is composed of two or more different resins. Preferably, the thermoplastic resin is essentially not present inside the continuous reinforcing fiber bundle.

The thermoplastic resin in the thermoplastic resin coating-reinforcing fiber composite yarn of the embodiment is composed of two or more different resins.

Including two or more different thermoplastic resins will result in an excellent impregnating property during molding, and excellent high strength. While the reason for this is not completely clear, the present inventors conjecture that if two or more different thermoplastic resins in a premixed state are in contact with the continuous reinforcing fibers, then their interaction with the continuous reinforcing fibers after melting during molding causes rapid impregnation and optimal arrangement of the resins.

The combination of two or more thermoplastic resins is preferably a combination of resins that form a microphase-separated structure in both the covering of the composite yarn and the molded article. The microphase-separated structure has a separate structural unit size of preferably 1 mm or smaller, more preferably 100 $\mu$m or smaller and even more preferably 50 $\mu$m or smaller. If the separate structural unit is too large, the physical properties of the molded article may become non-uniform. If it is a nearly completely compatible system, however, the effect on the impregnating property and increased strength will be less likely to be exhibited. The form of the microphase-separated structure is not particularly restricted, but a spherical structure is preferred as it will aid in exhibiting an effect on the impregnating property and increased strength. The microphase-separated structure can be confirmed by a method suited for the type of thermoplastic resin, and a method using electron microscopy (TEM) or microscopic Raman spectroscopy may be employed.

In the thermoplastic resin coating-reinforcing fiber composite yarn of the embodiment, the difference between the melting point of the thermoplastic resin that is the main component (exceeding 50 wt%) (high melting point) and the melting point of the thermoplastic resin that is the accessory component (low melting point) is preferably 10 to 200°C, more preferably 20 to 170°C and even more preferably 30 to 150°C. If the difference between the melting points of the main component and accessory component in the thermoplastic resin of the mixture is too large, they may become unevenly impregnated during molding for short periods of time, and it may be difficult to obtain a high-speed impregnation effect and a strength-increasing effect. The melting point can be determined by DSC measurement.

There are no particular restrictions on the combination of thermoplastic resins, but they are preferably resins of the same type. Resins of the same type are classified under the same name according to polymer nomenclature, and for example, a resin with a condensed system is under the same as one with a bonding system, while a resin in a chain polymerization system is under the same one with a repeating unit. Examples of thermoplastic resin combinations include combinations with PA66 as the major component, and PA6/12, PA6I or PA6 which have lower melting points, among which the combination of PA66 and PA6/12 is preferred. The difference in melting point in this case may be 135°C.

A composite yarn produced by the method of the embodiment can be used as a reinforcing fiber for reinforcement of other materials, or it can be made into the form of a composite yarn-processed fabric and used as a reinforcing fabric (also called a molding substrate, intermediate base material or intermediate material) for reinforcement of other materials, or heat-processed to produce a continuous reinforcing fiber molded resin.

The construction of the continuous reinforcing fiber molded resin may have the composite yarn of the embodiment as a reinforcing fiber, in combination with a matrix resin such as any of various thermoplastic resins or thermosetting resins, forming a hybrid molded article, or the thermoplastic resin in the composite yarn may be melted for use as a matrix resin.

The thermoplastic resin coating-reinforcing fiber composite yarn produced by the method of the embodiment may be in the form of a single monofilament, or as multiple filaments. If the composite yarn includes twisting, then the yarn will aggregate more easily and a desirable effect will be obtained in terms of impregnation. If composite yarn without twisting is used, then it is preferably used in the form of a single filament from the viewpoint of preventing damage to the composite yarn.

From the viewpoint of manageability, the diameter I ($\mu$m) of the composite yarn is preferably 100 to 5000 $\mu$m, more preferably 150 to 2000 $\mu$m and even more preferably 200 to 1500 $\mu$m. The diameter referred to here is the circle area equivalent diameter.

The volume ratio of the continuous reinforcing fibers and the thermoplastic resin covering them is preferably continuous reinforcing fiber:thermoplastic resin = 10:90 to 80:20, more preferably 20:80 to 70:30 and even more preferably 30:70 to 60:40.

If the volume ratio (Vf) H of the continuous reinforcing fibers is 10% or higher, sufficient strength for practical use will be obtained, and if it is 80% or lower, it will be possible to prevent excessive increase in tension of the composite yarn, and satisfactory manageability can be obtained.

[Continuous fiber-reinforced molded resin]

The continuous fiber-reinforced molded resin of the embodiment is a continuous fiber-reinforced molded resin comprising continuous reinforcing fibers with approximately circular cross-sections and two or more thermoplastic resins, wherein at the boundary interface between a single continuous reinforcing fiber and the thermoplastic resin in a cross-section perpendicular to the lengthwise direction of the continuous reinforcing fiber, in a region of the outer peripheral edge separated from the perimeter of the continuous reinforcing fiber by 1/10 of the radius of a single continuous reinforcing fiber (also referred to as the "boundary interface region"), the proportion of the two or more thermoplastic resins that is occupied by a resin (also referred to as "secondary resin") other than the resin with the highest occupying proportion of the entire resin region (also referred to as "primary resin"), is higher than the proportion occupied by the resin with the highest occupying proportion of the entire resin region, while in the resin region other than that region of the outer peripheral edge (also referred to as "other resin region"), the resin (secondary resin) other than the resin with the highest occupying proportion of the entire resin region, of the two or more thermoplastic resins, is either evenly dispersed or mixed.

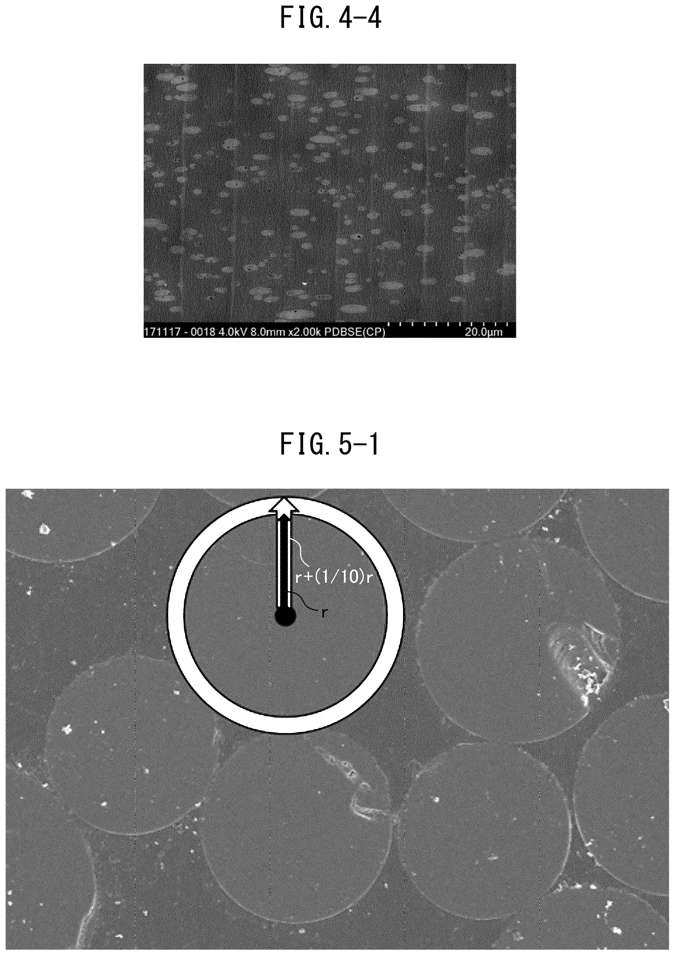

In other words, as shown in Fig. 5-1, the continuous fiber-reinforced molded resin of the embodiment is a continuous fiber-reinforced molded resin comprising continuous reinforcing fibers with approximately circular cross-sections and a synthetic resin, wherein in a region of the outer peripheral edge separated from the perimeter of the continuous reinforcing fiber by 1/10 of the radius of a single continuous reinforcing fiber (also referred to as "boundary interface region"), observed at the boundary interface between a single continuous reinforcing fiber and the synthetic resin at a cross-section perpendicular to the lengthwise direction of the continuous reinforcing fiber, the proportion occupied by the secondary resin of the two or more thermoplastic resins is higher than the proportion occupied by the primary resin. This condition is shown in Fig. 5-2.

The proportion of the region of the outer peripheral edge of the continuous fiber-reinforced molded resin of the embodiment that is occupied by each thermoplastic resin (the area ratio) can be determined by cutting a cross-section in the thickness direction of the continuous fiber-reinforced molded resin (a cross-section perpendicular to the lengthwise direction of the continuous reinforcing fibers), embedding it in an epoxy resin and polishing it while taking care that the continuous reinforcing fibers are not damaged, and then taking a mapping image of the cross-section with a laser Raman microscope and identifying the type of resins in the fiber-reinforced resin from the obtained image and spectrum, and calculating the area of each by image by processing with imageJ software.

The distribution of the thermoplastic resins in the resin region other than the boundary interface region of the fiber-reinforced resin molded article can be determined, for example, by polishing a cross-section (cross-section perpendicular to the lengthwise direction of the continuous reinforcing fibers) of the continuous fiber-reinforced molded resin that has been cut at a cross-section in the thickness direction (a cross-section perpendicular to the lengthwise direction of the continuous reinforcing fibers), with a force of 125 g/cm$^2$ on the polished surface, for 10 minutes with #220 waterproof paper, 10 minutes with #1200 waterproof paper, 5 minutes with #2000 waterproof paper, 10 minutes with a silicon carbide film having a particle size of 9 $\mu$m, 10 minutes with an alumina film having a particle size of 5 $\mu$m, 5 minutes with an alumina film having a particle size of 3 $\mu$m, 5 minutes with an alumina film having a particle size of 1 $\mu$m, and 5 minutes with colloidal silica having a particle size of 0.1 $\mu$m (BAIKALOX 0.1CR) and comprising foam polyurethane buffing paper, while adding water at about 7 mL/min for each polishing, subjecting the polished sample to electron staining with phosphotungstic acid, and then observing it with a scanning electron microscope (SEM) and performing image analysis with software such as ImageJ. The proportion occupied by the thermoplastic resin can be determined by observing 10 arbitrary points and calculating the average.

From the viewpoint of strength of the molded article, the volume ratio between the continuous reinforcing fibers and thermoplastic resin in the molded article is preferably 10:90 to 80:20, more preferably 20:80 to 70:30, even more preferably 30:70 to 70:30 and most preferably 35:65 to 65:35. In other words, the volume occupied by glass fibers in the continuous fiber-reinforced molded resin (also referred to as volume content, Vf) may be 10 to 80%.

[Form of continuous fiber-reinforced molded resin]

The form of the continuous fiber-reinforced resin is not particularly restricted, and the following forms are possible. For example, it may be in the form of a woven fabric or knitted fabric or a braid or a pipe form of the reinforcing fibers in combination with a resin, in the form of reinforcing fibers aligned in one direction and composited with a resin, in the form of yarns comprising reinforcing fibers and a resin aligned and molded in one direction, or in the form of yarn comprising reinforcing fibers and a resin that has been molded as a woven fabric or knitted fabric, a braid or a pipe form.

The form of the intermediate material of the continuous fiber-reinforced molded resin before molding may be combined filament yarn comprising continuous reinforcing fibers and resin fibers, coating yarn wherein the periphery of a continuous reinforcing fiber bundle is covered with a resin, a tape-like form with the resin impregnating the continuous reinforcing fibers beforehand, continuous reinforcing fibers sandwiched between resin films, resin powder adhering to continuous reinforcing fibers, a continuous reinforcing fiber bundle as the core material surrounded with a resin fiber braid, or a reinforcing fiber bundle impregnated with a resin beforehand.

[Impregnation rate of continuous fiber reinforced molded article]

As shown in Fig. 5-3, the impregnation rate of the thermoplastic resin in the continuous fiber-reinforced molded resin is determined by the proportion of gaps in a cross-section of the continuous fiber-reinforced molded resin. Specifically, it is calculated by cutting the continuous fiber-reinforced molded resin at an arbitrary location, embedding it in an epoxy resin and polishing it, and then using analysis software to analyze an image obtained by optical microscope observation.

As shown in Fig. 5-3, the impregnation rate (%) is calculated by the following formula:

$$\text{Impregnation rate } (\%) = \{1 - (\text{gap area/continuous reinforcing fiber bundle area})\} \times 100$$

with a predetermined area as 100%. From the viewpoint of strength and outer appearance, the impregnation rate of the continuous fiber-reinforced molded resin of the embodiment is preferably 98% or higher, more preferably 99% or higher, even more preferably 99.5% or higher and most preferably 99.9% or higher.

[Continuous reinforcing fibers]

The continuous reinforcing fibers used may generally be any ones used for fiber-reinforced composite molded articles.

Continuous reinforcing fibers include, but are not limited to, glass fibers, carbon fibers, aramid fibers, ultra-high strength polyethylene fibers, polybenzazole fibers, liquid crystal polyester fibers, polyketone fibers, metal fibers and ceramic fibers.

Glass fibers, carbon fibers and aramid fibers are preferred from the viewpoint of mechanical properties, thermal properties and general utility, while glass fibers are preferred from the viewpoint of productivity.

When glass fibers have been selected as the continuous reinforcing fibers, a sizing agent may also be used, the sizing agent preferably comprising a silane coupling agent, lubricating agent or binding agent. It is more preferably a sizing agent that forms strong bonds with the resin covering the periphery of the continuous reinforcing fibers. The sizing agent is preferably a sizing agent for thermoplastic resins. A sizing agent for thermoplastic resins is one such that when the continuous reinforcing fibers are raised in temperature to 300°C at 30°C/min in an electric furnace and then returned to room temperature, the rigidity of the continuous reinforcing fibers is greater than the rigidity of the continuous reinforcing fibers before heating.

[Silane coupling agent]

A silane coupling agent is usually used as a surface treatment agent for glass fibers, where it contributes to increased interfacial bonding strength.

Examples of silane coupling agents include, but are not limited to, aminosilanes such as γ-aminopropyltrimethoxysilane and N-β-(aminoethyl)-γ-aminopropylmethyldimethoxysilane; mercaptosilanes such as γ-mercaptopropyltrimethoxysilane and γ-mercaptopropyltriethoxysilane; epoxysilanes; and vinylsilanes.

[Lubricating agent]

A lubricating agent contributes to improved openability of the glass fibers.

The lubricating agent used may be a common liquid or solid lubricating material, selected depending on the purpose, and it may be, but is not limited to, animal- or plant-based or mineral-based waxes such as carnauba wax or lanolin wax; and surfactants such as fatty acid amides, fatty acid esters, fatty acid ethers, aromatic esters and aromatic ethers.

[Binding agent]

A binding agent contributes to improved bundling or increased interfacial bonding strength of glass fibers.

A binding agent that is used may be a polymer or thermoplastic resin, depending on the purpose.

Polymers to be used as binding agents include, but are not limited to, acrylic acid homopolymers, copolymers of acrylic acid and other copolymerizable monomers, and salts of these with primary, secondary or tertiary amines. Suitable examples to be used include polyurethane resins synthesized from isocyanates such as m-xylylene diisocyanate, 4,4'-methylenebis(cyclohexylisocyanate) and isophorone diisocyanate, and polyester-based or polyether-based diols.

An acrylic acid homopolymer or copolymer has a weight-average molecular weight of preferably 1,000 to 90,000 and more preferably 1,000 to 25,000.

Examples of copolymerizable monomers for formation of copolymers of acrylic acid with other copolymerizable monomers include, but are not limited to, one or more monomers with hydroxyl and/or carboxyl groups, selected from the group consisting of acrylic acid, maleic acid, methacrylic acid, vinylacetic acid, crotonic acid, isocrotonic acid, fumaric acid, itaconic acid, citraconic acid and mesaconic acid (where acrylic acid alone is excluded). Preferred copolymerizable monomers are one or more ester-based monomers.

Primary, secondary or tertiary amine salts of acrylic acid homopolymers or copolymers include, but are not limited to, triethylamine salts, triethanolamine salt and glycine salts. The neutralization degree is preferably 20 to 90% and more preferably 40 to 60%, from the viewpoint of improving stability of the mixed solution with other agents (such as silane coupling agents), and reducing amine odor.

The weight-average molecular weight of a polymer of acrylic acid forming a salt is not particularly restricted but is preferably in the range of 3,000 to 50,000. It is preferably 3,000 or greater from the viewpoint of improved bundling of glass fibers, and preferably 50,000 or lower from the viewpoint of improving the properties as a composite molded article.

Examples of thermoplastic resins to be used as binding agents include, but are not limited to, polyolefin-based resins, polyamide-based resins, polyacetal-based resins, polycarbonate-based resins, polyester-based resins, polyether ketones, polyetherether ketones, polyethersulfones, polyphenylene sulfide, thermoplastic polyetherimides, thermoplastic fluorine-based resins, and modified thermoplastic resins obtained by modifying such resins. The thermoplastic resin used as a binding agent is preferably a thermoplastic resin and/or modified thermoplastic resin of the same type as the resin covering the periphery of the reinforcing fibers, since this will improve adhesion between the glass fibers and thermoplastic resin after a composite molded article has been formed.

For binding between the silane coupling agent or binding agent and the resin, it is necessary for heating to be carried out for a fixed time period while both are in contact, and in the case of coating during production of composite yarn, even though the resin is molten, no adhesive force is exhibited because it contacts with cooled glass fibers. Even if the glass fibers are preheated, no adhesive force is exhibited because the contact time with the resin during coating is short. During molding, on the other hand, the glass fibers and thermoplastic resin are heated in a state of contact, and the strength at the interface is therefore increased.

Especially in cases where adhesion between the continuous reinforcing fibers and the thermoplastic resin covering them is to be improved and a sizing agent is to be adhered to the glass fibers as an aqueous dispersion, it is preferred to use a modified thermoplastic resin as the thermoplastic resin of the binding agent, from the viewpoint of reducing the ratio of emulsifier component or limiting the need for an emulsifier.

A modified thermoplastic resin is one that has been copolymerized with a different monomer component other than a monomer component that can form the main chain of the thermoplastic resin, having its hydrophilicity, crystallinity or thermodynamic properties modified, in order to alter the properties of the thermoplastic resin.

Examples of modified thermoplastic resins to be used as binding agents include, but are not limited to, modified polyolefin-based resins, modified polyamide-based resins and modified polyester-based resins.

A modified polyolefin-based resin for the binding agent is a copolymer of an olefin-based monomer such as ethylene or propylene and a monomer that is copolymerizable with the olefin-based monomer, such as an unsaturated carboxylic acid, and it can be produced by a known method. It may be a random copolymer obtained by copolymerization of an olefin-based monomer and an unsaturated carboxylic acid, or a graft copolymer obtained by grafting an unsaturated carboxylic acid onto an olefin.

Examples of olefin-based monomers include, but are not limited to, ethylene, propylene and 1-butene. These may be used alone, or two or more may be used in combination. Examples of monomers that are copolymerizable with olefin-based monomers include unsaturated carboxylic acids such as acrylic acid, maleic acid, maleic anhydride, methacrylic acid, vinylacetic acid, crotonic acid, isocrotonic acid, fumaric acid, itaconic acid, citraconic acid and mesaconic acid, any of which may be used alone or in combinations of two or more.

The copolymerization ratio of the olefin-based monomer and the monomer that is copolymerizable with the olefin-based monomer, is preferably 60 to 95 mass% of the olefin-based monomer and 5 to 40 mass% of the monomer that is copolymerizable with the olefin-based monomer, and more preferably 70 to 85 mass% of the olefin-based monomer and 15 to 30 mass% of the monomer that is copolymerizable with the olefin-based monomer, with the total mass of the copolymerization as 100 mass%. If the olefin-based monomer is 60 mass% or greater, affinity with the matrix will be satisfactory, and if the mass percentage of the olefin-based monomer is 95 mass% or lower, the water dispersibility of the modified polyolefin-based resin will be satisfactory and it will be easier to achieve uniform application on the continuous reinforcing fibers.

The modified polyolefin-based resin to be used as the binding agent may have the modified groups such as carboxyl groups, which have been introduced by copolymerization, neutralized with a basic compound. Examples of basic compounds include, but are not limited to, alkali compounds such as sodium hydroxide and potassium hydroxide; ammonia; and amines such as monoethanolamine and diethanolamine. The weight-average molecular weight of the modified polyolefin-based resin to be used as a binding agent is not particularly restricted, but it is preferably 5,000 to 200,000 and more preferably 50,000 to 150,000. It is preferably 5,000 or greater from the viewpoint of improved bundling of glass fibers, and preferably 200,000 or lower from the viewpoint of emulsified stability in water-dispersible form.

A modified polyamide-based resin to be used as a binding agent is a modified polyamide compound having a hydrophilic group such as a polyalkylene oxide chain or tertiary amine component introduced into the molecular chain, and it can be produced by a publicly known method.

When a polyalkylene oxide chain is to be introduced into the molecular chain, it is produced, for example, by copolymerization of a compound in which all or a portion of polyethylene glycol or polypropylene glycol has been modified to a diamine or dicarboxylic acid. For introduction of a tertiary amine component, it is produced by copolymerization of aminoethylpiperazine, bisaminopropylpiperazine or α-dimethylamino ε-caprolactam, for example.

A modified polyester-based resin to be used as a binding agent is a resin that is a copolymer of a polycarboxylic acid or its anhydride and a polyol, and that has a hydrophilic group in the molecular skeleton including the ends, and it can be produced by a publicly known method.

Examples of hydrophilic groups include polyalkylene oxides, sulfonic acid salts, carboxyl groups, and their neutral salts. Polycarboxylic acids and their anhydrides include aromatic dicarboxylic acids, sulfonic acid salt-containing aromatic dicarboxylic acids, aliphatic dicarboxylic acids, alicyclic dicarboxylic acids and trifunctional or greater polycarboxylic acids.

Examples of aromatic dicarboxylic acids include, but are not limited to, phthalic acid, terephthalic acid, isophthalic acid, orthophthalic acid, 1,5-naphthalenedicarboxylic acid, 2,6-naphthalenedicarboxylic acid and phthalic anhydride.

Examples of sulfonic acid salt-containing aromatic dicarboxylic acids include, but are not limited to, sulfoterephthalic acid salts, 5-sulfoisophthalic acid salts and 5-sulfoorthophthalic acid salts.

Examples of aliphatic dicarboxylic acids or alicyclic dicarboxylic acids include, but are not limited to, fumaric acid, maleic acid, itaconic acid, succinic acid, adipic acid, azelaic acid, sebacic acid, dimer acid, 1,4-cyclohexanedicarboxylic acid, succinic anhydride and maleic anhydride.

Examples of trifunctional or greater polycarboxylic acids include, but are not limited to, trimellitic acid, pyromellitic acid, trimellitic anhydride and pyromellitic anhydride.

From the viewpoint of increasing the heat resistance of the modified polyester-based resin, preferably 40 to 99 mol% of the total polycarboxylic acid component is aromatic dicarboxylic acids. From the viewpoint of emulsified stability when the modified polyester-based resin is in aqueous dispersion, preferably 1 to 10 mol% of the total polycarboxylic acid component is sulfonic acid salt-containing aromatic dicarboxylic acids.

The polyol forming the modified polyester resin may be a diol or a trifunctional or greater polyol.

Examples of diols include, but are not limited to, ethylene glycol, diethylene glycol, polyethylene glycol, propylene glycol, polypropylene glycol, polybutylene glycol, 1,3-propanediol, 1,4-butanediol, 1,6-hexanediol, neopentyl glycol, polytetramethylene glycol, 1,4-cyclohexanediol, 1,4-cyclohexanedimethanol, bisphenol A, and their alkylene oxide addition products. Trifunctional or greater polyols include trimethylolpropane, glycerin and pentaerythritol.

The copolymerization ratio of the polycarboxylic acid or its anhydride and the polyol forming the modified polyester resin is preferably 40 to 60 mass% of the polycarboxylic acid or its anhydride and 40 to 60 mass% of the polyol, and more preferably 45 to 55 mass% of the polycarboxylic acid or its anhydride and 45 to 55 mass% of the polyol, with the total mass of the copolymerizing component as 100 mass%.

The weight-average molecular weight of the modified polyester-based resin is preferably 3,000 to 100,000 and more preferably 10,000 to 30,000. It is preferably 3,000 or greater from the viewpoint of improved bundling of glass fibers, and preferably 100,000 or lower from the viewpoint of emulsified stability in water-dispersible form.

The polymer and thermoplastic resin used as the binding agent may be used alone, or two or more may be used in combination.

It is more preferred to use one or more polymers selected from among acrylic acid homopolymers, copolymers of acrylic acid and other copolymerizable monomers, and salts thereof with primary, secondary and tertiary amines, at 50 mass% or greater or 60 mass% or greater, with the entire amount of the binding agent as 100 mass%.

[Composition of sizing agent for glass fibers]

When glass fibers are used as the continuous reinforcing fibers, the sizing agent of the glass fibers preferably contains 0.1 to 2 mass% of a silane coupling agent, 0.01 to 1 mass% of a lubricating agent and 1 to 25 mass% of a binding agent, and preferably the components are diluted with water for adjustment of the total mass to 100 mass%.

The content of the silane coupling agent in the sizing agent for glass fibers is preferably 0.1 to 2 mass%, more preferably 0.1 to 1 mass% and even more preferably 0.2 to 0.5 mass%, from the viewpoint of improving bundling of the glass fibers, increasing the interfacial bonding strength and increasing the mechanical strength of the composite molded article.

The content of the lubricating agent in the sizing agent for glass fibers is preferably 0.01 mass% or greater and more preferably 0.02 mass% or greater from the viewpoint of imparting sufficient lubricity and the viewpoint of increasing the tensile breaking strength of connecting yarn with an air splicer and increasing the openability during the fiber mixing step, and preferably 1 mass% or lower and more preferably 0.5 mass% or lower from the viewpoint of increasing the interfacial bonding strength and increasing the mechanical strength of the composite molded article.

The content of the binding agent in the sizing agent for glass fibers is preferably 1 to 25 mass%, more preferably 3 to 15 mass% and even more preferably 3 to 10 mass%, from the viewpoint of controlling bundling of the glass fibers, increasing the interfacial bonding strength and increasing the mechanical strength of the composite molded article.

[Usage of sizing agent for glass fibers]

The sizing agent for glass fibers may be prepared into any form such as an aqueous solution, a colloidal dispersion or an emulsion using an emulsifier, depending on the usage, but it is preferably in the form of an aqueous solution from the viewpoint of increasing the dispersion stability of the sizing agent and increasing the heat resistance.

Glass fibers used as continuous reinforcing fibers in the composite yarn and continuous reinforcing fiber molded resin of the embodiment can be continuously obtained by drying glass fibers produced using a known method employing a roller-type applicator in a production process for known glass fibers, and applying the sizing agent to the glass fibers.

The sizing agent is applied at preferably 0.1 to 3 mass%, more preferably 0.2 to 2 mass% and even more preferably 0.2 to 1 mass%, as the total mass of the silane coupling agent, lubricating agent and binding agent, with respect to 100 mass% of the glass fibers.

From the viewpoint of controlling bundling of the glass fibers and increasing the interfacial bonding strength, the sizing agent coverage is preferably 0.1 mass% or greater, as the total mass of the silane coupling agent, lubricating agent and binding agent with respect to 100 mass% of the glass fibers, and it is also preferably 3 mass% or lower from the viewpoint of increasing the tensile breaking strength of connecting yarn in an air splicer and increasing the openability during the fiber mixing step.

When carbon fibers have been selected as the continuous reinforcing fibers, the sizing agent preferably comprises a lubricating agent and a binding agent. The types of sizing agent, lubricating agent and binding agent are not particularly restricted, and publicly known agents may be used. Specific materials that may be used include the materials mentioned in PTL 1 (Japanese Unexamined Patent Publication No. 2015-101794).

When other continuous reinforcing fibers are used, the type and coverage of the sizing agent used on the glass fibers and carbon fibers may be selected as appropriate depending on the properties of the continuous reinforcing fibers, but the type and coverage of the sizing agent are preferably for a sizing agent used for carbon fibers.

[Continuous reinforcing fiber form]

The continuous reinforcing fibers composing a thermoplastic resin coating-reinforcing fiber composite yarn to be produced by the method of the embodiment are in multifilament form. The number of filaments B is preferably 30 to 15,000 from the viewpoint of handleability.

The monofilament diameter of the continuous reinforcing fibers is preferably 2 to 30 $\mu$m, more preferably 4 to 25 $\mu$m, even more preferably 6 to 20 $\mu$m and yet more preferably 8 to 15 $\mu$m, from the viewpoint of strength and manageability.

The product RD of the monofilament diameter R ($\mu$m) and the density D (g/cm3) of the continuous reinforcing fibers is preferably 5 to 100 $\mu$m·g/cm$^3$, more preferably 10 to 50 $\mu$m·g/cm$^3$, even more preferably 15 to 45 $\mu$m·g/cm$^3$ and yet more preferably 20 to 45 $\mu$m·g/cm$^3$, from the viewpoint of composite yarn manageability and molded article strength.

The density D can be measured using a densitometer. The monofilament diameter ($\mu$m) can be calculated by the following formula:

$$\text{Monofilament diameter} = 20 \times \sqrt{(\text{fineness}/(\pi \times \text{number of filaments} \times \text{density}))}$$

based on the density (g/cm$^3$) and fineness (dtex), and the number of filaments.

To ensure that the product RD of the continuous reinforcing fibers is within the predetermined range, commercially available continuous reinforcing fibers may be used having the fineness (dtex) and number of filaments appropriately selected for the density of the continuous reinforcing fibers. For example, when glass fibers are used as the continuous reinforcing fibers, the density is about 2.5 g/cm$^3$, and therefore a monofilament diameter of 2 to 40 $\mu$m may be selected. More specifically, when the monofilament diameter of the glass fiber is 9 $\mu$m, glass fibers with a fineness of 660 dtex and a filament number of 400 may be selected, for a product RD of 23. When the monofilament diameter of the glass fiber is 17 $\mu$m, glass fibers with a fineness of 11,500 dtex and a filament number of 2,000 may be selected, for a product RD of 43. When carbon fibers are used as the continuous reinforcing fibers, the density is about 1.8 g/cm$^3$, and therefore a monofilament diameter of 2.8 to 55 $\mu$m may be selected. Specifically, when the monofilament diameter of the carbon fibers is 7 $\mu$m, carbon fibers with a fineness of 2,000 dtex and a filament number of 3,000 may be selected, for a product RD of 13. When aramid fibers are used as the continuous reinforcing fibers, the density is about 1.45 g/cm$^3$, and therefore a monofilament diameter of 3.4 to 68 $\mu$m may be selected. Specifically, when the monofilament diameter of the aramid fibers is 12 $\mu$m, aramid fibers with a fineness of 1,670 dtex and a filament number of 1,000 may be selected, for a product RD of 17.

Continuous reinforcing fibers, such as glass fibers, are produced by measuring and mixing raw glass and obtaining molten glass in a melting furnace, spinning it into a glass filament, coating it with a sizing agent, feeding it through a spinning machine, and winding up as Direct Wind Roving (DWR), a cake, or twisted yarn. The continuous reinforcing fibers may be in any form, but are preferably wound up into a yarn, cake or DWR for increased productivity and production stability in the resin-coating step. DWR is most preferred from the viewpoint of productivity.

[Thermoplastic resin]

The thermoplastic resin coating-reinforcing fiber composite yarn produced by the method of the embodiment comprises the aforementioned continuous reinforcing fibers, and one or more different thermoplastic resins covering the continuous reinforcing fibers.

A thermoplastic resin used may be any of those used for composite molded articles of the prior art.

Examples of thermoplastic resins include, but are not limited to, polyolefin-based resins such as polyethylene and polypropylene(PP); polyamide-based resins such as polyamide 6 (PA6), polyamide 66 (PA66) and polyamide 46; polyester-based resins such as polyethylene terephthalate (PET), polybutylene terephthalate and polytrimethylene terephthalate; polyacetal-based resins such as polyoxymethylene; polycarbonate-based resins; polyether ketones; polyether ether ketones; polyether sulfones; polyphenylene sulfides; thermoplastic polyetherimides; and thermoplastic fluorine-based resins such as tetrafluoroethylene-ethylene copolymers, as well as modified thermoplastic resins obtained by modifying any of the foregoing.

Of these thermoplastic resins, polyolefin-based resins, polyamide-based resins, polyester-based resins, polyether ketones, polyether ether ketones, polyether sulfones, polyphenylene sulfide, thermoplastic polyetherimides and thermoplastic fluorine-based resins are preferred, while polyolefin-based resins, modified polyolefin-based resins, polyamide-based resins and polyester-based resins are more preferred from the viewpoint of mechanical properties and general utility, with polyamide-based resins and polyester-based resins being even more preferred when the viewpoint of thermal properties is also considered. From the viewpoint of durability against repeated load, polyamide-based resins are more preferred, among which polyamide 66 (PA66) is suitable for use.

It is preferred to use several resins in a compounded form, for adjustment of the viscosity or surface tension of the resin, or for reinforcement of the interfacial strength.

[Using two or more thermoplastic resins]

The thermoplastic resin composing the matrix resin of the continuous fiber-reinforced molded resin of the embodiment consists of two or more types. Of the two or more thermoplastic resins, from the viewpoint of heat resistance, preferably the resin with the highest occupying proportion of the entire resin region (the primary resin) preferably accounts for 85% to 99% of the total area occupied by the two or more thermoplastic resins, while the resin with the highest occupying proportion of the entire resin region (the primary resin) of the two or more thermoplastic resins is the resin with the highest melting point.

The difference between the melting point of the resin with the highest melting point and the melting point of the resin with the lowest melting point of the two or more thermoplastic resins is preferably 35°C or higher, and more preferably 100°C or higher. The types of thermoplastic resins in the continuous fiber-reinforced molded resin can be identified by analyzing a cross-section of the continuous fiber-reinforced molded resin with a laser Raman microscope, and the melting point and glass transition temperature of each thermoplastic resin can be calculated from the composition of the resin, using a differential scanning calorimeter (DSC). From the viewpoint of heat resistance, the melting point of the thermoplastic resin mixture is preferably the same as the melting point of the resin with the highest occupying proportion of the entire resin region (the primary resin) in the thermoplastic resin.

The difference between the melting peak temperature during temperature increase and the crystallization peak temperature during temperature decrease for the mixture of the two or more thermoplastic resins forming the continuous fiber-reinforced molded resin of the embodiment is preferably smaller than the difference between the melting peak temperature during temperature increase and the crystallization peak temperature during temperature decrease of the resin with the highest occupying proportion of the entire resin region (primary resin), among the resins of the two or more thermoplastic resins, in order to obtain an excellent balance between moldability and impregnation rate. The melting peak temperature during temperature increase and the crystallization peak temperature during temperature decrease can be calculated by DSC.

Of the two or more thermoplastic resins forming the continuous fiber-reinforced molded resin of the embodiment, the bonding strength between at least one resin (secondary resin) other than the resin with the highest occupying proportion of the entire resin region (primary resin) and the continuous reinforcing fibers is preferably greater than the bonding strength between the resin with the highest occupying proportion of the entire resin region (primary resin) and the continuous reinforcing fibers, from the viewpoint of impregnating property and strength. The bonding strength between each thermoplastic resin and the continuous reinforcing fibers can be determined by a push-out test using a nanoindenter.

Of the two or more thermoplastic resins forming the continuous fiber-reinforced molded resin of the embodiment, the difference in surface tension between at least one resin (secondary resin) other than the resin with the highest occupying proportion of the entire resin region (primary resin) and the continuous reinforcing fibers is preferably larger than the difference in surface tension between the resin with the highest occupying proportion of the entire resin region (primary resin) and the continuous reinforcing fibers, from the viewpoint of impregnating property and strength. Of the two or more thermoplastic resins forming the continuous fiber-reinforced molded resin of the embodiment, the wettability of at least one resin (secondary resin) other than the resin with the highest occupying proportion of the entire resin region (primary resin) for the continuous reinforcing fibers is preferably greater than the wettability of the resin with the highest occupying proportion of the entire resin region (primary resin) for the continuous reinforcing fibers, from the viewpoint of impregnating property and strength. The difference in surface tension and the wettability between each of the thermoplastic resins and the continuous reinforcing fibers can be evaluated by embedding a single continuous reinforcing fiber in the thermoplastic resin melted on a hot plate, and determining the length to which the thermoplastic resin is pulled on the continuous fiber when the continuous reinforcing fiber has been pulled.

The melt viscosity of the mixture of the two or more thermoplastic resins forming the continuous fiber-reinforced molded resin of the embodiment is preferably the same as the melt viscosity of the resin with the highest occupying proportion of the entire resin region (primary resin) of the two or more thermoplastic resins, for an excellent balance between strength and impregnating property. The melt viscosity of the resin can be measured using a twin-capillary rheometer.

The two or more thermoplastic resins forming the continuous fiber-reinforced molded resin of the embodiment may be used in pre-compounded form, depending on the form of the intermediate material, or an intermediate material resin may be formed by dry blending.

[Polyester-based resin]

The polyester-based resin is a polymer compound having a -CO-O- (ester) bond in the main chain.

Examples of polyester-based resins to be used as thermoplastic resins include, but are not limited to, polyethylene terephthalate (PET), polybutylene terephthalate, polytetramethylene terephthalate, poly-1,4-cyclohexylenedimethylene terephthalate and polyethylene-2,6-naphthalene dicarboxylate.

A polyester-based resin may be a homopolyester or a copolymerized polyester.

In the case of a copolymerized polyester, a suitable third component is preferably copolymerized with a homopolyester, where examples for the third component include, but are not limited to, diol components such as diethylene glycol, neopentyl glycol and polyalkylene glycol, and dicarboxylic acid components such as adipic acid, sebacic acid, phthalic acid, isophthalic acid and 5-sodiumsulfoisophthalic acid.

A polyester-based resin employing a biomass resource-derived starting material may also be used, where examples include, but are not limited to, aliphatic polyester-based resins such as polylactic acid (PLA), polybutylene succinate and polybutylene succinate adipate, and aromatic polyester-based resins such as polybutylene adipate terephthalate.

[Polyamide-based resin]

A polyamide-based resin is a polymer compound having a -CO-NH- (amide) bond in the main chain.

Examples of polyamide-based resins to be used as thermoplastic resins include, but are not limited to, polyamides obtained by ring-opening polymerization of lactams, polyamides obtained by self-condensation of ω-aminocarboxylic acids, polyamides obtained by condensation of diamines and dicarboxylic acids, and copolymers of the foregoing.

Such polyamide-based resins may be used alone, or two or more may be used in admixture.

Examples of lactams include, but are not limited to, pyrrolidone, caprolactam, undecanelactam and dodecalactam. Examples of ω-aminocarboxylic acids include, but are not limited to, ω-amino fatty acids that are lactam compounds having the rings opened with water. Two or more different lactam or ω-aminocarboxylic acid monomers may also be condensed together.

Examples of diamines (monomers) include, but are not limited to, straight-chain aliphatic diamines such as hexamethylenediamine or pentamethylenediamine; branched aliphatic diamines such as 2-methylpentanediamine or 2-ethylhexamethylenediamine; aromatic diamines such as *p*-phenylenediamine or *m*-phenylenediamine; and alicyclic diamines such as cyclohexanediamine, cyclopentanediamine or cyclooctanediamine.

Examples of dicarboxylic acids (monomers) include, but are not limited to, aliphatic dicarboxylic acids such as adipic acid, pimelic acid and sebacic acid; aromatic dicarboxylic acids such as phthalic acid and isophthalic acid; and alicyclic dicarboxylic acids such as cyclohexanedicarboxylic acid. A diamine and dicarboxylic acid as monomers may be condensed with either one each alone, or two or more in combination.

Examples of polyamide-based resins include, but are not limited to, polyamide 4 (poly α-pyrrolidone), polyamide 6 (PA6, polycaproamide), polyamide 11 (polyundecaneamide), polyamide 12 (polydodecaneamide), polyamide 46 (polytetramethylene adipamide), polyamide 66 (PA66, polyhexamethylene adipamide), polyamide 610, polyamide 612, polyamide 6T (polyhexamethylene terephthalamide), polyamide 9T (polynonanemethylene terephthalamide) and polyamide 6I (polyhexamethylene isophthalamide), as well as copolymerized polyamides containing these as constituent components.

Examples of copolymerized polyamides include, but are not limited to, copolymers of hexamethylene adipamide and hexamethylene terephthalamide, copolymers of hexamethylene adipamide and hexamethylene isophthalamide, and copolymers of hexamethylene terephthalamide and 2-methylpentanediamine terephthalamide.

[Method for producing the composite yarn]

The method of covering the continuous reinforcing fibers with a thermoplastic resin may be the method described in PTL 3 (Japanese Unexamined Patent Publication HEI No. 8-336879), for example, where the apparatus for producing the composite yarn of the embodiment is constructed with at least a feeding unit for the continuous reinforcing fibers, a resin feeding unit comprising a die with a coating unit, and a cooler and winder, as shown in Fig. 1-10. A continuous reinforcing fiber tension control device and guiding device are preferably provided between the continuous reinforcing fiber feeding unit and coating unit. As shown in Fig. 1-11, the die provided with the coating unit has a structure comprising at least hole A and hole B, and the continuous reinforcing fibers are contacted with the thermoplastic resin that has been melted under constant pressure, so that they lap up the molten resin, thus covering their entire circumference with it. As mentioned above, the method for producing a thermoplastic resin coating-reinforcing fiber composite yarn of the embodiment comprises a step in which a thermoplastic resin feeder is provided comprising a die having at the tip, a hole A, and a hole B which has an open area larger than the open area of hole A and is situated concentrically with hole A; a step in which the multifilament bundle of continuous reinforcing fibers is passed through hole A and hole B at a predetermined tension while a molten thermoplastic resin is fed from the thermoplastic resin feeder through hole B at a predetermined pressure, to cover the outer periphery of the continuous reinforcing fiber bundle with the thermoplastic resin; and a cooling/winding step in which the continuous reinforcing fiber bundle covered with the molten thermoplastic resin is cooled and wound up. From the viewpoint of handleability and maintenance properties the die may have a structure allowing it to be separated into two or more parts. The resin feeding unit used may be an extruding device or a dipping device, but it is preferably an extruding device which allows easy control of the resin covering thickness.

The melting temperature of the resin may be any temperature higher than the melting point of the thermoplastic resin, but from the viewpoint of inhibiting heat degradation, it is preferably the melting point of the thermoplastic resin + 10 to 100°C, more preferably the melting point + 20 to 80°C and even more preferably the melting point + 30 to 70°C. The apparatus used to melt the resin may be an extruder, for example. Preferably, the screw shape is adjusted to match the resin viscosity, and the molten resin is fed into the die at an appropriate pressure. Nitrogen purging and venting are also preferably carried out, as necessary.

An inline filament diameter meter may also be provided if necessary, to manage the quality of the thermoplastic resin coating-reinforcing fiber composite yarn. There are no particular restrictions on the filament diameter meter, and it may be a contact-type meter or a laser-based non-contact-type meter. When using a non-contact type, it may be either uniaxial or biaxial.

Cooling may be air-cooling in a cooling unit, or immersion in a water bath, or winding onto a cooling roller. Water may also be sprayed simultaneously with winding onto the cooling roller. When water is used for cooling, a drying mechanism is preferably provided as necessary. The drying can be carried out using a fluid such as air, or the temperature may be increased, or the water may be physically removed with a cloth or roller, or the winder may be automatically controlled or manually controlled. From the viewpoint of productivity and production stability, the yarn speed is preferably 10 to 2000 m/min, more preferably 50 to 1800 m/min and even more preferably 100 to 1500 m/min.

There are no particular restrictions on reeling out of the continuous reinforcing fibers, but preferably they are reeled out by a method suited for the manner in which the reinforcing fibers have been wound. With reinforcing fibers in a form of yarn wound on a bobbin, a common creel stand may be installed for reeling out in the forward or diagonal forward direction. With reinforcing fibers in a roving form without a bobbin, the cake may be placed on the floor, and the yarn drawn out from the inside and reeled out upward. With roving reinforcing fibers or untwisted reinforcing fibers wound on a bobbin, the yarn may be pulled from the outside while rotating the bobbin or cake, to reel it out without twisting. Rotation of the bobbin or cake may be controlled using a servomotor to match the take-up speed, or it may be controlled with a simple brake such as a clutch.

For control of ballooning in the trajectory of the yarn produced during reel-out of the continuous reinforcing fibers, a tension control device or yarn guiding device may be installed immediately after yarn reel-out. A tension control device is not particularly restricted and may be a leaf spring, washer, gate, ring, dancer roll or powder clutch system. A yarn guiding device is also not particularly restricted, and may be a circular guide, an aggregating guide, pole or roller. The ballooning can be controlled by setting the distance between the tension control device or yarn guiding device and the reinforcing fiber bobbin or cake. Generally, shortening the distance can result in a smaller ballooning, but if the distance is too short, the resistance will increase during reel-out of the yarn and the reinforcing fibers can potentially be damaged, and therefore the distance is preferably suited for the type and wound form of the reinforcing fibers.

The resin extruder is not particularly restricted, but it is preferred to use an extruder that is suited for the resin to be extruded. It may be a twin-screw extruder or a single-screw extruder. Rotation control of the screw may be either electrical or by hydraulic pressure. For stable extrusion of the resin, the screw groove shape or surface treatment may be adjusted to match the form or viscosity of the resin, or a material feeder may be installed in the hopper, or a dryer may be provided.

Temperature control of the heating cylinder of the extruder is preferably divided into at least 3 zones, and more preferably 4 zones. The heating cylinder under the hopper may also be cooled to control clogging of the resin under the hopper. The cooling method is not particularly restricted, and may be air-cooling or water-cooling.

The winding apparatus is not particularly restricted, and it may be a fiber winding apparatus, an electrical wire winding apparatus or an optical fiber winding apparatus. Operation is preferably carried out under the predetermined tension mentioned above, to apply the predetermined tension to the continuous reinforcing fibers.

The bobbin for winding of the composite yarn is also not particularly restricted, and it may be with ribs or without ribs, and made of paper, wood or plastic. Irregularities may be formed on the surface of the bobbin to control sliding between the yarn and bobbin during winding, or holes may be opened in the surface of the bobbin to facilitate evaporation of moisture adhering to the composite yarn.

The structure of the die used to cover the reinforcing fibers with the resin may be a tubing, semi-filled or filled-type structure, but preferably the distance between the exit end of hole A and the entrance end of hole B of the die is a predetermined value in the passage direction of the continuous reinforcing fiber bundle, as shown in Fig. 1-11, so that a predetermined volume of pooled molten resin (pooled resin section) is present in the die. This will allow exposure of the continuous reinforcing fibers through the thermoplastic resin covering to be controlled. The distance between the exit end of hole A and the entrance end of hole B (distance between holes AB) is preferably 0.5 to 10 mm and more preferably 1 to 5 mm, in the passage direction of the continuous reinforcing fiber bundle. The pooled resin section is preferably designed so that the resin pressure is uniform at the section where the molten thermoplastic resin contacts with the continuous reinforcing fibers. In order to avoid reduction in the resin temperature and viscosity, and excessive increase in the internal pressure of the die, it is preferred for the temperature of the die and pooled resin section to be above the melting point of the resin. Temperature control of the die, in order to increase the temperature of the die to above the melting point, is preferably effected by controlling the temperature independently from the heating cylinder of the extruder, and temperature control of the connecting part of the die and the heating cylinder of the extruder may also be independent from the die and heating cylinder of the extruder.

The cross-sectional area of hole A is preferably 101% to 1000%, more preferably 110% to 500%, even more preferably 120% to 400% and most preferably 150% to 300%, with respect to the cross-sectional area of the continuous reinforcing fiber bundle in the state of closest packing of the continuous reinforcing fibers. In other words, in order for the continuous reinforcing fibers to pass through hole A without resistance, the cross-sectional area of hole A is most preferably at least 50% larger than the cross-sectional area in the most closely-packed state of the continuous reinforcing fibers. If hole A is at least 50% larger, there will be less friction and resistance when passing through the hole A, allowing continuous reinforcing fiber damage and yarn breakage to be inhibited, but if hole A is too much larger than the continuous reinforcing fiber bundle, the continuous reinforcing fibers may flap more inside the hole A while they pass through hole A, thus resulting in poorer coverage and more irregularities on the surface of the composite yarn. The cross-sectional area of the continuous reinforcing fiber bundle in the state of closest packing can be expressed by the following formula:

$$\text{Cross-sectional area of continuous reinforcing fiber bundle with closest packing (mm}^2\text{)} =$$

$$\sqrt{3}A^2B/2$$

where A (mm) is the mean monofilament diameter of the continuous reinforcing fibers and the B is the number of filaments B of the continuous reinforcing fibers.

The cross-sectional area of hole B is preferably 100% to 1000%, more preferably 101% to 500%, even more preferably 105% to 300% and most preferably 110% to 200%, with respect to the cross-sectional area of hole A. That is, the cross-sectional area of hole B is preferably equal to or greater than the cross-sectional area of hole A, from the viewpoint of covering quality, including homogeneity of coating coverage of the composite yarn and reduced exposure of the continuous reinforcing fibers through the covering. This will allow the continuous reinforcing fibers to be uniformly covered by the resin, and can reduce exposure of the reinforcing fibers. From the viewpoint of the fiber volume content and internal pressure of the die, the cross-sectional area of hole B is more preferably 110 to 200% of the cross-sectional area of hole A.

Preferably, the predetermined tension of the continuous reinforcing fibers is 0.01 N to 100 N, with low variation in tension during operation. From the viewpoint of aesthetic quality of the composite yarn, it is preferred to maintain a constant tension of the continuous reinforcing fibers during passage through hole A and hole B. By applying suitable tension to the continuous reinforcing fibers it is possible to cause binding and increased density between the continuous reinforcing fiber bundles, and to obtain composite yarn with low surface irregularities. In other words, tension control contributes to continuous stable operation (reduced yarn breakage), binding of the continuous reinforcing fiber bundle, increased compactness index, reduced filament diameter, lower surface roughness of the coating composite yarn, and less yarn variation (yarn diameter variation). Vibration of the continuous reinforcing fibers during passage through hole B covering the continuous reinforcing fibers results in greater irregularities on the composite yarn surface.

The preferred tension will differ depending on whether the continuous reinforcing fibers are in a roving form or yarn form. For glass fibers in a yarn form with twisting in the yarn, it may be 0.0001 N/tex to 0.5 N/tex, more preferably 0.001 N/tex to 0.1 N/tex, even more preferably 0.002 N/tex to 0.08 N/tex and most preferably 0.003 N/tex to 0.05 N/tex. For glass fibers or carbon fibers in a roving form without twisting in the yarn, it may be 0.0001 N/tex to 0.5 N/tex, more preferably 0.001 N/tex to 0.2 N/tex, even more preferably 0.005 N/tex to 0.1 N/tex and most preferably 0.01 N/tex to 0.08 N/tex. Glass fibers used may be glass fibers in a roving form instead of a yarn form. When using glass fibers in a roving form, the glass fibers will be more prone to damage than in a yarn form, and therefore the aforementioned guide material and surface treatment are important. Glass fibers in a roving form lack yarn twisting and have less variation in tension during internal reel-out than a yarn form, and therefore the aforementioned tension control is important. It is also preferred to use a reeling method with low variation in tension, such as rolling, as necessary.

The predetermined tension is preferably adjusted by a tension control device situated in front of hole A in the passage direction of the continuous reinforcing fiber bundle. The device used to control the tension of the continuous reinforcing fibers is preferably situated before the die, and the tension may be controlled by either electronic control or mechanical control. There are no particular restrictions on an electronic control device, and examples include a dancer roll, Nelson roll and powder brake system. There are also no particular restrictions on a mechanical control device, and examples include a leaf spring, washer, gate or ring system. It is preferred to use a dancer roll, Nelson roll or powder brake system, as a tension control device allowing the variation in tension to be absorbed when reinforcing fibers are reeled out, as necessary.

Preferably, the reinforcing fiber bundle is guided so that it passes through the center of hole A by a guiding device situated in front of hole A in the passage direction of the continuous reinforcing fiber bundle. Similar to the tension control mentioned above, the guiding device contributes to continuous stable operation (reduced yarn breakage), binding of the continuous reinforcing fiber bundle, increased compactness index, reduced filament diameter, lower surface roughness of the coating composite yarn, and less yarn variation (yarn diameter variation). A yarn guiding device is not particularly restricted, and may be a circular loop guide, an aggregating guide, pole or roller, for example. It is more preferred to use a bearing roller from the viewpoint of preventing damage to the reinforcing fibers. When a bearing roller is used, it is preferred to use a bearing roller with a diameter that does not damage the reinforcing fibers by bending. The groove shape of the bearing roller may be an H shape when the continuous reinforcing fibers used are in roving form, or a V shape or U shape when they are in yarn form. When an H-shaped groove is used, the width of the flat section of the groove is preferably equal to or greater than the width of the yarn, and as close as possible to the width of the yarn, in order to reduce flapping of the yarn.

It is preferred to have low kinetic friction between the sites of the tension control device, the guiding device and the hole A that contact with the continuous reinforcing fibers, and the continuous reinforcing fibers that are passing through. The materials and surface treatment of the contact surfaces with the continuous reinforcing fibers are preferably selected as materials and surface treatment suited for the continuous reinforcing fiber material and the operating conditions. Although low friction materials and treatment are basically preferred, when the continuous reinforcing fibers suffer damage on the contact surfaces and generate dust or lint it is preferred to select different materials and surface treatment.

For continuous stable operation, reduced yarn breakage, improved coating quality, uniform coating coverage, reduced surface roughness of the coating surface (especially in the lengthwise direction), lower exposure of the continuous reinforcing fibers through the covering and optimal control of the coating amount, it is preferred to adjust the cross-sectional area of hole B, and the fiber content, take-up speed and resin throughput for the thermoplastic resin coating-reinforcing fiber composite yarn as the final product. All of these properties affect each other and therefore require separate adjustment.

The following procedure is preferably used to determine each of the properties.

(1) The cross-sectional area of hole B is determined from the continuous reinforcing fibers used and the fiber content of the thermoplastic resin coating-reinforcing fiber composite yarn as the final product.
(2) The take-up speed is determined from the viewpoint of productivity, and the state of damage of the continuous reinforcing fibers during operation.
(3) The resin throughput is adjusted for the desired fiber content.

If the resin throughput is too low during this time, problems may occur such as exposure of the continuous reinforcing fibers, non-uniformity of the coating coverage and increased surface roughness. Conversely, if the throughput is too high, the internal pressure between the exit end of hole A and the entrance end of hole B will be too high, resulting in problems such as non-uniformity of the coating coverage, increased surface roughness and continuous reinforcing fiber yarn breakage.

A resin pressure gauge may be provided to measure the internal pressure of the resin during coating. There are no particular restrictions on where it is provided, but it is preferably near the die, and the resin pressure gauge is preferably provided either in the die or between the die and the heating cylinder of the extruder. The resin pressure gauge may be a gauge capable of measuring not only the resin pressure but simultaneously also the resin temperature. In order to reduce exposure of the continuous reinforcing fibers and non-uniformity of the coating coverage, the resin pressure is preferably 0.01 MPa to 50 MPa. The preferred range will differ depending on the resin used, but for standard polyamide 66 in injection molding, it is preferably 0.1 MPa to 30 MPa, even more preferably 0.1 MPa to 15 MPa and most preferably 0.1 MPa to 10 MPa.

The drawdown ratio, which is the ratio of the passage area of the resin through hole B and the resin area after coating, is preferably 0% to 50%, more preferably 0% to 30%, even more preferably 0% to 15% and most preferably 0% to 10%. If the drawdown ratio is too high, distortion will increase and the surface of the coating yarn will be roughened, thus increasing the surface roughness of the yarn. The drawdown ratio can be expressed by the following formula:

$$(D_B - D)/(D_B - \sqrt{3}A^2B/2) \times 100$$

where $D_B$ is the cross-sectional area of nozzle B, D is cross-sectional area of the coating yarn, A (mm) is the mean monofilament diameter of the continuous reinforcing fibers and B is the number of filaments B of the continuous reinforcing fibers.

The viscosity of the molten thermoplastic resin just before passage through hole B is important from the viewpoint of continuous stable operation, reducing yarn breakage, improving coating quality and lowering the coating surface roughness (especially in the lengthwise direction). The viscosity of the molten thermoplastic resin is in a close relationship with the cross-sectional area of hole B and the operating conditions including the take-up speed and the resin throughput, and it is therefore necessary to select a suitable viscosity.

The surface temperature of hole B is preferably 0 to 100°C, more preferably 0 to 75°C and even more preferably 5 to 50°C higher than the melting point of the thermoplastic resin used. This will allow suitable control of the viscosity of the molten thermoplastic resin.

In the method for producing a thermoplastic resin coating-reinforcing fiber composite yarn of the embodiment, preferably operation is initiated by the following operation start-up procedure:

(1) the continuous reinforcing fiber bundle is passed through hole A and hole B at a speed of 800 m/min or lower;
(2) the thermoplastic resin is supplied from hole B at a throughput such that the continuous reinforcing fibers of the reinforcing fiber composite yarn after coating are not exposed, and
(3) after confirming that the resin has covered the outer periphery of the continuous reinforcing fiber bundle, the take-up speed (m/min) of the thermoplastic resin coating-reinforcing fiber composite yarn, as the final product, is increased while adjusting the throughput of the thermoplastic resin so that the continuous reinforcing fibers of the reinforcing fiber composite yarn after coating are not exposed.

The operation start-up procedure preferably further includes the following procedure after the procedure of (3): (4) forced cooling is initiated.

Preferably the winder alone is first operated at low speed without operating the resin feeding unit, and after confirming normal wind-up, the continuous reinforcing fibers alone are passed through hole A and hole B. The wind-up speed during this time is preferably 5 m/min to 800 m/min, more preferably 10 m/min to 400 m/min, even more preferably 15 m/min to 200 m/min and most preferably 20 m/min to 100 m/min.

The material is loaded into the hopper and the resin feeding unit is operated, while confirming that the resin has been covered onto the continuous reinforcing fibers. The resin is preferably supplied at a throughput such that the continuous reinforcing fibers of the reinforcing fiber composite yarn after coating are not exposed. Since reinforcing fiber exposure and yarn breakage tend to occur when the take-up speed is varied, covering with the resin is important in order to reduce such problems. Therefore, the resin supply rate is more preferably greater than during normal operation. If the resin supply rate is too high, however, the internal pressure of the die will increase, often resulting in yarn breakage of the continuous reinforcing fibers, and it is therefore adjusted as appropriate.

Forced cooling is preferably initiated after covering with the resin. Forced cooling is cooling carried out in a forcible manner, instead of natural cooling by air. With water-cooling, the reinforcing fibers before covering are immersed in water, and this opens the fiber bundle, causing reinforcing fiber damage and yarn breakage. This is especially important when using reinforcing fibers in a roving form, since they are prone to opening.

When the wind-up speed is increased, preferably the resin supply rate is adjusted so that the continuous reinforcing fibers of the reinforcing fiber composite yarn after coating are not exposed.

When increasing the speed, the speed is preferably adjusted to within a range of 10 m/min to 800 m/min, more preferably 15 m/min to 700 m/min, even more preferably 25 m/min to 500 m/min and most preferably 50 m/min to 400 m/min, in order to inhibit yarn breakage.

A thermoplastic resin coating-reinforcing fiber composite yarn having the entire circumference of a multifilament bundle of continuous reinforcing fibers covered by a thermoplastic resin, where the thermoplastic resin is composed of two or more resins, can be produced by a method that includes the following steps:

a step of preparing a multifilament bundle of continuous reinforcing fibers;
a step of preparing resin pellets of two or more compounded thermoplastic resins; and
a step of supplying the resin pellets to a melt extruder and covering the outer periphery of the continuous reinforcing fiber bundle with the molten thermoplastic resin mixture.

Alternatively, the composite yarn can be produced by a method that includes the following steps:

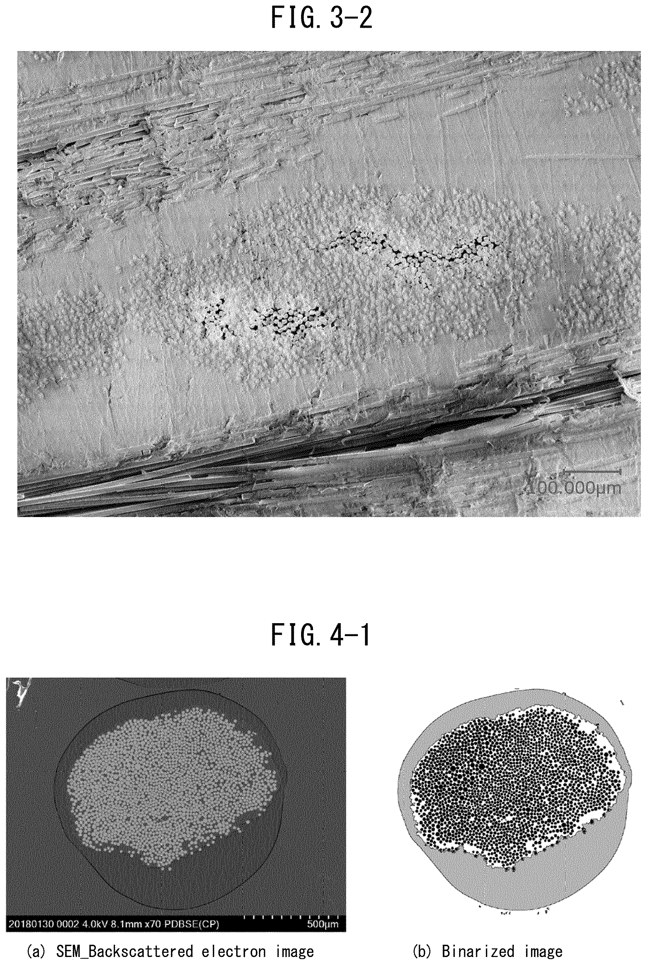

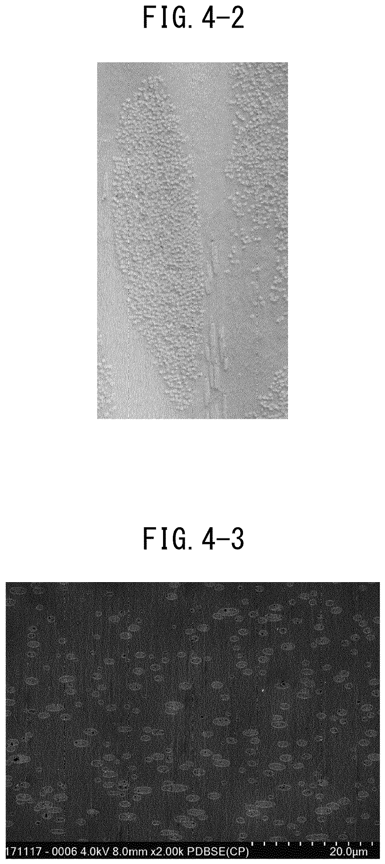

a step of preparing a multifilament bundle of continuous reinforcing fibers;
a step of preparing separate resin pellets of two or more thermoplastic resins; and
a step of dry blending the two or more different resin pellets and supplying them to a melt extruder, and covering the outer periphery of the continuous reinforcing fiber bundle with the molten thermoplastic resin mixture. Specifically, the two or more thermoplastic resins may be supplied to the resin feeding unit (extruder) shown in Fig. 4 in the form of pre-compounded resin pellets, or they may be supplied to the extruder as a dry blend of two or more resin pellets.

[Usage of composite yarn]

The composite yarn of the embodiment may be used in filamentous form as a linear element, the yarn may be wound up for use, or it may be used as a nonwoven fabric, or as a woven fabric, knitted fabric or braid.

Uses for sports goods include fishing lines, fishing rods, golf club shafts, skis, canoes, tennis and badminton rackets and strings; uses for furniture and appliances include panels, housings, chairs, desks and ladders; uses for electrical devices include boards, panels, switch gears, insulators and electrical product chassis; uses for automobiles, two-wheel vehicles and bicycles include main bodies, lamp housings, front end panels, bumpers, seat housings and drive shafts; uses for ships and boats include main bodies, masts and decks; and uses for aircraft and helicopters include primary structural materials, secondary structural materials, interior finishing materials, seats and accessory members. The composite yarn can also be used in pipes, tanks, pressure vessels, blades, tapes, ropes, nets, material protection covers, woven fabrics, knitted fabrics, reinforcing cloths, kite strings, bowstrings, sail cloths, curtain materials, protection materials and bulletproof materials. It is also suitable for use in implements to be employed *in vivo,* such as medical suture thread, artificial tendons and artificial muscles. In addition it can be used in building materials such as sheets and cement reinforcing materials that are suited for partial stripping prevention of concrete structures or mortar structures.

It can also be used in industrial materials, including fiber-reinforced resin reinforcements, fiber-reinforced rubber reinforcements, reinforcing materials for machine tool components, battery separators, chemical filters, suspension bands, membrane modules and optical fibers, and reinforcing materials for high pressure tanks for hydrogen gas and the like. When glass fibers are used as the reinforcing fibers, the composite yarn is suitable for use in fields that utilize impact resistance, radio wave transparency and insulating properties. When carbon fibers are used as the reinforcing fibers, the composite yarn is particularly suited for fields that utilize electroconductivity and thermal conductivity. The composite yarn can be used as a reinforcing material by coiling, or it can be used as a reinforcing material after creating a woven fabric, knitted fabric or braid.

The composite yarn of the embodiment can be suitably used for various industrial woven fabrics, including paper-making woven fabrics such as paper-making dryer canvases, paper-making wires or filters, or various types of filters or conveyor belts. Improved high-speed loom technologies have tended to result in increased abrasion between running monofilaments and various types of yarn guides (such as rollers, guides, belts or reeds), leading to problems including breakage of the monofilaments during warping or weaving, or abnormal variation in the reeling tension, but since the composite yarn of the embodiment has both strength and flexibility it has excellent manageability for such types of processes in particular.

The composite yarn of the embodiment can be suitably used for a screen gauze monofilament, and screen gauze obtained from it can be suitably used for high precision screen printing and in meshes. Mesh woven fabrics made of natural fibers such as silk, or inorganic fibers such as stainless steel have come to be widely used as woven fabrics for screen printing, and in recent years synthetic fiber meshes with excellent flexibility, durability and cost performance are becoming more widely used. When a monofilament has excellent dimensional stability, it is highly suitable for screen gauze, and can also be used for graphic design printing, such as compact disc label printing, or for electronic circuit board printing. In order to meet the demand for greater compactness of electronic boards and higher densification of board circuits in electronic devices that has been increasing with the remarkable progress in high performance and compactness of electronic devices in recent years, there has been a greater need for screen gauzes with higher meshes and lower woven fabric defects, such as fiber diameter unevenness. Composite yarn having fineness and high strength, and also excellent fiber diameter uniformity and low generation of defects such as scum during weaving, is therefore most suitable for satisfying the properties required for such screen gauzes.

The composite yarn of the embodiment can be suitably used for economical fiber-reinforced cement composite materials that have excellent pump delivery properties and workability, and quick hardening properties. It can also be used in a form that has been cut as appropriate according to the method of use. When the amount of added fibers has been increased to impart higher toughness, it becomes harder to evenly disperse the fibers in a hydraulic cement composition. When the fiber density is low, in particular, increasing the amount of fibers added leads to problems of more fiber balls and poor uniformity of dispersion. The composite yarn of the embodiment can easily have its density adjusted, and it has high dispersibility because of its homogeneous surface and low aggregating property.

The composite yarn of the embodiment can be suitably used for reinforcement of building materials, including reinforcement of civil engineering and building structures such as elevated road columns, piers, chimneys and elevated road slabs. It can also be used as a coiled filament or used for formation of woven fabrics, to provide excellent manageability and damage resistance. It not only exhibits excellent reinforcing strength, but also superior manageability at job sites. As additional reinforcement in addition to steel sheets wrapped around concrete pillars, this allows seismic reinforcement to be provided, with an excellent balance between strength and toughness. When used as a sheet, it allows easier fitting when wrapped around pillars due to the flexibility of the composite yarn, and can reduce both cost and working load during construction.

The composite yarn of the embodiment can also be suitably used for reinforcement of medical devices that are to be inserted into human or animal bodies, such as catheters or endoscopes. For a catheter it is necessary to ensure flexibility while also ensuring tensile strength at the tip section and catheter body, and many types of catheters exist having a tip section with a different type of material mounted at the tip of a catheter body with a reinforcing metal braid, in order to ensure flexibility, but with such types, adhesion between the different materials has been problematic and breakage can potentially occur due to stress concentration. This eventuality can be overcome by a resin-covered composite yarn that has metal as the reinforcing fibers.

The composite yarn of the embodiment can also be suitably used as gland packing. Gland packing must exhibit the reciprocal properties of sealability to prevent leakage, and slidability to withstand contact with axes. The known forms include types having a fiber braid treated with a lubricating agent, and die mold packings obtained by molding expanded graphite sheets. In the former case, the yarn provides both manageability and strength during formation of the composite yarn braid, while in the latter case, the yarn may be used in the joining section between the matrix and the expanded graphite.

The composite yarn of the embodiment can also be suitably used as anchoring thread for medical purposes. For anchoring of fractures, such as bone reconstruction for treatment of vertebral fracture (also known as bone fusion) or anchoring of bones together during bone surgery such as bone grafting surgery, it is necessary to firmly hold the bones together so that they do not shift before the anchoring has been completed. For tight fastening it is especially important to maintain flexibility, manageability and strength of the fibers. For such purposes it is ecologically preferred to use synthetic resins, and the reinforcing fibers are preferably biocompatible titanium thin wire.

The composite yarn of the embodiment can also be suitably used for lightweight, low sagging overhead wires. Overhead power lines have a structure using steel cores twisted with multiple steel wires as tension members, with power lines made of Al or Al alloy twisted around the outer sides. The entire structure is stretched across steel towers at high tension, forming a power transmission line. Such power lines must have light weight, low thermal expansion, weather resistance and a low degree of sagging at high temperature, and they can exhibit excellent performance if the reinforcing fibers and thermoplastic resins in the composite yarn are appropriately selected.

The composite yarn of the embodiment can also be suitably used as a thermoplastic filament for a 3D printer.

The composite yarn of the embodiment can also be suitably used in a submarine cable. Submarine cables are used as ropes to combine the conductor components and insulating layers surrounding them, as well as the high tension filaments on their outer sides. High tension filaments must have light weight, flexibility, corrosion resistance and high strength, and composite yarn is suitable for use.

The composite yarn of the embodiment can also be suitably used as an insulation material for a coil. Superconducting coils, for example, are composed of a composite wire material, made of a super conductor core and a matrix, wound around a coil bobbin, and composite yarns can be used in the necessary insulating layers between the wire materials. Superconducting materials are employed in analytical instruments such as NMR and MRI machines, medical testing devices, linear motor cars, transportation device motors of superconducting ships, transformers, electric power storage systems (SMES), electric power energy devices such as fault current limiters, and semiconductor raising devices, but since a particular problem encountered is quenching, wherein electrification occurs with alternating current superconductivity, highly durable insulating materials are required.

The composite yarn of the embodiment can also be suitably used in screen doors. It can be used in a screen door to provide not only the basic functions of ventilation, visibility and insect blocking, but also strength against damage such as mesh opening and tearing. Deodorant functions can also be easily imparted using additives. It is also suitable in screen doors with coarse meshes and high air permeability while prevent entering and exiting of livestock animals. With its high strength and high impact resistance, it can withstand repeated attempts by animals to forcibly break through.

The composite yarn of the embodiment can also be suitably used in bulletproof clothing and protective gear. It is important for the yarn to be flexible since it will be in close fit with the human body. Manageability during steps of weaving, knitting and braiding also has a major effect on productivity. As an insulating material, it can provide functions to prevent electric shocks, in addition to simply helping to prevent incision wounds.

The composite yarn of the embodiment can also be suitably used in rubber cords for fiber reinforcement of rubber to be used in tire carcasses. Rigidity and fatigue resistance are required, but productivity is likewise important for coiling.

The composite yarn of the embodiment can also be suitably used in artificial leather. The surface of artificial leather incorporates interlaced ultrafine fibers, and as a reinforcing layer it combines a woven fabric with good adhesion and a high shape-following properties, to obtain satisfactory artificial leather.

The composite yarn of the embodiment can also be suitably used in machines and devices, for household air purifying filters (especially filter units for household appliances) and building or factory air-conditioning filters, 24-hour ventilation filters for homes, hospital filters and on-vehicle filters. The basic performance required for air purifiers includes low noise, power efficiency, high dust collection and high deodorization. In recent years, washable reusability has been another requirement for filter units. Filter parts that are set in air purifiers have usually been configured with their dust collectors and deodorizers situated separately, but it is desirable for them to be integrated. Integration is not only convenient for washing but is also effective for easier filter replacement and cost reduction, but since merely adding a deodorizing function to the dust collector increases the filter medium thickness, decreases the amount of filter medium that can be housed in the unit, leads to greater unit pressure loss due to increased structural pressure loss and results in problems such as lower processing air volume, increased noise, greater power consumption and lower trapping efficiency, it is necessary to employ a construction allowing powerful dust collection without pressure loss, and therefore the composite yarn of the embodiment can be suitably used after forming it into a structure such as a nonwoven fabric.

The composite yarn of the embodiment can also be used in sliding parts. It may be in the form of yarn or made into a nonwoven fabric or woven fabric, for use in a sliding part for an OA device or household appliance.

[Woven fabrics and other intermediate materials]

There are no particular restrictions on the method of producing a continuous reinforcing fiber molded resin using the composite yarn of the embodiment, but preferably an intermediate material is created to match the shape of the continuous reinforcing fiber molded resin, and the continuous reinforcing fiber molded resin is produced using the intermediate material.

The intermediate material is not particularly restricted, and it may be a unidirectional (UD) reinforcing material with the composite yarn aligned in a specified direction, a fabric or plate using the composite yarn, or a braid or wound filament. A braid or wound filament is preferred when a molded article having the same cross-sectional shape is to be obtained, while a fabric is preferred when a molded article with a planar shape or box shape is to obtained, from the viewpoint of shape freedom of the molded article. The fabric may be a woven fabric, knitted fabric, lace, felt, nonwoven fabric or film, with a woven fabric or knitted fabric being especially preferred from the viewpoint of manageability.

From the viewpoint of shape-following properties in the die when producing a continuous reinforcing fiber molded resin, the intermediate material is preferably a braid, woven fabric, knitted fabric, lace, felt or nonwoven fabric composed of a flexible, unidirectional reinforcing material, or preferably a woven fabric, knitted fabric, lace, felt or nonwoven fabric composed of a braid, more preferably it is a unidirectional reinforcing material or woven fabric form, for lower bending and greater strength of the continuous reinforcing fibers, and even more preferably a woven fabric form, from the viewpoint of shape stability. A knitted fabric is preferred from the viewpoint of allowing more complex three-dimensional shapes to be followed.

The weaving method for a woven fabric is not particularly restricted, and it may be a plain weave, twill weave, satin weave, mat weave, tangled weave or gauze stitch.

From the viewpoint of strength of the continuous reinforcing fiber molded resin of the embodiment, a twill weave, satin weave or mat weave with a low crimp rate of the continuous reinforcing fibers is more preferred. A plain weave or mat weave is preferred from the viewpoint of preventing shifting of the reinforcing fibers during molding.

The crimp rate is the percentage value of the difference in length of the composite yarn after weaving from the length before weaving, divided by the length after weaving, and it is preferably 10% or lower, more preferably 5% or lower and most preferably 2% or lower.

The weave density can be freely set according to the thickness and hardness of the composite yarn. A high density may be set if it is desired to increase the basis weight of the woven fabric, or a low density may be set if flexibility of the woven fabric is paramount, or if it is desired to reduce crimping of the reinforcing fibers. From the viewpoint of manageability of the woven fabric and physical properties of the molded article, the basis weight of the woven fabric is preferably 200 to 1000 $g/m^2$, more preferably 300 to 900 $g/m^2$, even more preferably 400 to 800 $g/cm^2$ and most preferably 500 to 700 $g/m^2$.

The woven fabric thickness can also be freely set, according to the thickness, hardness, woven density and woven texture of the composite yarn. A greater thickness may be set if it is desired to increase the compression property of the woven fabric, or a smaller thickness may be set if flexibility of the woven fabric is paramount, or if it is desired to reduce crimping of the reinforcing fibers. From the viewpoint of manageability of the woven fabric and physical properties of the molded article, the thickness of the woven fabric is preferably 0.01 to 10 mm, more preferably 0.02 to 5 mm, even more preferably 0.05 to 4 mm and most preferably 0.1 to 3 mm.

The method of knitting a knitted fabric is not restricted, and it may be weft knitting, warp knitting or circular knitting, at any desired knitting gauge. The knitting machine used is not particularly restricted, and it may be a tricot machine, double raschel machine, Milanese machine, Jacquard machine, whole garment machine or intarsia machine.

[With pultrusion molding]

When the method of producing a continuous reinforcing fiber molded resin of the embodiment is a pultrusion molding method, the molding substrate used may be a single composite yarn or a bundle of several composite yarns directly, or several composite yarns in a bundled state may be immobilized. Immobilization of a bundle of several composite yarns may be by a method of covering composite yarn in the form of a bundle with separate fibers to form a single filament, or twisting the composite yarn as a bundle of filaments. Alternatively, an intermediate material may be formed matching the shape of the continuous reinforcing fiber molded resin to be produced, and the intermediate material then used to produce the desired continuous reinforcing fiber molded resin.

The intermediate material is not particularly restricted, and it may be a unidirectional (UD) reinforcing material having a composite yarn or a bundle of composite yarns aligned in a specified direction, or a braid, woven fabric, knitted fabric, lace, felt, nonwoven fabric, film or plate formed using the composite yarn or bundle of composite yarns.

From the viewpoint of shape-following properties in the die when producing a continuous reinforcing fiber molded resin, the intermediate material is preferably a braid, woven fabric, knitted fabric, lace, felt or nonwoven fabric composed of a flexible, unidirectional reinforcing material, or preferably a woven fabric, knitted fabric, lace, felt or nonwoven fabric composed of a braid, more preferably it is a braid or woven fabric of a unidirectional reinforcing material, for lower bending and greater strength of the continuous reinforcing fibers, and even more preferably a knitted fabric form composed of the braid, from the viewpoint of shape stability.

The method of obtaining such an intermediate material is not particularly restricted and may be selected as appropriate depending on the purpose and intended use.

For example, a braid can be formed using an ordinary braider, with no particular restrictions on the type of braid, which may be a flat braid, round braid or bag braid.

For example, a woven fabric can be formed using a weaving machine such as a shuttle loom, rapier loom, airjet loom or water jet loom, and it is sufficient if it includes the composite yarn at least partially. A preferred method is, for example, to insert weft yarn into warp yarn having aligned filaments that include the composite yarn.

A knitted fabric can be obtained using a circular knitting machine, flat knitting machine, tricot knitting machine or raschel knitting machine, with knitting of fibers at least partially including composite yarn.

A nonwoven fabric can be obtained by first forming the fibers, at least partially including the composite yarn, into a fiber aggregate sheet known as a web, and then bonding the fibers together by physical action with a needle punching machine, stitch bond machine or columnar flow machine, or thermal action with an embossing roll, or with an adhesive.

Other forms of intermediate materials can be obtained as appropriate using the methods described in PTL 1 (Japanese Unexamined Patent Publication No. 2015-101794).

[Injection molding resin]

A thermoplastic resin composition for injection molding, to be used to produce a hybrid molded article, is not particularly restricted so long as it is a thermoplastic resin composition that can be used in ordinary injection molding.

Examples of such thermoplastic resin compositions include, but are not limited to, resin compositions of one or mixtures of two or more from among polyethylene, polypropylene, polyvinyl chloride, acrylic resins, styrene-based resins, polyethylene terephthalate, polybutylene terephthalate, polyallylate, polyphenylene ether, modified polyphenylene ether resins, total aromatic polyesters, polyacetals, polycarbonates, polyetherimides, polyethersulfones, polyamide-based resins, polysulfones, polyether ether ketones and polyether ketones.

These thermoplastic resin compositions may also contain various fillers.

Such fillers include staple fiber and long fiber materials that are discontinuous reinforcing materials of the same types of materials as the continuous reinforcing fibers.

When glass staple fibers and long fibers are used as discontinuous reinforcing materials, a sizing agent may also be used, as with continuous reinforcing fibers comprising the composite yarn of the embodiment.

A sizing agent preferably comprises a silane coupling agent lubricating agent and binding agent. The type of silane coupling agent, lubricating agent and binding agent used may be the same as the sizing agent for the continuous reinforcing fibers described above.

A thermoplastic resin composition to be used in injection molding is preferably similar to, and more preferably identical to, the thermoplastic resin forming the continuous reinforcing fiber molded resin, from the viewpoint of interfacial strength between the continuous reinforcing fiber molded resin part and the injection-molded thermoplastic resin composition part. Specifically, when polyamide 66 (PA66) fibers are used as the thermoplastic resin forming the continuous reinforcing fiber molded resin, it is preferred to use polyamide 66 (PA66) for the resin material of the thermoplastic resin composition for injection molding.

Other methods include a method of setting and molding a base material in a double belt press machine, or a method of molding by setting the base material in a die and compressing it with a double belt press machine, or a method of setting a frame surrounding the four sides of a set base material and compression molding it with a double belt press machine, or a method of molding by preparing a heating compression molding machine set to one or more temperatures and a cooling compression molding machine set to one or more temperatures, and loading the die in which the base material has been set into each compression molding machine in order, for molding.

[Continuous reinforcing fiber molded resin and method for producing it]

The continuous reinforcing fiber molded resin of the embodiment contains the aforementioned composite yarn and intermediate material as constituent materials.

The method for producing the continuous reinforcing fiber molded resin of the embodiment may be any of various methods, including but not limited to the following.

The method for producing the molded article may be the method illustrated in Fig. 1-12, as an example.

For example, the base material that is to compose the continuous fiber-reinforced molded resin is cut to match the desired molded article shape and layered in the necessary number for the thickness of the target product, and it is set in a manner conforming to the die shape.

Cutting of the base material may be carried out one at a time, or any number may be stacked and cut together. From the viewpoint of productivity, they are preferably cut in a stacked state. Any method may be used for cutting, examples of which include methods using a water jet, blade press machine, hot blade press machine, laser or plotter. A hot blade press machine is preferred, for an excellent cross-sectional shape, and also better handleability by welding of the edges when a multiple stack is cut. A suitable cutting shape can be adjusted by repeated trial and error, but it is preferably set by carrying out a simulation with CAE (computer aided engineering), matching the die shape.

The base material used to form the continuous reinforcing fiber molded resin, and preferably the base material in the form of a woven fabric, is cut to match the desired molded article shape and layered in the necessary number for the thickness of the target product, and then set in a manner conforming to the die shape. By using the intermediate material described above it is possible to increase the degree of freedom for the die, compared to using a conventional composite board comprising ordinary reinforcing fibers impregnated with a resin, thus allowing the molding to be carried out with higher shape freedom even when level differences exist in the molded article. After the base material has been set in the die, the die is closed and the material is compressed. The die is adjusted to a temperature at or above the melting point of the thermoplastic resin composing the continuous reinforcing fiber molded resin, to melt the thermoplastic resin and shape it. The mold clamping pressure is not particularly stipulated but is preferably 1 MPa or higher and more preferably 3 MPa or higher. The mold is clamped once for compression molding to remove the gas, after which the die mold clamping pressure is released. The time at above the melting point is preferably 5 to 180 seconds, more preferably 10 to 120 seconds and most preferably 15 to 60 seconds. If the time is too short the impregnation and interfacial strength may be insufficient, while if it is too long, not only will productivity be lower but molecular weight reduction and coloration may also occur. Following impregnation, it may be cooled to solidify the thermoplastic resin, and the mold may then be released. From the viewpoint of productivity and of inhibiting coloration, the total time for temperature increase and temperature decrease is preferably shorter.

In the production steps for a continuous reinforcing fiber molded resin, the intermediate material is set into a die and the die is closed and pressurized, and after a predetermined time has elapsed, it may be filled with a predetermined thermoplastic resin composition that is injected in and molded, joining the thermoplastic resin with the predetermined thermoplastic resin composition to produce a continuous reinforcing fiber molded resin as a hybrid molded article.

The timing for injection filling of the predetermined thermoplastic resin composition will largely depend on the interfacial strength between both thermoplastic resins. The timing for injection filling of the predetermined thermoplastic resin composition is preferably no longer than 30 seconds after the die temperature has increased above the melting point and glass transition temperature of the thermoplastic resin, after the base material has been set in the die and the die has been closed.

The die temperature during injection filling of the predetermined thermoplastic resin composition is preferably at or above the melting point or glass transition temperature of the thermoplastic resin composing the continuous reinforcing fiber molded resin. More preferably, it is at or above the melting point + 10°C or the glass transition temperature + 10°C, even more preferably at or above the melting point + 20°C or the glass transition temperature + 20°C, and yet more preferably at or above the melting point + 30°C or the glass transition temperature + 30°C, of the thermoplastic resin composing the continuous reinforcing fiber molded resin.

The timing for injection filling of the predetermined thermoplastic resin composition is also preferably no longer than 30 seconds after the die temperature has increased above the melting point and glass transition point of the thermoplastic resin, after the intermediate material has been set in the die and the die has been closed.

In the hybrid molded article described above, the joining section between the thermoplastic resin composing the continuous reinforcing fiber molded resin and the thermoplastic resin composition formed by injection molding preferably has an irregular structure where both are combined.

To increase the interfacial strength it is effective for the die temperature to be at or above the melting point of the injected thermoplastic resin composition, and for the resin to be held at high pressure during injection molding, such as 1 MPa or higher. In order to increase the interfacial strength, the holding pressure is preferably 5 MPa or higher and more preferably 10 MPa or higher.

Holding for a long holding pressure time, such as 5 seconds or longer, preferably 10 seconds or longer and more preferably a period until the die temperature falls below the melting point of the thermoplastic resin composition, is preferred from the viewpoint of increasing the interfacial strength.

[Method for producing molded composite material with three-dimensional shape]

The method for producing a molded composite material having a three-dimensional shape according to the embodiment includes the following step:
a step in which a thermoplastic resin coating-reinforcing fiber composite yarn that has the entire circumference of a multifilament bundle of continuous reinforcing fibers covered by a thermoplastic resin, is used as the molding substrate. Preferably, the thermoplastic resin is essentially not present inside the continuous reinforcing fiber bundle.

[Continuous reinforcing fiber molded resin]

The continuous reinforcing fibers in the molded composite material having a three-dimensional shape produced by the method of the embodiment are preferably linear.

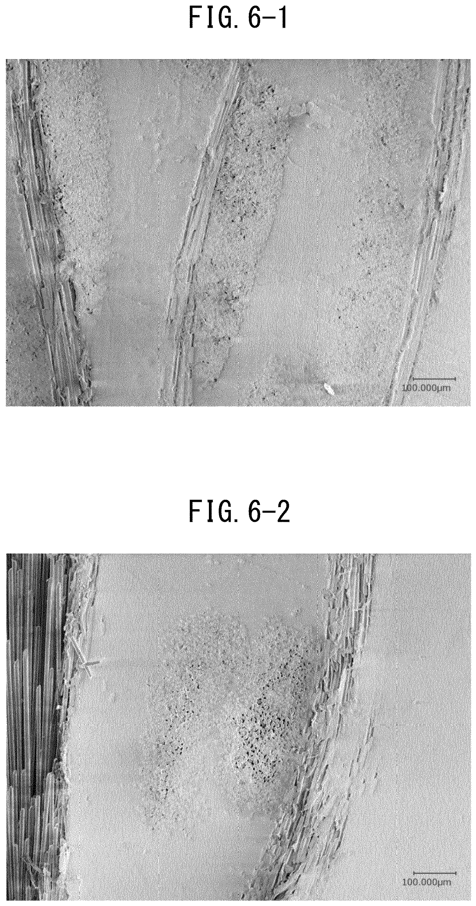

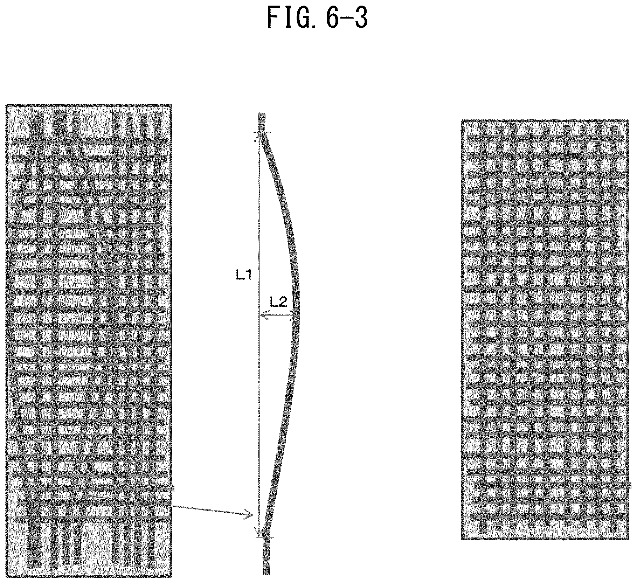

The method of determining the linearity is shown in Fig. 6-3. The linearity (%) is represented by the following formula:

$$\text{Linearity } (\%) = \{1 - (L2/L1)\} \times 100$$

where L1 is the length of the continuous reinforcing fibers at a part of the continuous reinforcing fibers in the molded article where the linearity becomes disordered, and L2 is the disorder width at that time. When multiple locations of disordering are found, the one with lowest linearity is defined as the linearity of the molded article. The continuous reinforcing fibers can be easily assessed based on an observational photograph taken by outer observation of the molded article. An X-ray CT image may be used if outer observation is difficult due to coloration or other factors.

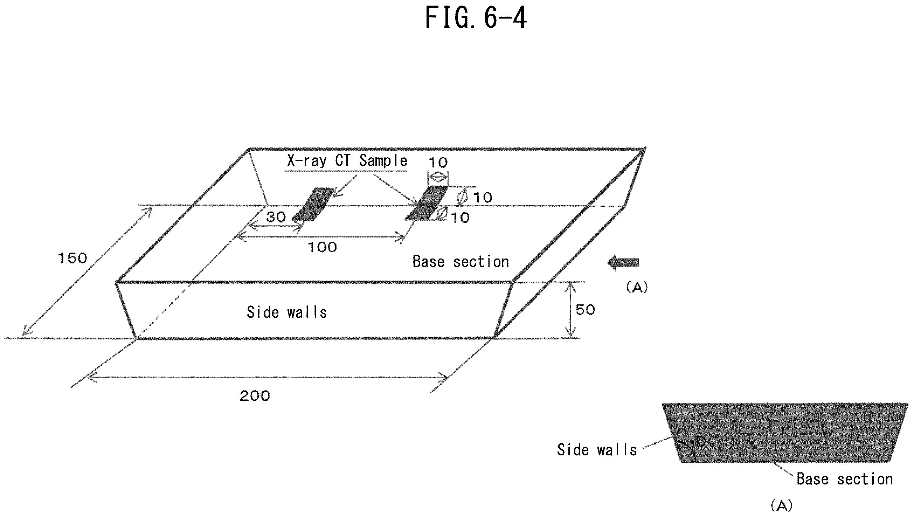

A molded composite material produced by the method of the embodiment has a three-dimensional shape, with a greater effect being obtained if it has a shape with a base section on at least one side and walls standing from the base section. Standing walls may be located inside the base section, also known as "ribs", or formed as lateral walls at the edges of the base section. In the case of lateral walls, preferably the relationships E (%) > 2D(°) - 150 and D(°) ≥ 90° are satisfied, where D° is the interior angle formed between the base section and the side walls, and E% is the continuity of the continuous reinforcing fibers straddling the base section and the side walls, as illustrated in Fig. 6-4.

When composite yarn is used for molding of a three-dimensional molded article by compression molding, smaller angles between the base section and the lateral walls will tend to promote breakage of the reinforcing fibers during molding. By using the thermoplastic resin coating-reinforcing fiber composite yarn in the method of the embodiment, however, the reinforcing fibers are protected by coverage with the thermoplastic resin, and therefore breakage of the reinforcing fibers during molding is reduced at the corner sections of the base section and lateral walls as well.

The continuity of the reinforcing fibers can be assessed by observation of any corner section by X-ray CT. The continuity can be actually evaluated by imaging an arbitrary point by X-ray CT, and recording the percentage (%) using the number of non-broken continuous fibers as the numerator and the number of photographed continuous reinforcing fibers in the image as the denominator.

The method for producing a molded composite material of the embodiment (Examples 7-1 to 7-4) includes the following steps:

a step in which a thermoplastic resin coating-reinforcing fiber composite yarn in which the entire circumference of a multifilament bundle of continuous reinforcing fibers is covered by a thermoplastic resin but essentially no thermoplastic resin is present inside the continuous reinforcing fiber bundle, and/or a woven or knitted fabric of the composite yarn, is inserted into a die as a molding substrate;

a temperature-elevating step in which the die is closed and the cavity surface of the die is increased to above the flow temperature of the thermoplastic resin; and

a cooling/mold release step in which the cavity surface of the die is cooled to below the flow temperature of the thermoplastic resin, and preferably to -50°C below the flow temperature, and then the die is opened to release the molded article.

In this step, the base material inserted into the die may be preheated before insertion, if necessary. Means other than a heat source from the die may also be used for preheating of the molding substrate inserted into the die.

In the method for producing a molded composite material of the embodiment, the timing for loading the molding substrate into the die cavity and closing the die may be selected as desired. For example, the die temperature may be increased to above the flow temperature of the thermoplastic resin after the molding substrate has been loaded and the die has been closed, or the molding substrate may be loaded into the die cavity, the die closed until it contacts with the base material and the die cavity temperature then raised to above the flow temperature of the thermoplastic resin, after which the die cavity may be completely closed.

The molding substrate may also be preheated before heating with a heat source from the die cavity surface, or simultaneously using an infrared heater. As an example, before loading the base material into the die cavity, mid infrared rays may be used for heating to above the flow temperature of the thermoplastic resin, or to above the melting point temperature of the thermoplastic resin if the thermoplastic resin is a crystalline resin, thereby softening the base material for loading into the die to allow the shapeability to be further improved. Preheating causes notable contraction especially when combined filament yarn comprising thermoplastic resin yarn and reinforcing fibers is used as the composite yarn, but since the degree of contraction by preheating is low with the thermoplastic resin coating-reinforcing fiber composite yarn of the embodiment, it is possible to avoid the problem of excessive contraction of the molding substrate during press molding.

As used herein, "flow temperature of the thermoplastic resin" means a temperature above the melting point, when the thermoplastic resin is a crystalline resin, or at least 100°C above the glass transition temperature of the thermoplastic resin, when the thermoplastic resin is an amorphous resin.

In the method for producing a molded composite material of the embodiment, preferably the time (T min) above the flow temperature of the thermoplastic resin in the temperature-elevating step and the impregnation rate (I ≤ 100%) of the thermoplastic resin in the molded composite material satisfy the following inequality (2):

$$\text{Impregnation rate (I)} > 0.2 \times T + 97.4 \qquad \text{Inequality (2)},$$

and/or the following inequality (3):

$$\text{Impregnation rate (I)} > 0.5 \times T + 99 \quad \text{Inequality (3)},$$

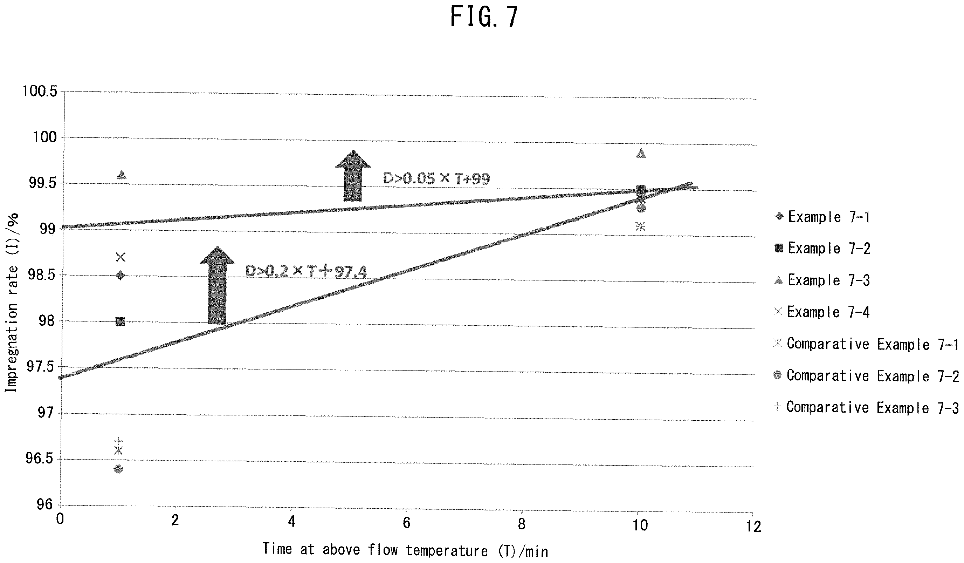

as shown in Fig. 7.

The relational expressions of inequality (2) and inequality (3) indicate that a molded article with a high impregnation rate can be obtained even with a short time (T min) above the flow temperature of the thermoplastic resin in the temperature-elevating step.

The compactness of the continuous reinforcing fiber bundle is important for the impregnation rate of the resin during molding, the impregnation rate during resin melting increasing when the resin is present without spaces around the reinforcing fibers. A low compactness suggests the presence of air that can interfere with impregnation. A smoother surface of the composite yarn allows fabrication of a more highly dense intermediate base material (fabric) due to a more satisfactory texture, allows a higher-density intermediate base material to be distributed in the die cavity space, and as a result, can increase the melting rate of the resin in contact with the die surfaces, thereby increasing the impregnation rate.

In addition, using two or more materials with different melting points in the coating thermoplastic resin allows the impregnation rate to be further increased.

Since the method for producing a molded composite material of the embodiment allows high-speed impregnation, it allows high-speed, high-cycle molding of molded articles to be achieved. The temperature increase time for the die cavity surface is preferably no longer than 3 minutes, more preferably 1 minute or shorter, and even more preferably 30 seconds or shorter. The die temperature decrease time is preferably 2 minutes or shorter, more preferably 1 minute or shorter and even more preferably 30 seconds or shorter.

In the production steps for a continuous reinforcing fiber molded resin, the intermediate material is set into a die and the die is closed and pressurized, and after a predetermined time has elapsed, it may be filled with a predetermined thermoplastic resin composition that is injected in and molded, joining the thermoplastic resin with the predetermined thermoplastic resin composition to produce a continuous reinforcing fiber molded resin as a hybrid molded article.

The timing for injection filling of the predetermined thermoplastic resin composition will largely depend on the interfacial strength between both thermoplastic resins.

The die temperature during injection filling of the predetermined thermoplastic resin composition is preferably at or above the melting point or glass transition temperature of the thermoplastic resin composing the continuous reinforcing fiber molded resin. More preferably, it is at or above the melting point + 10°C or the glass transition temperature + 10°C, even more preferably at or above the melting point + 20°C or the glass transition temperature + 20°C, and yet more preferably at or above the melting point + 30°C or the glass transition temperature + 30°C, of the thermoplastic resin composing the continuous reinforcing fiber molded resin.

The timing for injection filling of the predetermined thermoplastic resin composition is also preferably no longer than 30 seconds after the die temperature has increased above the melting point and glass transition point of the thermoplastic resin, after the intermediate material has been set in the die and the die has been closed.

In the hybrid molded article described above, the joining section between the thermoplastic resin composing the continuous reinforcing fiber molded resin and the thermoplastic resin composition formed by injection molding preferably has an irregular structure where both are combined.

For increasing the interfacial strength it is effective for the die temperature to be at or above the melting point of the injected thermoplastic resin composition, and for the resin to be held at high pressure during injection molding, such as 1 MPa or higher. In order to increase the interfacial strength, the holding pressure is preferably 5 MPa or higher and more preferably 10 MPa or higher.

Holding for a long holding pressure time, such as 5 seconds or longer, preferably 10 seconds or longer and more preferably a period until the die temperature falls below the melting point of the thermoplastic resin composition, is preferred from the viewpoint of increasing the interfacial strength.

[Molding method using knitted fabric]

A knitted fabric may be used to obtain molded articles with more complex three-dimensional shapes. This not only allows circular columns and rectangular columns to be seamlessly obtained, but also permits shapes with altered cross-sectional shapes or cross-sectional dimensions. It can also conform to three-dimensional shapes such as circular cones and pyramidal cones that have altered cross-sectional areas. When obtaining such a molded article, knitted fabrics matching the structure are formed, a predetermined number are wrapped over a support and loaded into the die and the resin is melted, thereby allowing a molded article with a complex three-dimensional shape to be obtained in a single step.

[Pultrusion molding method for molded composite material of the embodiment]

The pultrusion molding method for a molded article of a composite material of the embodiment includes the following steps:

a step in which a molding substrate is prepared that is selected from the group consisting of thermoplastic resin coating-reinforcing fiber composite yarns having the entire circumference of a multifilament bundle of continuous reinforcing fibers covered by a thermoplastic resin, and woven fabrics, knitted fabrics and braids of such composite yarns; and

a molding step in which the molding substrate is successively passed through a heating die in a hot melt shaping unit that is above the flow temperature of the thermoplastic resin and a cooling die in a cooling solidification unit that is below the flow temperature, to obtain a molded article.

The molding substrate may be a braid, and a core rod may be placed at the center of the braid during the molding step.

Preferably, the residence time (T min) above the flow temperature of the thermoplastic resin in the hot melt shaping unit and the impregnation rate (I ≤ 100%) of the thermoplastic resin in the molded composite material satisfy the following inequality (1):

$$\text{Impregnation rate (I)} > 0.05 \times T + 99 \quad \text{Inequality (1).}$$

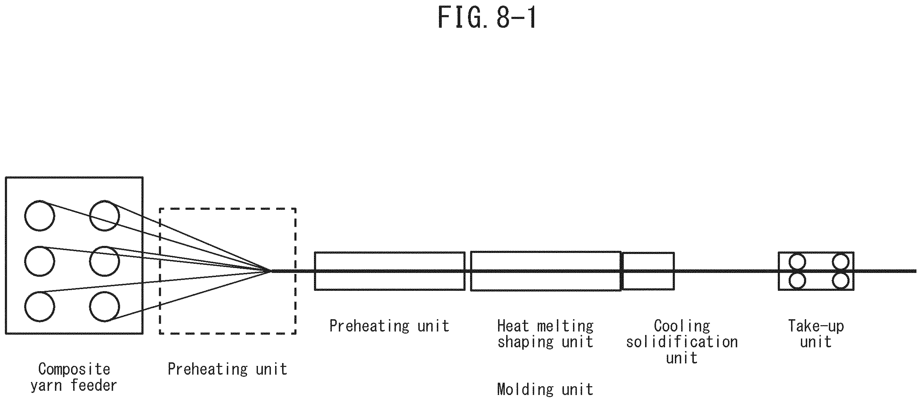

A pultrusion molding method for a molded article of a composite material of the embodiment will now be described in overview with reference to Fig. 8-1.

The equipment used for the pultrusion molding method for the molded article of the composite material of the embodiment may be provided with a composite yarn feeder, an introducing unit (not shown), a preheating unit, a molding unit (heat melting shaping unit and cooling solidification unit) and a take-up unit, as the basic construction.

The composite yarn feeder serves to feed out the composite yarn, and it is also known as a creel. When a braid or bag braid of the composite yarn is used as the molding substrate, a braider is installed in that section and a braid is continuously supplied, for example.

The introducing unit (not shown) is a section that adjusts the composite yarn intermediate base material so that it is smoothly introduced into the preheating unit.

The preheating unit used may be an electric heater or infrared heater, which directly heats the composite yarn or intermediate base material, or a preheating die may be used. When a preheating die is used, an electric heater is preferably used to heat the die to a constant temperature.

The molding unit is divided into a heat melting shaping unit and a cooling solidification unit, the heat melting shaping unit comprising the heating die, and the cooling die being set in the cooling solidification unit.

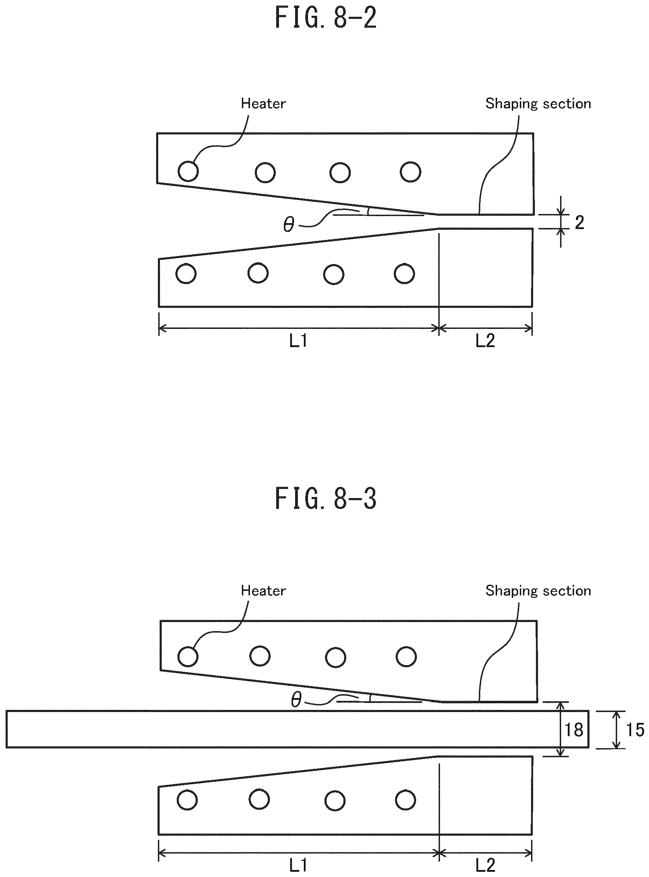

The cross-sectional area of the entrance to the heating die is preferably no greater than 3 times, more preferably no greater than 2 times and even more preferably no greater than 1.5 times the closest packing volume of the molding substrate that is introduced. The entrance of the heating die is preferably tapered, as shown in Fig. 8-2. The tapering angle (θ) is preferably 1° to 10° and more preferably 2° to 5°. The rear of the heating die is the molded article shaping section, for shaping into the desired shape.

In the cooling die, the shaped molded article is cooled to solidification.

Each cooled and solidified molded article is pulled out by the take-up unit, so that molded articles are continuously produced.

With the pultrusion molding method for a molded article of the composite material of the embodiment it is possible to produce a high quality molded article having a rapid and high impregnation rate, by using composite yarn that has excellent processability into woven fabrics, knitted fabrics and braids and an excellent impregnating property during molding, and that is also able to exhibit high physical properties even with molding for short periods of time.

[Usage of continuous reinforcing fiber molded resin]

The continuous reinforcing fiber molded resin of the embodiment can be suitably used in structural materials for aircraft, vehicles and construction materials.

Examples of uses for vehicles include, but are not limited to, chassis/frames, suspensions, drive system components, interior parts, exterior parts, functional parts and other parts.

Specifically, suitable uses include uses in parts for a steering axis, mount, sunroof, step, roof trimming, door trimming, trunk, boot lid, bonnet, sheet frame, sheet back, retractor, retractor support bracket, clutch, gear, pulley, cam, auger, elasticity beam, buff ring, lamp, reflector, glazing, front-end module, back door inner, brake pedal, handle, electrical material, sound-absorbing material, door exterior, interior finishing panel, instrument panel, rear gate, ceiling cover, sheet, seat framework, wiper strut, EPS, small motor, heat sink, ECU box, ECU housing, steering gear box housing, plastic housing, EV motor housing, wire harness, in-vehicle meter, combination switch, small motor, spring, damper, wheel, wheel cover, frame, sub-frame, side frame, motorcycle frame, fuel tank, oil pan, intake manifold, propeller shaft, driving motor, monocoque, hydrogen tank, fuel cell electrode, panel, floor panel, outer plating panel, door, cabin, roof, hood, valve, EGR valve, variable valve timing unit, connecting rod, cylinder bore, member (engine mounting, front floor cloth, footwell cloth, seat cloth, inner side, rear cloth, suspension, pillar lean force, front side, front panel, upper, dash panel cloth, steering), tunnel, fasten insert, crash box, crash rail, corrugate, roof rail, upper body, side rail, braiding, door surround assembly, airbag member, body pillar, dash two-pillar gusset, suspension tower, bumper, body pillar lower, front body pillar, reinforcement (instrument panel, rail, roof, front body pillar, roof rail, roof side rail, locker, door belt line, front floor under, front body pillar upper, front body pillar lower, center pillar, center pillar hinge, door outside panel), side outer panel, front door window frame, NICS bulk, torque box, radiator support, radiator fan, water pump, fuel pump, electronic control throttle body, engine control ECU, starter, alternator, manifold, transmission, clutch, dash panel, dash panel insulator pad, door side impact protection beam, bumper beam, door beam, bulkhead, outer pad, inner pad, rear seat rod, door panel, door trimming board sub-assembly, energy absorber (bumper, shock absorption), shock absorbing body, shock absorption garnish, pillar garnish, roof side inner garnish, resin rib, side rail front spacer, side rail rear spacer, seat belt pretensioner, air bag sensor, arm (suspension, lower, hood hinge), suspension link, shock absorption bracket, fender bracket, inverter bracket, inverter module, hood inner panel, hood panel, cowl louver, cowl top outer front panel, cowl top outer panel, floor silencer, dump sheet, hood insulator, fender side panel protector, cowl insulator, cowl top ventilator looper, cylinder head cover, tire deflector, fender support, strut tower bar, mission center tunnel, floor tunnel, radio core support, luggage panel or luggage floor.

EXAMPLES

Concrete examples and comparative examples of the present invention will now be described, with the understanding that they are not limitative on the invention.

Methods for evaluating the properties of the composite yarn and continuous reinforcing fiber molded resin produced in the Examples and Comparative Examples will be described first.

(1) Tensile strength of composite yarn

Measurement was performed according to JIS3420, and the tensile strength was calculated.

In some cases, two different points are observed in the composite yarn tensile test, a break point for the continuous reinforcing fibers and a break point for the resin. The initially observed breaking strength of the continuous reinforcing fibers is most important, and this strength depends on the thickness of the continuous reinforcing fibers. Therefore, the value of the strength observed in the tensile test divided by the total cross-sectional area of the continuous reinforcing fibers, converted to a stress value, was recorded as the tensile strength.

The cross-sectional area of the continuous reinforcing fibers was calculated from the continuous reinforcing fiber fineness (dtex) and density. The fineness of the continuous reinforcing fibers was measured after removing the resin from the composite yarn. The same measurement was performed at 30 arbitrary locations, and the average was calculated.

$$\text{Cross-sectional area (mm}^2) = \text{Fineness (g/10,000 m)/density (g/cm}^3)/10{,}000$$

(2-2) Tensile strength and degree of strength exhibited by continuous reinforcing fiber molded resin

A test piece cut out to the shape shown in Fig. 1-12 using a precision cut saw (for Examples 6-1 to 6-7, Comparative Examples 6-1 and 6-2, Examples 7-1 to 7-4, Comparative Examples 7-1 to 7-3, Examples 8-1 to 8-3 and Comparative Examples 8-1 and 8-2, a test strip with a length of 70 mm, a width of 10 mm and a wall thickness of 3 mm was chucked with a spacing of 30 mm in the lengthwise direction) was measured for tensile strength using a Instron 100 kN universal testing machine at a speed of 5 mm/min, in an environment of 23°C, 50% RH. Vacuum drying was carried out before the tensile test.

The degree of strength exhibited was calculated by the following formula.

$$\text{Degree of strength exhibited (\%)} = \text{Tensile strength (MPa)}/(\text{starting glass strength (MPa)}$$
$$\times \text{Vf(\%)}/100 + \text{resin strength (MPa)} \times (100 - \text{Vf(\%)})/100)/100$$

(2) Total cross-sectional area of continuous reinforcing fibers A in composite yarn, occupied area B of continuous reinforcing fiber bundle, shape of region delineated by line connecting contact points between continuous reinforcing fibers and thermoplastic resin, and diameter I of composite yarn

The composite yarn was cut at an arbitrary location and the liquid epoxy resin was allowed to penetrate to the interior of the composite yarn. After curing the epoxy resin, the cured section was cut and precision-polished. A scanning electron microscope (SU8220 by Hitachi High-Technologies Corp.) was used for observation to obtain a backscattered electron image.

Image processing software was used to determine the total cross-sectional area of the continuous reinforcing fibers A, and the shape of the line connecting the contact points between the continuous reinforcing fibers and the thermoplastic resin. The area on the inside of the resin portion was used as the occupied area B of the continuous reinforcing fiber bundle. The average was calculated upon observing 30 cross-sections for each composite yarn. The diameter of the composite yarn (circle area equivalent diameter) I can be determined by first determining the area inside the outer periphery of the resin, dividing by $\pi$ and multiplying by 0.5, and then multiplying by 2. The same measurement was performed at 30 arbitrary locations, and the average was calculated.

(2-4) Method of confirming degree of adhesion (presence of adhesion) between continuous reinforcing fibers and thermoplastic resin covering

Scissors were used to cut the composite yarn at an arbitrary location. A nipper was used to form a slit in just the resin at a portion 1 cm from the cut location. Both sides of the slit location were held and pulled with both hands. The same test was conducted at 100 locations, and cases where the proportion of resin removed in a tube form exceeded 80% were judged to be non-adhering.

(3) Surface roughness of composite yarn

A VR-3200 One-shot 3D Profile Meter by Keyence Corp. was used for measurement. An arbitrary location of the composite yarn was cut to a size of about 2 cm, gripped with a clip and laid horizontally. Measurement was carried out using a 12x lens, with auto-focus in fine mode. A 100 $\mu$m portion of the center section of the yarn set horizontally in the lengthwise direction was measured in line roughness measuring mode, and after automatic gradient correction, the arithmetic mean roughness (Ra) was measured at 10 arbitrary locations. The same yarn was measured in the same manner at 50 locations, and the median was recorded as the surface roughness. A sample with a measuring length of 4000 $\mu$m was measured in the same manner for the long-range surface roughness. Tension can be applied to the yarn if it is not linear. In such cases, a yarn guiding device such as a bearing roller is set with its height parallel, at a spacing of 10 cm, and the yarn cut to an arbitrary length is applied. One end of the yarn is anchored while a weight is suspended from the other end. The weight of the weight used will differ depending on the yarn to be measured. The weight selected is the minimum weight at which the yarn becomes linear when suspending the weight.

(3-4) Eccentricity of composite yarn

The composite yarn was cut at an arbitrary location and the liquid epoxy resin was allowed to penetrate to the interior of the composite yarn. After curing the epoxy resin, the cured section was cut and precision-polished. A scanning electron microscope (SU8220 by Hitachi High-Technologies Corp.) was used for observation to obtain a backscattered electron image.

The reinforcing fiber portion, the thermoplastic resin portion and the epoxy resin portion were distinguished using image processing software, and after determining the area center of gravity of the entire composite yarn, and the area center of gravity of the inner portion of the thermoplastic resin, the distance between them was measured. The circle area-equivalent radius of the composite yarn was calculated. The value of the distance between the area centers of gravity divided by the circle area-equivalent radius, expressed as a percentage, was recorded as the eccentricity. The measurement was performed at 30 arbitrary locations, and the average was calculated.

(4) Fiber volume content (Vf) of composite yarn

The composite yarn was vacuum dried to remove the moisture, and the weight was measured. The resin was then removed, by a method suited for the properties of the continuous reinforcing fibers used, and the weight of the continuous reinforcing fibers was measured.

When the reinforcing fibers are glass fibers, an electric furnace may be used to burn off the resin at 650°C to remove it. When the reinforcing fibers are carbon fibers, thermal analysis is carried out beforehand and the resin is burned off after confirming the temperature at which the carbon fibers do not decompose. In order to confirm that the resin has completely decomposed, the weight is periodically measured and the weight is measured when no further weight reduction is observed. The weight of the resin and the weight of the reinforcing fibers, obtained by the measurement, are divided by the respective densities to determine the volume, and the fiber volume content is calculated.

(2-6) Fiber volume content in molded article

The molded article was used to determine the fiber volume content, by the same method as for the composite yarn.

(5) Method of measuring impregnation rate in molded article

After cutting the molded article to expose a cross-section, it was precision-polished until no irregularities were found in the resin or reinforcing fibers when observed under a scanning electron microscope (SEM). This was carried out while cooling with water so that the resin did not melt by the heat of friction.

The cross-section was observed using a SEM and photographed to allow distinction between the resin, reinforcing fibers and gaps, and then image processing software was used to measure the percentage of gaps, determining the impregnation rate by the following formula:

$$\text{Impregnation rate (\%)} = 100 - (\text{gap ratio\%}).$$

The measurement was performed at 30 arbitrary locations, and the average was calculated.

(5-3) [Method of measuring impregnation rate]

A cross-section was cut from the molded article and embedded in an epoxy resin, and it was then polished while taking care not to damage the continuous reinforcing fibers. Upon observation under a microscope, the areas occupied by the continuous reinforcing fiber bundle, synthetic resin and gaps were each determined from the image, and the gap area percentage with respect to the continuous reinforcing fiber bundle (total) area was determined by calculation using the following formula:

$$\text{Impregnation rate (\%)} = \{1 - (\text{gap area/continuous reinforcing fiber bundle area})\} \times 100.$$

(6) Melting point of thermoplastic resin

Using a DSC-60 by Shimadzu Corp., with a sample amount of approximately 1 mg, it was heated with atmospheric gas flowing at 30 mL/min and temperature increase of 10°C/min, from room temperature (25°C) to above the expected melting point, to melting, after which the molten resin was quenched with dry ice, and during reheating to above the melting point at a speed of 10°C/min, the melting point was recorded as the peak top temperature among the observed endothermic peaks. The melting point of each resin was measured for its starting material, when the starting material was known. When the starting material is unknown, appropriate means may be used for measurement after separation.

(4-9) Confirmation of microphase-separated structure of thermoplastic resin

After cutting using a microtome (Leica UC7), the sample was precision-polished. Electron staining was performed with phosphotungstic acid, and then a backscattered electron image was taken using a scanning electron microscope (SEM, SU8220 by Hitachi High-Technologies Corp.), at an acceleration voltage of 4 kV. The dyeing can be carried out with selection of an appropriate method depending on the type of resin.

(5-1) [Type and occupying ratio of each thermoplastic resin with two or more fiber-reinforced resins]

A cross-section of the continuous fiber-reinforced molded resin in the thickness direction (cross-section perpendicular to the lengthwise direction of the continuous reinforcing fibers) was cut out at each of 5 arbitrary locations, embedded in an epoxy resin, and polished while taking care that the continuous reinforcing fibers were not damaged.
A mapping image of the cross-section was taken using a laser Raman microscope (inViaQontor confocal Raman microscope, product of Renishaw Co.), and the types of resins of the fiber-reinforced resins were identified from the obtained image and spectrum. Each area was also calculated by image processing using imageJ, and the occupying ratio of the resin in the region of 1/10 of the radius of a single continuous reinforcing fiber from the end of the single continuous reinforcing fiber (the area ratio) was calculated. The area ratio for each resin occupying the region of 1/10 of the radius of the single continuous reinforcing fiber was calculated for 10 arbitrary continuous reinforcing fibers in the cross-section, and the average was calculated.

(5-2) [Method of measuring melting point and crystallization temperature during temperature decrease for thermoplastic resin]

Using a DSC-60 by Shimadzu Corp., with a sample amount of approximately 5 mg, a mixture of two or more thermoplastic resins, or each one separately, was heated with atmospheric gas flowing at 30 mL/min and temperature increase of 10°C/min, from room temperature (25°C) to above the expected melting point, to melting, after which the molten polyamide resin was cooled at 10°C/min, and the crystallization temperature was recorded as the peak top temperature among the observed exothermic peaks. Next, the temperature was raised again at a speed of 10°C/min to above the melting point, and the melting point was recorded as the peak top among the observed endothermic peaks.

(5-4) [Distribution of thermoplastic resin in resin regions other than boundary interface region of fiber-reinforced resin molded article]

The continuous fiber-reinforced molded resin was polished with a polishing machine (IS-POLISHER ISPP-1000 compact precision material fabrication system, Ikegami Seiki Co., Ltd.), with a force of 125 g/cm$^2$ on the polished surface. The polishing was carried out in the order: 10 minutes with #220 waterproof paper, 10 minutes with #1200 waterproof paper, 5 minutes with #2000 waterproof paper, 10 minutes with a 9 $\mu$m particle size silicon carbide film, 10 minutes with a 5 $\mu$m particle size alumina film, 5 minutes with a 3 $\mu$m particle size alumina film, 5 minutes with a 1 $\mu$m particle size alumina film and 5 minutes with colloidal silica having a particle size of 0.1 $\mu$m (BAIKALOX 0.1CR) using foam polyurethane buffing paper, with water being applied at approximately 7 mL/min for each polishing. The polished sample was subjected to electron staining by immersion for 18 hours in a 5 wt% aqueous solution of 12 tungsten(VI) phosphate n-hydrate, while taking care not to allow collapse of the polished surface. After drying, the distribution of the thermoplastic resin at 50 $\mu$m $\times$ 50 $\mu$m portions at 5 arbitrary locations was observed using a SEM (S-4700, Hitachi High-Technologies Corp.), and the area of each was calculated by image processing using imageJ. Based on the distribution it was assessed whether each specific resin was evenly dispersed or mixed in the resin regions other than the boundary interface region.

(5-5) [Measurement of bonding strength between reinforcing fibers and each thermoplastic resin]

The continuous fiber-reinforced molded resin was cut to a thickness of 30 $\mu$m as a cross-section perpendicular to the lengthwise direction of the continuous reinforcing fibers, and polished while taking care that the continuous reinforcing fibers were not damaged. Using the polished sample, the reinforcing fibers were extruded out using a nanoindenter (iMicro, Nanomechenics, Inc.) to measure the bonding strength between the reinforcing fibers and the thermoplastic resin. The assessment was "G" when the bonding strength between the reinforcing fibers and the resin (secondary resin) other than the resin with the highest occupying proportion of the entire resin region (primary resin), among the thermoplastic resins, was stronger than the bonding strength between the reinforcing fibers and the resin with the highest occupying proportion of the entire resin region (primary resin), and "P" when it was weaker.

(5-6) [Measurement of wettability and surface tension]

A single continuous reinforcing fiber was embedded in the thermoplastic resin melted on a hot plate that had been heated to 280°C, a 1 mm continuous reinforcing fiber was pulled at 1 mm/sec while observing it under a microscope, and the length to which the thermoplastic resin was pulled by the continuous fiber during that time was assessed. The wettability and surface tension were assessed as "G" when the length to which the resin (secondary resin) other than the resin with the highest occupying proportion of the entire resin region (primary resin), among the thermoplastic resins, was pulled by the reinforcing fibers was greater than the length to which the resin with the highest occupying proportion of the entire resin region (primary resin), among the thermoplastic resins, was pulled by the reinforcing fibers, and "P" when it was less.

(5-7) [Measurement of resin melt viscosity]

Measurement was performed using a twin-capillary rheometer (Rosand Precision) at 280°C, varying the shear rate to 100/s, 200/s, 400/s, 1000/s, 2000/s, 4000/s and 8000/s. For a shear rate of 4000/s, an assessment of "G" was assigned when the melt viscosity of the mixture of two or more thermoplastic resins was 4/5 to 5/4 times the viscosity of the resin with the highest occupying proportion of the entire resin region, among the two or more thermoplastic resins, and an assessment of "P" was assigned otherwise.

(5-8) [Method of measuring tensile stress strength]

A test strip with a length of 70 mm, a width of 10 mm and a wall thickness of 2 mm was cut out from the molded article, and the tensile stress (MPa) of the test piece was measured using an Instron universal testing machine at a speed of 5 mm/min, with chucking at a spacing of 30 mm in the lengthwise direction, in a thermostatic bath with an environment of 23°C, 50% RH, and 150°C, 50%.

(5-9) [Method of measuring flexural stress and flexural modulus]

A test strip with a length of 100 mm, a width of 10 mm and a wall thickness of 2 mm was cut out from the molded article, and a 3-point bending jig was used to measure the flexural stress (MPa) and flexural modulus (GPa) with an Instron universal testing machine, with the span set to 32 mm, with a speed of 1 mm/min and in an environment of 23°C, 50% RH.

[Method for producing woven fabric]

The thermoplastic resin coating-reinforcing fiber composite yarn obtained by this production method was used as warp yarn and weft yarn for weaving using a rapier loom (Dornier Rapier Weaving Machine P1 by Dornier), with an arbitrarily woven texture, basis weight and woven density, while adjusting the yarn tension and weaving speed.

[Woven fabric weaving speed test]

The thermoplastic resin coating-reinforcing fiber composite yarn obtained by this production method was used as warp yarn and weft yarn for weaving of a 600 g/m$^2$ woven fabric with a 4-4 twill weave, using a rapier loom (Dornier Rapier Weaving Machine P1 by Dornier), and the weaving speed was varied in 20 rpm units to determine the maximum weaving speed at which problems such as yarn breakage did not occur. Lack of problems was defined as requiring the equipment to be stopped no more than 3 times for adjustment during 1 hour of operation. For this Example, the upper limit was set to 340 rpm for operational safety.

[Knitted fabric knittability test]

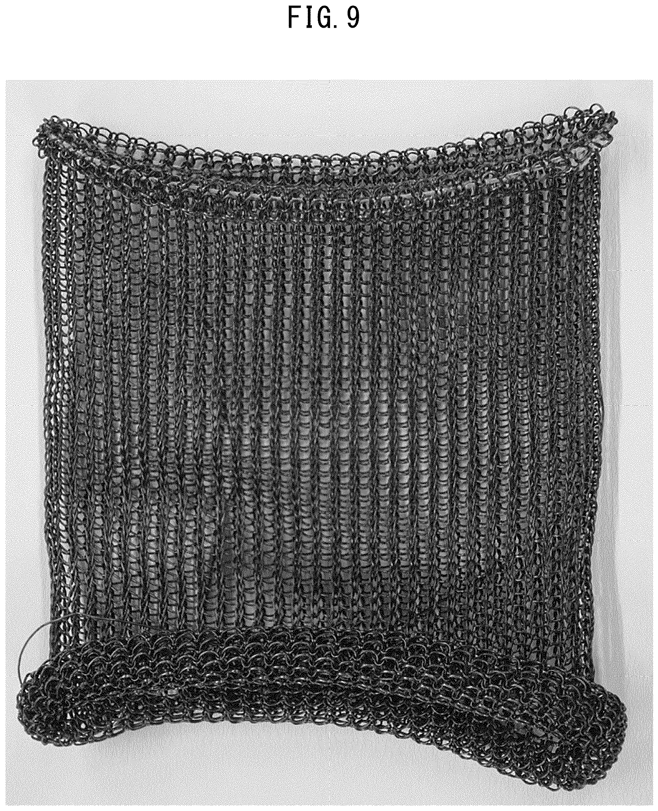

A thermoplastic resin coating-reinforcing fiber composite yarn obtained by the production method described above was used for knitting of a tubular fabric (knitted fabric) having a circumference of 300 mm and a length of 200 mm using a flat knitting machine (SIR123 by Shima Seiki Mfg., Ltd.) with a 5-gauge needle, at a knitting speed of 0.6 m/sec, and the presence of any problems such as yarn breakage was assessed. Lack of problems was defined as requiring the equipment to be stopped no more than 1 time for adjustment during continuous knitting of 10 fabrics. Fig. 9 shows the outer appearance of the tubular knitted fabric.

[Woven fabric bending test]

A test piece with a length of 250 mm, a width of 20 mm or a length of 250 mm and a width of 10 mm, was cut out from the woven fabric according to KES, and a Pure Bending Tester (KES-FB2-A by Kato Tech Corp.) was used to measure the flexural rigidity B and bending hysteresis 2HB in an environment of 23°C, 50% RH. The measurement was performed at 30 arbitrary locations, and the average was calculated.

[Woven fabric compression test]

A test piece with a length of 100 mm and a width of 100 mm was cut out from the woven fabric according to KES, and a compression tester (KES-FB3-A by Kato Tech Corp.) was used to measure the compression rigidity LC, compression energy WC, recoverability RC, thickness T0 under 0.5 kgf/cm$^2$ pressure and thickness TM under 50 kgf/cm$^2$ maximum pressure, in an environment of 23°C, 50% RH. The measurement was performed at 30 arbitrary locations, and the average was calculated.

[Method of measuring woven fabric crimp rate]

A 500 mm portion of the woven fabric was measured using a gauge parallel to the weft yarn, marking locations at 0 mm to 500 mm, and the warp yarn was extracted from the woven fabric at the marked locations. The extracted warp yarn was suspended by a weight attached to the bottom edge of the yarn without the yarn touching the floor. The gauge was placed horizontal without contacting the suspended yarn, and the length between markers was measured. The crimp rate was determined by the following formula:

$$\text{Crimp (\%)} = (L - L_0)/L_0 * 100$$

where $L_0$ is the length of the woven fabric and L is the length of the yarn after attachment of the weight. The measurement was performed at 30 arbitrary locations, and the average was calculated. The crimp rate of the weft yarn was determined in the same manner. The weight of the weight used will differ depending on the yarn to be measured. The weight selected is the minimum weight at which the yarn becomes linear when suspending the weight.

[Method of measuring woven fabric basis weight]

A 100 mm-long, 100 mm-wide piece was cut out from the woven fabric and the weight per unit area (m$^2$) was determined. The dimensions of the woven fabric were measured using a gauge, and the weight was measured using an electronic scale (GF200 by AID). The measurement was performed at 30 arbitrary locations of the woven fabric, and the average was calculated.

[Continuous reinforcing fiber molded resin production method 1: Short-period molding]

The molding machine used was a hydraulic molding machine (Shoji Co.) with a maximum mold clamping force of 50 tons. A die was prepared to obtain a tabular continuous reinforcing fiber molded resin (200 mm length, 100 mm width, 2 mm wall thickness). A thermocouple was inserted into the cavity side of the die.
Several fabrics cut to a length of 195 mm and a width of 95 mm were prepared, and set in a die.
The die was set in a molding machine that had been preheated to 330°C, and pressed at 5 MPa. While confirming the temperature of the die, the pressure was released at the point 50 seconds after the moment it reached the melting point of the resin, and the die was moved into a cooling press and cooled. The die was kept at above the melting point for 60 seconds. After confirming that the die had been cooled to 50°C or lower, the die was removed from the cooling press and the die was opened to remove the molded article.

[Continuous reinforcing fiber molded resin production method 2: Long-period molding]

The molding machine used was a hydraulic molding machine (Shoji Co.) with a maximum mold clamping force of 50 tons. A die was prepared to obtain a tabular continuous reinforcing fiber molded resin (200 mm length, 100 mm width, 2 mm wall thickness). A thermocouple was inserted into the cavity side of the die.
Several fabrics cut to a length of 195 mm and a width of 95 mm were prepared, and set in a die.
The die was set in a molding machine that had been preheated to 300°C, and pressed at 5 MPa. It took 5 minutes to reach the melting point. After 15 minutes, the pressure was released and the die was moved to a cooling press for cooling. After confirming that the die had been cooled to 50°C or lower, the die was removed from the cooling press and the die was opened to remove the molded article 2.

[Continuous reinforcing fiber molded resin production method 3: Long-period resin flow molding]

The molding machine used was an S100 V-8A by Toshiba Machine Co., Ltd., with a maximum mold clamping force of 300 tons.

A die was prepared to obtain a box-shaped continuous reinforcing fiber molded resin (200 mm length, 200 mm width, 120 mm height, 3 mm wall thickness).

Eight woven fabrics cut to a shape matching the die were prepared.

A die preheated to 300°C was opened, the woven fabric was set in a predetermined location of the die, and the die was clamped with a mold clamping force of 240 MPa for 40 minutes of compression molding. After cooling, the die was removed from the cooling press and the die was opened to remove the molded article 3.

The composite yarn starting materials produced for the Examples, Comparative Examples and Reference Examples will now be described.

The following resin was prepared as a thermoplastic resin for covering of the continuous reinforcing fibers.

[Covering resin]

- PA66 (1402S-011 by Asahi Kasei Corp.)
  PA66 has a relative viscosity of 45 and a moisture content of 0.09%, and 0.03 part by mass of copper acetate (monohydrate), 0.50 part by mass of potassium iodide, 0.01 part by mass of manganese(II) lactate, 0.12 part by mass of AlSt and 0.06 part by mass of PEG400 were added with respect to 99.29 parts by mass of the PA66. The melting point of the resin was 265°C, and the tensile strength was 80 MPa.
- Copolymer PA6/12 (Grilon CF6S Nat by EMS-Chemie, Japan)
  The melting point of the resin was 131°C, and the tensile strength was 30 MPa.

[Resin (pre)compounding]

Using a twin-screw extruder (TEM26SS), PA66 and copolymer PA6/12 were compounded in a weight ratio of 8:1. The rotational speed of the extruder was 200 rpm, the throughput was 15 kg/hr and the extrusion temperature was 270°C. The system interior was brought to a vacuum through a vacuum vent prior to using the die.

[Method of measuring yarn tension]

The continuous reinforcing fibers were cut before hole A, and the continuous reinforcing fibers were connected to a ZTS-50 digital force gauge by Imada Co., Ltd. The digital force gauge was moved horizontal relative to the continuous reinforcing fibers at a speed of 15 cm/sec for a period of 5 seconds, the tension was measured at an interval of 10 times/sec, and the average value was calculated. The measurement was repeated 5 times, and the average value was calculated.

[Method of measuring yarn diameter]

Two filament diameter meters (LS-906M by Keyence Corp.) were set just before the winder, as 2 axes at an angle of 90°. The filament diameter was measured for 15 minutes during operation for 15 minutes, at an interval of 16 times/sec, and the average value was calculated. The measurement was repeated for each paper pirn replaced, and the average value was calculated.

[Method of measuring resin pressure]

A resin temperature/pressure gauge (CZ-200P, product of RKC Instrument, Inc.) was set at the joint section of the die and the extruder heating cylinder. The resin pressure was measured for 15 minutes of operation at an interval of 10 times/sec, and the average value was calculated. The measurement was repeated for each paper pirn replaced, and the average value was calculated.

[Continuous reinforcing fibers]

The continuous reinforcing fibers (A) used were glass fibers in a filament number of 400, with the following sizing agent (a) at 1.0 mass%, and with a fineness of 685 dtex and a mean monofilament diameter of 9.2 $\mu$m. The winding form was a yarn, and the tensile strength was 2025 MPa.

The continuous reinforcing fibers (B) used were glass fibers in a filament number of 800, with the following sizing agent (a) at 1.0 mass%, and with a fineness of 2900 dtex and a mean monofilament diameter of 13.5 $\mu$m. The winding form was roving. The tensile strength was 1673 MPa.

The continuous reinforcing fibers (C) used were glass fibers in a filament number of 1200, with the following sizing agent (a) at 1.0 mass%, and with a fineness of 12,000 dtex and a mean monofilament diameter of 17 $\mu$m. The winding form was roving.

[Composition of sizing agent (a) (as solid content)]

- Silane coupling agent: 0.6 mass% $\gamma$-aminopropyltriethoxysilane [trade name: KBE-903, product of Shin-Etsu Chemical Co., Ltd.]
- Lubricating agent: 0.1 mass% wax [trade name: carnauba wax, product of S. Kato & Co.]
- Binding agent: 5 mass% acrylic acid/maleic acid copolymer salt [trade name: AQUALIC TL, product of Nippon Shokubai Co., Ltd.]

[Composite yarn production apparatus and method for producing the composite yarn]

Winder and extruder

A yarn coating apparatus (Trawon extruder + SAHM winder) by Itochu SysTech Corp. was used, having the structure shown in Figs. 1-10 and 1-11 was used. When a yarn form was used, it was fed out by direct feeding with the bobbin anchored to the accessory stand, or when a roving form was used, it was set on a special roving stand and fed out upward inside it. After feeding out the yarn, a plurality of continuous reinforcing fiber guiding devices were used to guide the yarn, after which fine adjustment was made with the continuous reinforcing fiber guiding device immediately before the die so that the yarn passed through the centers of the die hole A and hole B. A plurality of continuous reinforcing fiber guiding devices were set immediately after contact with the cooling water, immediately after leaving the cooler and immediately before the winder, in a manner such that the yarn was linear from the continuous reinforcing fiber guiding device immediately before the die, up until the die, cooling and winding. The extruder was set at an angle of 90° with respect to the yarn, and a die with a diaphragm designed so that the portion of contact with the continuous reinforcing fibers was smaller than the resin introducing unit, was used in such a manner that the melted resin and the continuous reinforcing fibers contacted in a state of slight pressure inside the die, with fine adjustment of the extrusion speed of the extruder. Cooling was performed using a water bath, blowing out the moisture with air after cooling. A tension control device was situated between the bobbin and the continuous reinforcing fiber guiding device and before the continuous reinforcing fiber guiding device immediately before the die, for stabilization of the tension and densification of the reinforcing fibers. The tension control device used was a leaf spring system, the continuous reinforcing fiber guiding device used was a circular loop guide, and the material for the section of contact wherein the continuous reinforcing fibers and the continuous reinforcing fiber guiding device and tension control device was YM-85DP by Yuasa Yarn Guide Engineering Co., Ltd. Before operation, the tension of the tension control device was adjusted using a digital force gauge (ZTS-50 by Imada Co., Ltd.).

[Example 1-1]

Composite yarn was fabricated under the following conditions.
For this example, a filament diameter meter and resin temperature/pressure gauge were not used.

[Materials]

[Continuous reinforcing fibers]

Continuous reinforcing fibers (A)

[Thermoplastic resin (covering resin)]

PA66 (1402S-011 by Asahi Kasei Corp.)

[Covering conditions]

Glass fiber bundle count: 3
Inner diameter of hole A: 0.60 mm
Inner diameter of hole B: 0.60 mm
Distance between holes AB: 2.0 mm
Resin extrusion speed: 40 rpm
Take-up speed: 500 m/min
Die temperature (temperature at cylinder exit and holes A and B): 300°C
Preset temperature of extruder cylinder: 300°C
Yarn tension: 0.2 N

[Operation procedure]

After passing the continuous reinforcing fibers through hole A and hole B, the winder alone was operated at a take-up speed of 50 m/min, without running the resin feeding unit. After confirming normal take-up, the thermoplastic resin material was loaded into the hopper of the resin feeding unit and operation was initiated at a resin extrusion speed of 25 rpm. Covering of the continuous reinforcing fibers with the resin was confirmed, and then the cooling water valve of the water bath was opened and forced cooling was initiated. The take-up speed was then increased at an increase rate of 200 m/min, up to the take-up speed specified by the covering conditions. The resin extrusion speed was increased to the specified covering conditions while adjusting the resin extrusion speed to avoid exposure of the continuous reinforcing fibers. The thermoplastic resin coating-reinforcing fiber composite yarn was wound up onto a paper pirn, exchanging the paper pirn every 10,000 m.

When continuous operation for 50,000 m was possible without breakage of the continuous reinforcing fibers, the take-up speed was increased while adjusting the resin extrusion speed, and the productivity (operable speed) was confirmed. The operable speed was either the speed at which the continuous reinforcing fibers were exposed even with adjustment of the extrusion speed, or the maximum take-up speed at which yarn breakage occurred. Composite yarns were also fabricated in the same manner for Examples 1-2 to 1-7.

The obtained composite yarns were used to produce molded articles as described above. Molded articles were also fabricated in the same manner for the following Examples and Comparative Examples.

[Example 1-2]

[Covering conditions]

A composite yarn was fabricated in the same manner as Example 1-1, except that the inner diameter of hole A was 0.55 mm.

[Example 1-3]

[Covering conditions]

A composite yarn was fabricated in the same manner as Example 1-2, except that the yarn tension was 1.0 N.

[Example 1-4]

[Covering conditions]

A composite yarn was fabricated in the same manner as Example 1-3, except that the die temperature was 280°C and the cylinder temperature was 280°C.

[Example 1-5]

[Covering conditions]

A composite yarn was fabricated in the same manner as Example 1-4, except that the resin extrusion speed was 50 rpm.

[Example 1-6]

[Covering conditions]

A composite yarn was fabricated in the same manner as Example 1-5, except that the shape of the continuous reinforcing fiber guiding device was changed to a U-shaped groove bearing roller, the material at the contact parts between the continuous reinforcing fibers and the continuous reinforcing fiber guiding device and tension control device was changed to YM-85C by Yuasa Yarn Guide Engineering Co., Ltd., and the dynamic friction force was reduced.

[Example 1-7]

Composite yarn was fabricated under the following conditions.

[Materials]

[Continuous reinforcing fibers]

Continuous reinforcing fibers (B)

[Thermoplastic resin (covering resin)]

PA66 (1402S-011 by Asahi Kasei Corp.)

[Covering conditions]

Glass fiber bundle count: 1
Nozzle hole A inner diameter: 0.55 mm
Nozzle hole B inner diameter: 0.70 mm
Distance between holes AB: 2.0 mm
Resin extrusion speed: 79 rpm
Take-up speed: 400 m/min
Die temperature: 280°C
Cylinder temperature: 280°C
Yarn tension: 1.7 N

The shape of the continuous reinforcing fiber guiding device was changed to an H-groove bearing roller, the material at the contact parts between the continuous reinforcing fibers and the continuous reinforcing fiber guiding device and tension control device was changed to YM-85C by Yuasa Yarn Guide Engineering Co., Ltd., and the dynamic friction force was reduced.

[Comparative Example 1-1]

A composite yarn was fabricated according to Example 1-1 of PTL 3 (Japanese Unexamined Patent Publication HEI No. 8-336879), with a nozzle hole diameter of 0.9 mm, two continuous reinforcing fibers (A), a die temperature of 290°C and a cylinder temperature of 250°C. The yarn speed was 200 m/min, and the throughput was adjusted so that the volume ratio of the continuous reinforcing fibers and resin was 40:60.

[Comparative Example 1-2]

A coating machine by AIKI was used. The nozzle hole diameter used was 0.9 mm. The two continuous reinforcing fibers (A) were fixed in a diagonal manner. Yarn guides were set immediately before the die, immediately after contact with the cooling water, immediately after leaving the cooler and immediately before the winder, in a manner such that the yarn was linear from feeding of the yarn, up until the die, cooling and winding. The extruder was set at an angle of 90° with respect to the yarn. Cooling was performed using a water bath, blowing out the moisture with air after cooling. The yarn speed was 200 m/min, and was controlled by the winder. Extrusion was carried out at 280 to 295°C. A die with a diaphragm designed so that the portion of contact with the continuous reinforcing fibers was smaller than the resin introducing unit, was used in such a manner that the melted resin and the continuous reinforcing fibers contacted in a state of slight pressure inside the die, with fine adjustment of the extrusion speed of the extruder. No tension control device was used for this example.

Table 1-1 shows the physical properties of the composite yarns obtained in the Examples and Comparative Examples, and the tensile strengths and impregnation rates of molded articles produced using the composite yarns.

[Table 1]

Table 1-1

| | Example 1-1 | Example 1-2 | Example 1-3 | Example 1-4 | Example 1-5 | Example 1-6 | Example 1-7 | Comp. Example 1-1 | Comp. Example 1-2 |
|---|---|---|---|---|---|---|---|---|---|
| Cross-sectional area of hole A/ closest packing cross-sectional area of reinforcing fibers × 100 (%) | 336 | 282 | 282 | 282 | 282 | 282 | 203 | 1085 | 1085 |
| Cross-sectional area of hole B/ cross-sectional area of hole A × 100 (%) | 100 | 119 | 119 | 119 | 119 | 119 | 162 | - | - |
| Yarn breakage during operation | None | None | None | None | None | None | None | Yarn breakage at 2000 m | Yarn breakage at 4000 m |
| Surface exposure of reinforcing fibers | Essentially none | Essentially none | Essentially none | Essentially none | Essentially none | Essentially none | Essentially none | Some | Essentially none |
| Productivity (operable speed) | 600 m/min | 500 m/min | 700 m/min | 700 m/min | 700 m/min | 800 m/min | 450 m/min | 200 m/min | 200 m/min |
| Woven fabric weaving speed test | - | - | - | - | - | 340 RPM | 320 RPM | Poor | 220 RPM |
| Knitted fabric knittability test | - | - | - | - | - | Good | Good | Poor | Poor |
| Fiber content | 44% | 44% | 44% | 46% | 40% | 40% | 40% | 32% | 34% |
| Fiber content variation | ±2 | ±2 | ±2 | ±2 | ±2% | ±1 % | ±1 % | - | - |
| Surface roughness | 0.18 | 0.15 | 0.09 | 0.18 | 0.06 | 0.07 | 0.11 | 0.40 | 0.31 |
| Long-range surface roughness | 4.8 | 4.1 | 3.6 | 3.9 | 3.4 | 3.2 | 3.3 | 8.2 | 6.0 |
| Compactness index | 0.51 | 0.53 | 0.55 | 0.53 | 0.56 | 0.57 | 0.54 | 0.41 | 0.43 |
| Tensile strength of composite yarn | 1840 | 1832 | 1870 | 1850 | 1870 | 1975 | 1601 | 1926 | 1970 |
| Impregnation rate of molded article | 97.1 | 97.5 | 97.8 | 97.7 | 97.9 | 98.3 | 98.0 | 96.0 | 96.4 |

EP 3 763 860 A1

44

In Examples 1-1 to 1-7, the continuous reinforcing fibers were essentially covered by the resin, with no visible exposure of the reinforcing fibers. Continuous operation for 50,000 m was also completed without yarn breakage.

In Example 1-2, the inner diameters of the nozzle holes A, B were changed to match the reinforcing fibers. This increased the compactness index compared to Example 1-1.

Appropriate tension was applied to the reinforcing fibers for Example 1-3. The surface roughness, compactness index and productivity were thereby increased compared to Example 1-2.

In Example 1-4, the resin temperature was lowered to change the viscosity of the resin. The fiber content was thereby increased compared to Example 1-3, but because the resin tended to be insufficient, the surface roughness and compactness index decreased.

In Example 1-5, the throughput of the resin was adjusted. The surface roughness and compactness index were thereby increased compared to Example 1-4.

In Example 1-6, the shape of the continuous reinforcing fiber guiding device and the material of the contact parts between the continuous reinforcing fibers and continuous reinforcing fiber guiding device and the tension control device were changed. The fiber content variation and productivity were thereby increased compared to Example 1-5.

In Example 1-7, the continuous reinforcing fibers were essentially covered by the resin, with no visible exposure of the reinforcing fibers. Continuous operation for 50,000 m was also completed without yarn breakage.

In Comparative Example 1-1, covering was uneven and exposure of the reinforcing fibers was observed. Yarn breakage also occurred at an operating length of 2000 m, causing operation to be terminated.

In Comparative Example 1-2, the continuous reinforcing fibers were essentially covered by the resin and no exposure of the reinforcing fibers was observed, but yarn breakage occurred at an operating length of 4,000 m, causing operation to be terminated.

In Examples 1-6 and 1-7, the surface roughness was low and the yarn manageability was excellent, and therefore high-speed weaving was possible, while knitting of a knitted fabric was also possible without stopping even once. Comparative Examples 1-1 and 1-2, however, despite having a structure with the periphery of reinforcing fibers covered by a thermoplastic resin, exhibited a rough surface, making it impossible to carry out high-speed weaving as in Examples 1-6 and 1-7. In addition, the reinforcing fibers became caught during weaving or knitting and the covering resin layer was torn, exposing the interior.

[Example 1-10-1]

Composite yarn was fabricated under the following conditions.

For this example, a filament diameter meter and resin temperature/pressure gauge were used. The tension control device used was a powder clutch system by Asahi Kasei Engineering Corporation and the continuous reinforcing fiber guiding device was an H-shaped groove bearing roller, while the material used for the contact parts between the continuous reinforcing fibers and the continuous reinforcing fiber guiding device and tension control device was YM-85C by Yuasa Yarn Guide Engineering Co., Ltd.

[Materials]

[Continuous reinforcing fibers]

Continuous reinforcing fibers (B)

[Thermoplastic resin (covering resin)]

PA66 (1402S-011 by Asahi Kasei Corp.)

[Covering conditions]

Glass fiber bundle count: 1
Inner diameter of hole A: 0.55 mm
Inner diameter of hole B: 0.65 mm
Distance between holes AB: 2.0 mm
Drawdown ratio: ≤10%
Take-up speed: 200 m/min
Die temperature (temperature at cylinder exit and holes A and B): 290°C

Preset temperature of extruder cylinder: 290°C
Yarn tension: 5.0 N

After passing the continuous reinforcing fibers through hole A and hole B, the winder alone was operated at a take-up speed of 50 m/min, without running the resin feeding unit. After confirming normal take-up, the thermoplastic resin material was loaded into the hopper of the resin feeding unit and operation was initiated at a resin extrusion speed of 25 rpm. Covering of the continuous reinforcing fibers with the resin was confirmed, and then the cooling water valve of the water bath was opened and forced cooling was initiated. The take-up speed was then increased at an increase rate of 200 m/min, up to the take-up speed specified by the covering conditions. The resin extrusion speed was adjusted during this time to avoid exposure of the continuous reinforcing fibers. The resin extrusion speed was afterwards adjusted to the drawdown ratio specified by the covering conditions, and continuous operation was carried out for 100,000 m. The thermoplastic resin coating-reinforcing fiber composite yarn was wound up onto a paper pirn, exchanging the paper pirn every 10,000 m. When breakage of the continuous reinforcing fiber material occurred, operation was paused and the continuous reinforcing fibers were replaced with a fresh bobbin. Replacement was carried out with a pause time of no longer than 10 minutes. Composite yarns were also fabricated in the same manner for Examples 1-10-1 to 1-10-11.
For Examples 1-20-1 to 1-20-12 below, the obtained composite yarns were used to fabricate woven fabrics. The obtained woven fabrics were also used to fabricate molded articles.

[Example 1-10-2]

[Covering conditions]

Temperature at joint between die and extruder heating cylinder: 290°C
A composite yarn was fabricated in the same manner as Example 1-10-1, except for adding a modification whereby the joint between the die and the extruder heating cylinder was temperature-controlled independently for the die and the extruder heating cylinder.

[Example 1-10-3]

[Covering conditions]

A composite yarn was fabricated in the same manner as Example 1-10-2, except that the tension was 20 N.

[Example 1-10-4]

[Covering conditions]

A composite yarn was fabricated in the same manner as Example 1-10-2, except that the take-up speed was 400 m/min.

[Example 1-10-5]

Composite yarn was fabricated under the following conditions.

[Materials]

[Continuous reinforcing fibers]

Continuous reinforcing fibers (C)

[Thermoplastic resin (covering resin)]

PA66 (1402S-011 by Asahi Kasei Corp.)

[Covering conditions]

Glass fiber bundle count: 1
Nozzle hole An inner diameter: 1.20 mm
Nozzle hole B inner diameter: 1.30 mm
Distance between holes AB: 2.0 mm
Drawdown ratio: ≤10%
Take-up speed: 100 m/min
Die temperature: 290°C
Cylinder temperature: 290°C
Temperature at joint between die and extruder heating cylinder: 290°C
Yarn tension: 7.5 N

[Example 1-10-6]

Composite yarn was fabricated under the following conditions.

[Materials]

[Continuous reinforcing fibers]

Continuous reinforcing fibers (B)

[Thermoplastic resin (covering resin)]

PE (Santech J240 by Asahi Kasei Corp.)

[Covering conditions]

Glass fiber bundle count: 1
Inner diameter of hole A: 0.55 mm
Inner diameter of hole B: 0.65 mm
Distance between holes AB: 2.0 mm
Drawdown ratio: ≤10%
Take-up speed: 200 m/min
Die temperature: 160°C
Cylinder temperature: 160°C
Temperature at joint between die and extruder heating cylinder: 160°C
Yarn tension: 5.0 N

[Example 1-10-7]

Composite yarn was fabricated under the following conditions.

[Materials]

[Continuous reinforcing fibers]

Continuous reinforcing fibers (B)

[Thermoplastic resin (covering resin)]

PP (J708UG by Prime Polymer Co., Ltd.)

[Covering conditions]

Glass fiber bundle count: 1
Inner diameter of hole A: 0.55 mm
Inner diameter of hole B: 0.70 mm
Distance between holes AB: 2.0 mm
Drawdown ratio: ≤10%
Take-up speed: 200 m/min
Die temperature: 190°C
Cylinder temperature: 190°C
Temperature at joint between die and extruder heating cylinder: 190°C
Yarn tension: 5.0 N

[Example 1-10-8]

Composite yarn was fabricated under the following conditions.

[Materials]

[Continuous reinforcing fibers]

Continuous reinforcing fibers (B)

[Thermoplastic resin (covering resin)]

ABS (STYLAC 190F by Asahi Kasei Corp.)

[Covering conditions]

Glass fiber bundle count: 1
Inner diameter of hole A: 0.55 mm
Inner diameter of hole B: 0.70 mm
Distance between holes AB: 2.0 mm
Drawdown ratio: ≤10%
Take-up speed: 200 m/min
Die temperature: 230°C
Cylinder temperature: 230°C
Temperature at joint between die and extruder heating cylinder: 230°C
Yarn tension: 5.0 N

[Example 1-10-9]

Composite yarn was fabricated under the following conditions.

[Materials]

[Continuous reinforcing fibers]

Continuous reinforcing fibers (B)

[Thermoplastic resin (covering resin)]

Modified PPE (XYRON 500H by Asahi Kasei Corp.)

[Covering conditions]

Glass fiber bundle count: 1
Inner diameter of hole A: 0.55 mm
Inner diameter of hole B: 0.70 mm
Distance between holes AB: 2.0 mm
Drawdown ratio: ≤10%
Take-up speed: 200 m/min
Die temperature: 290°C
Cylinder temperature: 290°C
Temperature at joint between die and extruder heating cylinder: 290°C
Yarn tension: 5.0 N

[Example 1-10-10]

Composite yarn was fabricated under the following conditions.

[Materials]

[Continuous reinforcing fibers]

Carbon fibers (TAIRYFIL T-C33 1.5k by Formosa Plastics)

[Thermoplastic resin (covering resin)]

PA66 (1402S-011 by Asahi Kasei Corp.)

[Covering conditions]

Fiber bundle count: 1
Inner diameter of hole A: 0.50 mm
Inner diameter of hole B: 0.60 mm
Distance between holes AB: 2.0 mm
Drawdown ratio: ≤10%
Take-up speed: 200 m/min
Die temperature: 290°C
Cylinder temperature: 290°C
Temperature at joint between die and extruder heating cylinder: 290°C
Yarn tension: 5.0 N

[Example 1-10-11]

Composite yarn was fabricated under the following conditions.
Using a coating machine by Rai Hsing Plastics Machinery Works, a 0.50 mm nozzle was attached to the entrance end of the die while a 0.70 mm nozzle was attached to the exit end of the die. Two rolls of continuous reinforcing fibers (A) were anchored to the apparatus-equipped stand and each yarn was passed through all of the yarn guides of the apparatus, after which the yarn was wound up onto a winder. Cooling was carried out using a water bath, the temperature of the water bath being set to 20°C, and the water was blown off with air after cooling. The yarn speed was 200 m/min, and was controlled by the winder. Extrusion was carried out at 290°C, with fine adjustment of the extrusion speed of the extruder while confirming the filament diameter using an IG-010 CCD-type digital laser sensor by Keyence Corp., set immediately before the winder, for a drawdown ratio of 50% or higher. For this Example, a plate spring-type tension control device was set between the stand and the die, with adjustment to a yarn tension of 0.5 N. Two continuous reinforcing fibers (A) were simultaneously run to fabricate two sets of 8,000 m composite yarns.
The production conditions and physical properties of the composite yarns obtained in Example 1-10-1 to 1-10-11 are shown in Table 1-2, and the physical properties of woven fabrics woven using the composite yarns are shown in Table 1-3.

[Table 2]

Table 1-2

| | Example | Example | Example | Example | Example | Example | Example | Example | Example | Example | Example |
|---|---|---|---|---|---|---|---|---|---|---|---|
| | 1-10-1 | 1-10-2 | 1-10-3 | 1-10-4 | 1-10-5 | 1-10-6 | 1-10-7 | 1-10-8 | 1-10-9 | 1-10-10 | 1-10-11 |
| Cross-sectional area of hole A/ closest packing cross-sectional area of reinforcing fibers × 100 (%) | 203 | 203 | 203 | 203 | 226 | 203 | 203 | 203 | 203 | 308 | 203 |
| Cross-sectional area of hole B/ cross-sectional area of hole A × 100 (%) | 140 | 140 | 140 | 140 | 117 | 140 | 162 | 162 | 162 | 144 | 196 |
| Temperature control method for joint between die and extruder heating cylinder | Same control as for die | Indepen-dent control | Indepen-dent control | Indepen-dent control | Indepen-dent control | Indepen-dent control | Indepen-dent control | Indepen-dent control | Indepen-dent control | Indepen-dent control | Indepen-dent control |
| Filament diameter | 0.644 | 0.644 | 0.647 | 0.633 | 1.289 | 0.647 | 0.692 | 0.695 | 0.696 | 0.588 | 0.57 |
| Drawdown ratio | 2.9% | 2.9% | 1.4% | 8.4% | 2.8% | 1.4% | 3.4% | 2.1% | 1.7% | 5.4% | 60.8% |
| Tension/ fineness (N/tex) | 0.017 | 0.017 | 0.069 | 0.017 | 0.006 | 0.017 | 0.017 | 0.017 | 0.017 | 0.050 | 0.007 |
| Resin pressure (MPa) | 1.7 | 1.7 | 1.4 | 1.4 | 2.5 | 6.7 | 5.0 | 4.8 | 7.9 | 1.8 | - |
| Yarn breakage during operation | None | None | None | None | None | None | None | None | None | None | None |

| | Example | Example | Example | Example | Example | Example | Example | Example | Example | Example | Example |
|---|---|---|---|---|---|---|---|---|---|---|---|
| | 1-10-1 | 1-10-2 | 1-10-3 | 1-10-4 | 1-10-5 | 1-10-6 | 1-10-7 | 1-10-8 | 1-10-9 | 1-10-10 | 1-10-11 |
| Surface exposure of reinforcing fibers | Essentially none | Essentially none | Essentially none | Essentially none | Essentially none | Essentially none | Essentially none | Essentially none | Essentially none | Essentially none | Essentially none |
| Woven fabric weaving speed test | 340 RPM | 340 RPM | 340 RPM | 340 RPM | - | - | - | - | - | - | - |
| Knitted fabric knittability test | Good | Good | Good | Good | - | - | - | - | - | - | - |
| Fiber content | 47% | 47% | 47% | 47% | - | - | - | - | - | - | - |
| Fiber content variation | ±5 | ±2 | ±1% | ±1% | - | - | - | - | - | - | - |
| Surface roughness | 0.14 | 0.12 | 0.11 | 0.13 | 0.14 | 0.14 | 0.13 | 0.11 | 0.09 | 0.09 | 0.23 |
| Long-range surface roughness | 3.2 | 2.9 | 2.5 | 2.7 | 2.9 | 2.3 | 2.9 | 2.1 | 3.4 | 3.0 | 3.4 |
| Compactness index | 0.61 | 0.62 | 0.61 | 0.63 | 0.63 | 0.68 | 0.65 | 0.48 | 0.59 | 0.58 | 0.55 |
| Impregnation rate of molded article | 99.6% | 99.7% | 99.8% | 99.7% | 99.8% | 98.8% | 99.7% | 99.1% | 98.9% | 99.9% | 97.9% |

EP 3 763 860 A1

51

[Table 3]

[Table 3]

Table 1-3

| | | Example 1-20-1 | Example 1-20-2 | Example 1-20-3 | Example 1-20-4 | Example 1-20-5 | Example 1-20-6 | Example 1-20-7 | Example 1-20-8 | Example 1-20-9 | Example 1-20-10 | Example 1-20-11 | Example 1-20-12 |
|---|---|---|---|---|---|---|---|---|---|---|---|---|---|
| Yarn used | | Example 1-7 | Example 1-7 | Example 1-7 | Example 1-7 | Example 1-7 | Example 1-7 | Example 1-10-2 | Example 1-10-2 | Example 1-10-2 | Example 1-10-2 | Example 1-10-2 | Example 1-10-2 |
| Woven texture | | 2-2 Twill weave | 4-4 Twill weave | 3-Float, 8-harness satin weave | 2-2 Mat weave | 4-4 Mat weave | 3-Float, 8-harness satin weave | 2-2 Mat weave | 2-2 Twill weave | 4-4 Mat weave | 3-Float, 8-harness satin weave | 5-Float, 8-harness satin weave | 4-4 Mat weave |
| Warp varn (threads/inch) | | 15 | 15 | 15 | 15 | 15 | 15 | 15 | 15 | 15 | 20 | 20 | 20 |
| Weft yarn (threads/inch) | | 15 | 15 | 15 | 15 | 15 | 15 | 15 | 15 | 15 | 20 | 20 | 20 |
| Basis weight (g/m) | | 613 | 596 | 604 | 595 | 579 | 464 | 532 | 549 | 524 | 705 | 705 | 681 |
| Crimp rate | Warp | 3.93 | 2.27 | 4.27 | 4.27 | 0.47 | 4.87 | 2.20 | 3.20 | 0.47 | 2.27 | 1.80 | 1.27 |
| | Weft | 1.53 | 2.13 | 1.47 | 1.47 | 0.60 | 0.33 | 1.80 | 1.13 | 0.60 | 1.67 | 1.73 | 1.67 |
| Compres-sion test | LC: Compression rigidity | 0.22 | 0.38 | 0.43 | 1.44 | 0.68 | 0.27 | 0.27 | 0.11 | 1.04 | 0.20 | 0.16 | 0.32 |
| | WC: Compression energy | 0.07 | 0.22 | 0.55 | 0.46 | 0.61 | 0.11 | 0.13 | 0.05 | 0.62 | 0.37 | 0.41 | 0.26 |
| | RC: Recoverability | 311 | 33 | 69 | 75 | 67 | 56 | 162 | 256 | 67 | 51 | 38 | 30 |
| | T0: Thickness | 1.50 | 1.96 | 2.12 | 1.54 | 1.76 | 1.71 | 1.42 | 1.49 | 1.60 | 2.58 | 2.87 | 1.65 |
| | TM: Thickness | 1.38 | 1.74 | 1.45 | 1.40 | 1.37 | 1.43 | 1.18 | 1.28 | 1.36 | 1.82 | 1.78 | 1.31 |
| Bending test | B Warp | 21.5 | - | 18.6 | 20.9 | - | 23.8 | 10.8 | 22.7 | - | - | - | - |
| | B Weft | 21.5 | - | 23.8 | 21.5 | - | 10.8 | 22.7 | 11.5 | - | - | - | - |
| | 2HB Warp | 22.8 | - | 20.4 | 22.2 | - | 22.2 | 14.2 | 23.2 | - | - | - | - |
| | 2HB Weft | 24.8 | - | 23.3 | 22.1 | - | 14.2 | 23.2 | 14.2 | - | - | - | - |

EP 3 763 860 A1

53

In Example 1-10-1 to 1-10-10, the continuous reinforcing fibers were essentially covered by the resin, no exposure of the reinforcing fibers was observed, and continuous operation was completed for 100,000 m without yarn breakage.

In Example 1-10-1, high tension was imparted by the reinforcing fibers, thereby increasing the compactness index compared to Example 1-7. A large variation in fiber content was observed. There was a particularly large difference between fiber contents of the first bobbin and the final 10th bobbin. When the apparatus was disassembled and cleaned, solidified resin was observed in parts of the joint between the die and the extruder heating cylinder.

In Example 1-10-2, a modification was added whereby the temperature of the joint between the die and the extruder heating cylinder was controlled independently for the die and the extruder heating cylinder. The resin flow at the joint between the die and the extruder heating cylinder was improved by the modification, and the variation in fiber content was reduced compared to Example 1-10-1, while the difference between the fiber contents of the first bobbin and the final 10th bobbin was also reduced.

In Example 1-10-3, high tension was imparted by the reinforcing fibers but no significant difference was observed for the surface roughness, long-range surface roughness and compactness index compared to Example 1-10-2.

In Example 1-10-4, the linear speed was increased to improve productivity, but no significant difference was observed for the surface roughness, long-range surface roughness and compactness index compared to Example 1-10-2.

In Example 1-10-5, the reinforcing fibers were thickened in size to improve productivity, thereby increasing the compactness index compared to Example 1-10-2. No significant difference in surface roughness and long-range surface roughness was observed.

In Example 1-10-6, PE was used as the covering resin, and the compactness index was increased compared to Example 1-10-2. No significant difference in surface roughness and long-range surface roughness was observed, but the long-range surface roughness was reduced.

In Example 1-10-7, PP was used as the covering resin, and the compactness index was increased compared to Example 1-10-2. No significant difference in surface roughness and long-range surface roughness was observed.

In Example 1-10-8, ABS was used as the covering resin, and the compactness index was decreased compared to Example 1-10-2. No significant difference in surface roughness and long-range surface roughness was observed, but the long-range surface roughness was reduced.

In Example 1-10-9, modified PPE was used as the covering resin, and the compactness index was slightly decreased compared to Example 1-10-2. No significant difference in surface roughness and long-range surface roughness was observed, but the long-range surface roughness was slightly increased.

In Example 1-10-10, carbon fibers were used as the reinforcing fibers to increase the strength, but the surface roughness and compactness index were decreased compared to Example 1-10-2. No significant difference in surface roughness and long-range surface roughness was observed.

In Example 1-10-11, the drawdown ratio was high and therefore the surface irregularities in the thermoplastic resin coating-reinforcing fiber composite yarn were larger and the surface roughness and long-range surface roughness were increased.

The thermoplastic resin coating-reinforcing fiber composite yarn obtained in Example 1-7 or Example 1-10-2 was used as warp yarn and weft yarn to weave a woven fabric. Weaving may be to any arbitrary woven texture and woven density, depending on the purpose and desired properties as shown in Table 1-3.

[Example 2-1]

Composite yarn was fabricated under the following conditions.

For this example, a filament diameter meter and resin temperature/pressure gauge were not used. The tension control device used was a leaf spring system and the continuous reinforcing fiber guiding device was a U-shaped groove bearing roller, while the material used for the contact parts between the continuous reinforcing fibers and the continuous reinforcing fiber guiding device and tension control device was YM-85C by Yuasa Yarn Guide Engineering Co., Ltd.

[Continuous reinforcing fibers]

Continuous reinforcing fibers (A)

[Thermoplastic resin (covering resin)]

PA66 (1402S-011 by Asahi Kasei Corp.)

[Covering conditions]

Glass fiber bundle count: 3
Inner diameter of hole A: 0.55 mm
Inner diameter of hole B: 0.60 mm
Distance between holes AB: 2.0 mm
Resin extrusion speed: 50 rpm
Take-up speed: 500 m/min
Die temperature (temperature at cylinder exit and holes A and B): 280°C
Preset temperature of extruder cylinder: 280°C
Yarn tension: 1.0 N

The strength of the glass fibers used was 2025 MPa.
The composite yarn obtained in this manner was used to form a woven fabric by the method described above.
The obtained woven fabric was used to fabricate molded articles 1 to 3 by production methods 1 to 3.

[Example 2-2]

A molded article was fabricated in the same manner as Example 2-1, except that the continuous reinforcing fibers (B) were used, the nozzle was changed to one with an inner diameter of 0.55 mm for hole A and an inner diameter of 0.70 mm for hole B, the shape of the continuous reinforcing fiber guiding device was changed to an H-shaped groove bearing roller and the material at the contact parts between the continuous reinforcing fibers and the continuous reinforcing fiber guiding device and tension control device was changed to YM-85C by Yuasa Yarn Guide Engineering Co., Ltd. The strength of the glass fibers used was 1673 MPa.

[Example 2-3]

A composite yarn and molded article were fabricated in the same manner as Example 2-1, except that the following changes were made.

Glass fiber bundle count: 2
Inner diameter of hole A: 0.5 mm
Inner diameter of hole B: 0.6 mm
Resin extrusion speed: 22 rpm
Take-up speed: 200 m/min
Yarn tension: 0.8 N

[Comparative Example 2-1]

Using two non-interlaced polyamide 66 fibers [trade name LEONA[R] 470/144BAU (product of Asahi Kasei Corp.), fineness: 470 dtex, number of filaments: 144] and two continuous reinforcing fibers (A), both were doubled and aligned and then supplied in an essentially vertical manner to a fluid entangling nozzle for fluid entangling under the following conditions, to obtain a composite yarn.

- Fluid entangling nozzle: KC-AJI-L by Kyocera Corp. (1.5 mm diameter, propulsion type)
- Air pressure: 2 kg/cm$^2$
- Machining speed: 30 m/min

The composite yarn was used, adjusting the density to 600 g/m$^2$ to obtain a woven fabric with a 4-4 twill weave.

[Comparative Example 2-2]

A composite yarn was fabricated with reference to Example 1 of PTL 3 (Japanese Unexamined Patent Publication HEI No. 8-336879), with two continuous reinforcing fibers (A), a die temperature of 290°C and a cylinder temperature of 250°C. The throughput was adjusted so that the volume ratio of the continuous reinforcing fibers and resin was 40:60.

The composite yarn was used to form a woven fabric and continuous reinforcing fiber molded resin by the method described above. Locations where the glass fiber was exposed were present on the surface of the obtained composite yarn.

The composite yarn was used, adjusting the density to 600 g/m$^2$ to obtain a woven fabric with a 4-4 twill weave.

[Comparative Example 2-3]

A coating machine by AIKI was used. Two rolls of continuous reinforcing fibers (A) were anchored diagonally. Yarn guides were set immediately before the die, immediately after contact with the cooling water, immediately after leaving the cooler and immediately before the winder, in a manner such that the yarn was linear from feeding of the yarn, up until the die, cooling and winding. The extruder was set at an angle of 90° with respect to the yarn. Cooling was performed using a water bath, blowing out the moisture with air after cooling. The yarn speed was 200 m/min, and was controlled by the winder. Extrusion was carried out at 280 to 295°C. A die with a diaphragm designed so that the portion of contact with the continuous reinforcing fibers was smaller than the resin introducing unit, was used in such a manner that the melted resin and the continuous reinforcing fibers contacted in a state of slight pressure inside the die, with fine adjustment of the extrusion speed of the extruder. No tension control device was used for this example.

[Comparative Example 2-4]

A molded article was fabricated by the same method as Comparative Example 2-3, with a yarn speed of 50 m/min and an extrusion temperature of 300°C, and with the extrusion speed of the extruder finely adjusted to a slightly low level.

The physical properties of the composite yarns and molded articles of Examples 2-1 to 2-3 and Comparative Examples 2-1 to 2-4 are shown below in Table 2-1.

[Table 4]

Table 2-1

| | | Example 2-1 | Example 2-2 | Example 2-3 | Comp. Example 2-1 | Comp. Example 2-2 | Comp. Example 2-3 | Comp. Example 2-4 |
|---|---|---|---|---|---|---|---|---|
| Composite yarn | Compactness index | 0.57 | 0.54 | 0.52 | - | 0.41 | 0.43 | 0.43 |
| | Degree of adhesion | No adhesion | No adhesion | No adhesion | - | Adhesion | Adhesion | Adhesion |
| | Vf | 44 | 40 | 34 | 38 | 40 | 41 | 31 |
| | Reinforcing fiber strength | 1975 | 1601 | 1963 | 1578 | 1926 | 1970 | 1970 |
| Molded article 1 | Tensile strength | 410 | 350 | 335 | 278 | 270 | 310 | 275 |
| | Impregnation rate | 98.3 | 98 | 97.8 | 96.6 | 96 | 96.4 | 96.4 |
| | Vf | 46 | 40 | 39 | 40 | 40 | 43 | 38 |
| | Degree of strength exhibited | 84.1% | 97.6% | 79.9% | 64.8% | 62.9% | 67.7% | 67.1% |
| Molded article 2 | Tensile strength | 440 | 365 | 380 | 347 | 360 | 400 | 365 |
| | Impregnation rate | 99.4 | 99.5 | 99.4 | 99.1 | 99.3 | 99.4 | 99.4 |
| | Vf | 47 | 40 | 41 | 42 | 42 | 45 | 40 |
| | Degree of strength exhibited | 88.5% | 101.8% | 86.6% | 77.4% | 80.3% | 83.7% | 85.1% |
| Molded article 3 | Tensile strength | 475 | 410 | 435 | 380 | 390 | 440 | 395 |
| | Impregnation rate | 99.9 | 99.9 | 99.9 | 99.2 | 99.9 | 99.9 | 99.9 |
| | Vf | 50 | 45 | 47 | 46 | 46 | 50 | 45 |
| | Degree of strength exhibited | 90.3% | 102.9% | 87.5% | 78.0% | 80.0% | 83.6% | 82.7% |

In Examples 2-1 to 2-3 the compactness index was low, and therefore rapid impregnation was possible even with molding for a short time period as with molded article 1. Moreover, since there was no adhesion between the reinforcing fibers and the thermoplastic resin, so that damage to the reinforcing fibers was minimal during the weaving step or molding step, a high degree of strength was exhibited upon full impregnation by long-period molding, as with molded article 2 or molded article 3. In particular, there was no flowing of the resin or reduction in the degree of strength exhibited under conditions with high variation in Vf, as with molded article 3.

In Comparative Example 2-1, the reinforcing fibers suffered breakage during the fiber mixing step or weaving step and were present in an extended state, and therefore the impregnation rate and degree of strength exhibited were lower. In Comparative Examples 2-2 to 2-4, the peripheries of the reinforcing fibers were covered with the thermoplastic resin, but the reinforcing fibers were in a non-compact, extended state, and therefore the impregnating property was inferior.

[Example 3-1]

Composite yarn was fabricated under the following conditions.

For this example, a filament diameter meter and resin temperature/pressure gauge were not used. The tension control device used was a leaf spring system and the continuous reinforcing fiber guiding device was a U-shaped groove bearing roller, while the material used for the contact parts between the continuous reinforcing fibers and the continuous reinforcing fiber guiding device and tension control device was YM-85C by Yuasa Yarn Guide Engineering Co., Ltd.

[Continuous reinforcing fibers]

Continuous reinforcing fibers (A)

[Thermoplastic resin (covering resin)]

PA66 (1402S-011 by Asahi Kasei Corp.)

[Covering conditions]

Glass fiber bundle count: 3
Inner diameter of hole A: 0.55 mm
Inner diameter of hole B: 0.60 mm
Distance between holes AB: 2.0 mm
Resin extrusion speed: 50 rpm
Take-up speed: 500 m/min
Die temperature (temperature at cylinder exit and holes A and B): 280°C
Preset temperature of extruder cylinder: 280°C
Yarn tension: 1.0 N

[Example 3-2]

A molded article was fabricated in the same manner as Example 3-1, except that the continuous reinforcing fibers (B) were used, the nozzle was changed to one with an inner diameter of 0.55 mm for hole A and an inner diameter of 0.70 mm for hole B, the shape of the continuous reinforcing fiber guiding device was changed to an H-shaped groove bearing roller and the material at the contact parts between the continuous reinforcing fibers and the continuous reinforcing fiber guiding device and tension control device was changed to YM-85C by Yuasa Yarn Guide Engineering Co., Ltd.

[Example 3-3]

A composite yarn and molded article were fabricated in the same manner as Example 3-1, except that the following changes were made.

Glass fiber bundle count: 2
Inner diameter of hole A: 0.5 mm
Inner diameter of hole B: 0.6 mm

Resin extrusion speed: 21 rpm
Take-up speed: 200 m/min
Yarn tension: 1.0 N

[Comparative Example 3-1]

Using two non-interlaced polyamide 66 fibers [trade name LEONA$^R$ 470/144BAU (product of Asahi Kasei Corp.), fineness: 470 dtex, number of filaments: 144] and two continuous reinforcing fibers (A), both were doubled and aligned and then supplied in an essentially vertical manner to a fluid entangling nozzle for fluid entangling under the following conditions, to obtain a composite yarn.

- Fluid entangling nozzle: KC-AJI-L by Kyocera Corp. (1.5 mm diameter, propulsion type)
- Air pressure: 2 kg/cm$^2$
- Machining speed: 30 m/min

The composite yarn was used, adjusting the density to 600 g/m$^2$ to obtain a woven fabric with a 4-4 twill weave.

[Comparative Example 3-2]

A composite yarn was fabricated with reference to Example 1 of PTL 3 (Japanese Unexamined Patent Publication HEI No. 8-336879), with two continuous reinforcing fibers (A), a die temperature of 290°C and a cylinder temperature of 250°C. The throughput was adjusted so that the volume ratio of the continuous reinforcing fibers and resin was 40:60.
The composite yarn was used to form a woven fabric and continuous reinforcing fiber molded resin by the method described above.
Locations where the glass fiber was exposed were present on the surface of the obtained composite yarn.
The composite yarn was used, adjusting the density to 600 g/m$^2$ to obtain a woven fabric with a 4-4 twill weave.

[Comparative Example 3-3]

A coating machine by AIKI was used. Two rolls of continuous reinforcing fibers (A) were anchored diagonally. Yarn guides were set immediately before the die, immediately after contact with the cooling water, immediately after leaving the cooler and immediately before the winder, in a manner such that the yarn was linear from feeding of the yarn, up until the die, cooling and winding. The die used had an inner hole diameter of 0.7 mm. The extruder was set at an angle of 90° with respect to the yarn. Cooling was performed using a water bath, blowing out the moisture with air after cooling. The yarn speed was 200 m/min, and was controlled by the winder. Extrusion was carried out at 280 to 295°C. A die with a diaphragm designed so that the portion of contact with the continuous reinforcing fibers was smaller than the resin introducing unit, was used in such a manner that the melted resin and the continuous reinforcing fibers contacted in a state of slight pressure inside the die, with fine adjustment of the extrusion speed of the extruder. This Example differs from Example 3-1 in that the die nozzle structure and hole diameter with respect to the yarn were changed, and no tension control device was used.

[Comparative Example 3-4]

A molded article was fabricated by the same method as Comparative Example 3-3, with a yarn speed of 50 m/min and an extrusion temperature of 300°C, and with the extrusion speed of the extruder finely adjusted to a slightly low level.
[Table 5]

Table 3-1

| | | Example 3-1 | Example 3-2 | Example 3-3 | Comp. Example 3-1 | Comp. Example 3-2 | Comp. Example 3-3 | Comp. Example 3-4 |
|---|---|---|---|---|---|---|---|---|
| Composite yarn | Surface roughness | 0.07 | 0.11 | 0.18 | - | 0.4 | 0.31 | 0.27 |
| | Long-range surface roughness | 3.24 | 3.33 | 4.8 | - | 8.2 | 6.03 | 6.58 |
| | Degree of adhesion | No adhesion | No adhesion | No adhesion | - | Adhesion | Adhesion | Adhesion |
| | Vf | 44 | 40 | 35 | 38 | 40 | 41 | 31 |
| | Reinforcing fiber strength | 1975 | 1601 | 1988 | 1578 | 1926 | 1970 | 1970 |
| | Eccentricity | 7.0 | 9.1 | 12.1 | - | 13.1 | 11.7 | 12.8 |
| | Maximum weaving speed | 340 | 320 | 260 | 180 | <180 | 220 | 200 |
| Molded article 1 | Tensile strength | 410 | 350 | 331 | 278 | 270 | 310 | 275 |
| | Impregnation rate | 98.3 | 98 | 97.9 | 96.6 | 96 | 96.4 | 96.4 |
| | Vf | 46 | 40 | 38 | 40 | 40 | 43 | 38 |
| | Degree of strength exhibited | 84.1% | 97.6% | 80.8% | 64.8% | 62.9% | 67.7% | 67.1% |
| Molded article 2 | Tensile strength | 440 | 365 | 369 | 347 | 360 | 400 | 365 |
| | Impregnation rate | 99.4 | 99.5 | 99.5 | 99.1 | 99.3 | 99.4 | 99.4 |
| | Vf | 47 | 40 | 39 | 42 | 42 | 45 | 40 |
| | Degree of strength exhibited | 88.5% | 101.8% | 88.0% | 77.4% | 80.3% | 83.7% | 85.1% |
| Molded article 3 | Tensile strength | 475 | 410 | 425 | 380 | 390 | 440 | 395 |
| | Impregnation rate | 99.9 | 99.9 | 99.9 | 99.2 | 99.9 | 99.9 | 99.9 |
| | Vf | 50 | 45 | 45 | 46 | 46 | 50 | 45 |
| | Degree of strength exhibited | 90.3% | 102.9% | 89.0% | 78.0% | 80.0% | 83.6% | 82.7% |

In Examples 3-1 to 3-3, the manageability of the yarn was excellent due to low surface roughness, thus allowing high-speed weaving, with low damage to the yarn and high strength being exhibited. Lower eccentricity tended to increase the stability during weaving, thus resulting in more excellent high-speed weaving properties. Moreover, since there was no adhesion between the reinforcing fibers and the thermoplastic resin, so that damage to the reinforcing fibers was minimal during the weaving step or molding step, a high degree of strength was exhibited upon full impregnation by long-period molding, as with molded article 2 or molded article 3. In particular, there was no flowing of the resin or reduction in the degree of strength exhibited under conditions with high variation in Vf, as with molded article 3.

In Comparative Example 3-1, the reinforcing fibers suffered damage during the fiber mixing step or weaving step, while surface sliding was also impaired, making the yarn unsuitable for high-speed weaving. Comparative Examples 3-2 to 3-4 had a structure with the peripheries of the reinforcing fibers covered with a thermoplastic resin, but the surface was rough, and binding between the reinforcing fibers and resin resulted in catching during weaving and damage to the internal reinforcing fibers, making it impossible for high strength to be exhibited.

[Example 4-1]

Composite yarn was fabricated under the following conditions.

For this example, a filament diameter meter and resin temperature/pressure gauge were not used. The tension control device used was a leaf spring system and the continuous reinforcing fiber guiding device was a U-shaped groove bearing roller, while the material used for the contact parts between the continuous reinforcing fibers and the continuous reinforcing fiber guiding device and tension control device was YM-85C by Yuasa Yarn Guide Engineering Co., Ltd.

[Continuous reinforcing fibers]

Continuous reinforcing fibers (A)

[Thermoplastic resin (covering resin)]

(Pre)compounded resin

[Covering conditions]

Glass fiber bundle count: 3
Inner diameter of hole A: 0.55 mm
Inner diameter of hole B: 0.60 mm
Distance between holes AB: 2.0 mm
Resin extrusion speed: 50 rpm
Take-up speed: 500 m/min
Die temperature (temperature at cylinder exit and holes A and B): 280°C
Preset temperature of extruder cylinder: 280°C
Yarn tension: 1.0 N

The composite yarn obtained in this manner was used to form a woven fabric by the method described above.

The obtained woven fabric was used to fabricate molded articles 1 and 2 by production methods 1 and 2.

[Example 4-2]

A composite yarn and molded article were fabricated in the same manner as Example 4-1, except that pellets of PA66 and pellets of copolymer PA6/12 were mixed (dry blended) immediately before loading at a weight ratio of 8:1, and the mixture was supplied to the extruder.

[Reference Example 4-1]

A composite yarn and molded article were fabricated in the same manner as Example 4-1, except that PA66 was used alone.

[Table 6]

Table 4-1

| | | Example 4-1 | Example 4-2 | Reference Example 4-1 |
|---|---|---|---|---|
| Composite yarn | Degree of adhesion | No adhesion | No adhesion | No adhesion |
| | Vf | 41 | 44 | 44 |
| | Reinforcing fiber strength | 1980 | 1970 | 1975 |
| Molded article 1 | Tensile strength | 424 | 458 | 410 |
| | Impregnation rate | 99.4 | 99.6 | 98.3 |
| | Vf | 43 | 46 | 46 |
| | Degree of strength exhibited | 93% | 94% | 84% |
| Molded article 2 | Tensile strength | 458 | 476 | 440 |
| | Impregnation rate | 99.7 | 99.9 | 99.4 |
| | Vf | 45 | 47 | 47 |
| | Degree of strength exhibited | 96% | 96% | 89% |

Example 4-1 and Example 4-2, which had PA6/12 mixed with PA66, were superior in terms of the impregnating property in a short period of time and the degree of strength exhibited. There was virtually no difference between Example 4-1 and Example 4-2, demonstrating low dependence on the method of mixing so long as the mixed state of the resins was the same.

The following resins and materials were used for Examples 5-1 to 5-7 and Comparative Examples 5-1 to 5-4.

[Continuous reinforcing fibers]

Glass cloth: WFR 350 100BS6 (Nittobo Co., Ltd.)

Carbon fiber fabric: Carbon fibers in a filament number of 12,000 with a fineness of 8000 dtex, and having polyvinylpyrrolidone adhering at 2.8 mass%, were produced and used for weaving (plain weaving) with a rapier loom.

[Thermoplastic resin]

Polyamide 66: LEONA 1300S (Asahi Kasei Corp.), melting point: 265°C, difference between melting peak temperature and crystallization peak temperature during temperature decrease (Tm - Tc) = 53°C
Polyamide 6/12: GRILON C CF6S (EMS-Chemie, Japan), melting point: 130°C
Polyamide 6: GRILON BS/2 natural (EMS-Chemie, Japan), melting point: 225°C
Polyamide 6I: LEONA R16024 (Asahi Kasei Corp.), glass transition temperature: 130°C
Polyamide 6T/6I: Trial product by Toyobo, Ltd.
Polyethylene (PE): SANTECH J240 (Asahi Kasei Corp.), melting point: 125°C

[Thermoplastic resin film]

The thermoplastic resin mixture was extruded with a T-die, and a molding machine (product of Soken Co., Ltd.) was used for molding. The thickness of the thermoplastic resin film was 100 μm.

[Method for producing continuous fiber-reinforced molded resin]

The molding machine used was a hydraulic molding machine (Shoji Co.) with a maximum mold clamping force of 50 tons. A die with an inlay structure was prepared to obtain a flat continuous fiber-reinforced resin (200 mm length, 100 mm width, 2 mm wall thickness). The thermoplastic resin film and a glass cloth were cut to match the die shape, and a predetermined number were stacked and set in the die.

The internal temperature of the molding machine was raised to 330°C, and then the mold was clamped with a mold clamping force of 5 MPa for compression molding. The molding time was 1 minute after reaching 265°C as the melting point of polyamide 66, and after quenching of the die, it was released and the molded article was removed. The maximum temperature during molding was 275°C.

[Example 5-1]

A thermoplastic resin film was produced using a dry blend of PA66 and PA6/12 in a weight ratio of 8:1. The thickness of the film was 100 μm. After alternately laminating 11 films and 10 glass cloths, they were molded. The PA6/12 was evenly dispersed in the PA66 in the resin region other than the boundary interface region with the glass fibers.

[Example 5-2]

A continuous fiber-reinforced molded resin was produced in the same manner as Example 1, except for using PA6 instead of PA6/12. The PA6 was evenly dispersed in the PA66 in the resin region other than the boundary interface region with the glass fibers.

[Example 5-3]

A continuous fiber-reinforced molded resin was produced in the same manner as Example 5-1, except for using PE instead of PA6/12. The PE was evenly dispersed in the PA66 in the resin region other than the boundary interface region with the glass fibers.

[Example 5-4]

A continuous fiber-reinforced molded resin was produced in the same manner as Example 5-1, except for using PA6I instead of PA6/12. The PA6I was evenly dispersed in the PA66 in the resin region other than the boundary interface region with the glass fibers.

[Example 5-5]

A continuous fiber-reinforced molded resin was produced in the same manner as Example 5-1, except that PA66 and PA6/12 were dry blended in a weight ratio of 5:4. The PA6/12 was evenly dispersed in the PA66 in the resin region other than the boundary interface region with the glass fibers.

[Example 5-6]

A continuous fiber-reinforced molded resin was produced in the same manner as Example 5-1, except that the thermoplastic resin film was produced using a mixture of PA66 and PA6/12 prekneaded with a charging ratio (weight ratio) of 8:1 using a twin-screw extruder (TEM26SS, Toshiba Machine Co., Ltd.). The PA6/12 was evenly dispersed in the PA66 in the resin region other than the boundary interface region with the glass fibers.

[Example 5-7]

A continuous fiber-reinforced molded resin was produced in the same manner as Example 5-1, except that a carbon fiber fabric was used instead of a glass cloth. The PA6/12 was evenly dispersed in the PA66 in the resin region other than the boundary interface region with the glass fibers.

[Example 5-8]

A composite yarn and molded article were produced in the same manner as Example 5-1, except that PA66 and PA6/12 were dry blended in a weight ratio of 8:1 and supplied to the extruder, and the throughput was adjusted so that the volume ratio of the continuous reinforcing fibers and resin was 50:50. The PA6/12 was evenly dispersed in the PA66 in the resin region other than the boundary interface region with the glass fibers.

[Comparative Example 5-1]

A continuous fiber-reinforced molded resin was produced in the same manner as Example 5-1, except that the film was produced using PA66 alone.

[Comparative Example 5-2]

A continuous fiber-reinforced molded resin was produced in the same manner as Example 5-1, except for using PA6T/6I instead of PA6/12. The PA6T/6I was evenly dispersed in the PA66 both in the resin region other than the boundary interface region with the glass fibers, and in the boundary interface region.

[Comparative Example 5-3]

A glass cloth was cut out to 19.5 cm × 9.5 cm and immersed in a solution of a polyamide emulsion adjusted to 30 mass% with purified water (SEPOLSION PA200 by Sumitomo Seika Chemicals Co., Ltd.), after which it was dried at 80°C for 1 hour with a hot air circulation dryer to prepare a composite material. The coverage of the PA6/12 polyamide emulsion solid component on the glass cloth in the obtained composite material was 6 mass%. This was then layered with a PA66 film to produce a continuous fiber-reinforced molded resin in the same manner as Example 1. In this Example, the PA6/12 was not evenly dispersed in the PA66, but was present only in the boundary interface region.

[Comparative Example 5-4]

A continuous fiber-reinforced molded resin was produced in the same manner as Example 5-1, except that PA66 and PA6/12 were dry blended in a weight ratio of 1:8. The PA66 was evenly dispersed in the PA6/12 in the resin region other than the boundary interface region with the glass fibers.
The results for Examples 5-1 to 5-7 and Comparative Examples 5-1 to 5-4 are shown in Table 5-1.
[Table 7]

Table 5-1

| | Example 5-1 | Example 5-2 | Example 5-3 | Example 5-4 | Example 5-5 | Example 5-6 | Example 5-7 | Example 5-8 | Comp. Example 5-1 | Comp. Example 5-2 | Comp. Example 5-3 | Comp. Example 5-4 |
|---|---|---|---|---|---|---|---|---|---|---|---|---|
| Occupying ratio of resin in boundary interface region | PA66: PA6/ 12=4:6 | PA66: PA6 =4:6 | PA66:PE =4:6 | PA66: PA6I =4: 6 | PA66: PA6/ 12=2:8 | PA66: PA6/ 12=3:7 | PA66: PA6/ 12=4:6 | PA66: PA6/ 12=4:6 | | PA66: PA6T/ 61=8:1 | PA66: PA6/ 12=1:9 | PA66: PA6/ 12=1:9 |
| Occupying ratio of resin in other resin region | 8:1 | 8:1 | 8:1 | 8:1 | 5:4 | 8:1 | 8:1 | 8:1 | | 8:1 | 10:0 | 1:8 |
| Melting point difference | 135 | 40 | 140 | 135 | 135 | 135 | 135 | 135 | | 135 | 135 | 135 |
| Tm-Tc | 39 | 31 | 42 | 39 | 40 | 39 | 39 | 39 | 53 | 39 | | 19 |
| Bonding strength | G | G | P | G | G | G | G | G | | P | G | P |
| Wettability | G | G | P | G | G | G | G | G | | P | G | P |
| Surface tension | G | G | P | G | G | G | G | G | | P | G | P |
| Resin melting point | 265 | 265 | 265 | 265 | 250 | 265 | 265 | 265 | 265 | 265 | | 130 |
| Resin melt viscosity | G | G | G | G | P | G | G | G | | G | | G |
| Impregnation rate (%) | 99.5 | 99 | 99 | 99.5 | 99.5 | 99.5 | 99.5 | 99.7 | 97 | 96 | 99 | 99 |
| Tensile stress | 470 | 450 | 420 | 460 | 410 | 460 | 800 | 480 | 380 | 320 | 420 | 420 |
| Flexural stress | 600 | 580 | 550 | 590 | 550 | 610 | 760 | 630 | 500 | 400 | 550 | 550 |
| Flexural modulus | 25 | 24 | 20 | 22 | 24 | 26 | 47 | 27 | 17 | 12 | 15 | 17 |
| Tensile stress at 150°C | 400 | 390 | 360 | 380 | 320 | 400 | 681 | 410 | 228 | 200 | 230 | 230 |

Judging from Table 5-1, for the continuous fiber-reinforced molded resin of the embodiments, at the boundary interface between a single continuous reinforcing fiber of two or more types and the thermoplastic resin in a cross-section perpendicular to the lengthwise direction of the continuous reinforcing fiber, in a region of the outer peripheral edge separated from the perimeter of the continuous reinforcing fiber by 1/10 of the radius of a single continuous reinforcing fiber, the proportion of the two or more thermoplastic resins that was occupied by the resin (secondary resin) other than the resin with the highest occupying proportion of the entire resin region (primary resin), was higher than the proportion occupied by the primary resin, as shown by Examples 5-1 to 5-7, but in the resin region other than that region of the outer peripheral edge, each secondary resin other than the resin with the highest occupying proportion of the entire resin region (primary resin), of the two or more thermoplastic resins, was either evenly dispersed or mixed, and therefore high tensile stress, flexural stress, flexural modulus and high-temperature tensile stress were exhibited. As shown by Comparative Example 5-1, on the other hand, the adhesion between the reinforcing fibers and thermoplastic resin was insufficient with only one type of thermoplastic resin, and the tensile stress, flexural stress, flexural modulus and high-temperature tensile stress were reduced. As shown by Comparative Examples 5-2 and 5-4, even with two or more thermoplastic resins, when the occupying ratio of the resin with the highest occupying proportion of the entire resin region (primary resin) among the two or more thermoplastic resins was higher than the occupying ratio of the secondary resin, in the region of the outer peripheral edge separated by 1/10 of the radius of the single continuous reinforcing fiber from the perimeter of the continuous reinforcing fibers of the two or more types, adhesion between the reinforcing fibers and the thermoplastic resin became insufficient, and the tensile stress, flexural stress, flexural modulus and high-temperature tensile stress were reduced. As shown in Comparative Example 5-3, even though a secondary resin was present other than the resin with the highest occupying proportion of the entire resin region (primary resin), of the two or more thermoplastic resins, in the region of the outer peripheral edge separated by 1/10 of the radius of the single continuous reinforcing fiber from the perimeter of the continuous reinforcing fibers of the two or more types, the secondary resin was not evenly dispersed or mixed in the resin region other than that region of the outer peripheral edge, and therefore the high-temperature tensile stress was reduced.

The methods used in Examples 6-1 to 6-5 and Comparative Examples 6-1 and 6-2 will now be described.

[Composite yarn production apparatus and method for producing the composite yarn]

The apparatuses shown in Fig. 1-10 and 1-11 were used. Feeding of the yarn was by anchoring a roll and directly feeding it out, when yarn was used, or by rolling, when a cake was used. After feeding out the yarn, it was aligned until the yarn became straight, up until the die, cooling and winding, while prior to the die, a leaf spring-type tensor was inserted for stabilization of the tension, and the reinforcing fibers were also densified. Yarn guides were set immediately before the die, immediately after contacting with cooling water, immediately after leaving the cooler and immediately before the winder. The extruder was set at an angle of 90° with respect to the yarn. Cooling was performed using a water bath, blowing out the moisture with air after cooling. The yarn speed was 200 m/min, and was controlled by the winder. Extrusion was carried out at 280 to 295°C. A die with a diaphragm designed so that the portion of contact with the continuous reinforcing fibers was smaller than the resin introducing unit, was used in such a manner that the melted resin and the continuous reinforcing fibers contacted in a state of slight pressure inside the die, with fine adjustment of the extrusion speed of the extruder.

The composite yarn production apparatus and method for producing the composite yarn described above were applied for Examples 6-1 to 6-5 and Comparative Examples 6-1 and 6-2 below.

[Method for producing woven fabric]

A rapier loom (Dornier Rapier Weaving Machine PI, product of Dornier) was used for weaving of a 4-4 twill weave woven fabric with a warp density of 6 threads/5 mm and a weft density of 6 threads/5 mm, using the aforementioned composite yarn as the warp yarn and weft yarn.

The aforementioned method for producing the woven fabric was applied for Examples 6-1 to 6-3 and 6-5 and Comparative Examples 6-1 and 6-2 below.

[Continuous reinforcing fiber molded resin production method]

[Woven fabric compression (press) molding step]

The molding machine used was an S100 V-8A by Toshiba Machine Co., Ltd., with a maximum mold clamping force of 300 tons.

A die was prepared to obtain a box-shaped continuous reinforcing fiber molded resin (150 mm length, 200 mm width, 50 mm height, 3 mm wall thickness).

Three different dies were prepared, with different lateral wall angles. The die used for Example 1 was designed for an angle of 100° between the base section and lateral walls of the molded article. The die used for Example 2 was designed for an angle of 110° between the base section and lateral walls of the molded article. The die used for Example 3 was designed for an angle of 90° between the base section and lateral walls of the molded article.

Eight woven fabrics were prepared, cut to shapes matching each die.

A heating and cooling cycle was carried out with repeated temperature increase and temperature decrease of the die cavity between 180°C and 300°C, and when the die cavity walls reached 200°C, the die was opened and the cut woven fabric was set at a predetermined location of the die, the die was closed until the cut woven fabric contacted with the die, and the temperature of the die cavity was increased to 280°C, after which the mold was clamped with a mold clamping pressure of 240 MPa while raising the die temperature to 300°C, and it was subsequently cooled to a die cavity wall temperature of 180°C. When the die cavity reached 180°C, the die was released and the molded article was released and removed.

During the process of mold clamping at a pressure of 240 MPa followed by heating and cooling of the die in this method, the temperature was above the melting point for 1 minute.

[Evaluation of molded article]

For evaluation of a box-shaped molded article, the linearity of the continuous reinforcing fibers was evaluated by outer observation of the continuous reinforcing fibers at the base section. The continuity of the continuous reinforcing fibers was evaluated by observation of the continuous reinforcing fibers at the base section and side walls by X-ray CT scanning as described below (inspeXio SMX-90CT Plus, product of Shimadzu Corp.). Samples were cut out from the side walls of the molded article at two locations as shown in Fig. 6-4, and observed.

The composite yarn used, the molding substrate form and the physical properties of the molded article are shown in Tables 6-1.

[Example 6-1]

Three continuous reinforcing fibers (A) were used to form a composite yarn.

Operation was carried out with manual adjustment of the resin extrusion speed to a volume ratio of 50:50 for the continuous reinforcing fibers and resin.

A rapier loom (Dornier Rapier Weaving Machine PI, product of Dornier) was used for weaving of the composite yarn obtained as described above as the warp yarn and weft yarn in a 4-4 twill weave, with a basis weight of 600 g/m$^2$.

The woven base material was used to fabricate a box-shaped molded article. A die designed for an angle of 100° between the base section and lateral walls of the molded article was used to fabricate a continuous reinforcing fiber molded resin by the method described above.

For evaluation, the tensile strength of the molded article was measured for a test piece cut out from the base section. The crimp rate of the reinforcing fibers was measured using a test piece removed from the woven base material. The linearity of the reinforcing fibers is the result of measuring the linearity of the side walls of the three-dimensional molded article.

[Example 6-2]

A continuous fiber molded resin was fabricated in the same manner as Example 6-1, except that a die designed for an angle of 110° between the base section and lateral walls of the molded article was used.

[Example 6-3]

A continuous fiber molded resin was fabricated in the same manner as Example 6-1, except that a die designed for an angle of 90° between the base section and lateral walls of the molded article was used.

[Example 6-4]

This was carried out in the same manner as Example 6-1, except that the texture of the woven fabric used for compression molding was a satin weave.

[Example 6-5]

This was carried out in the same manner as Example 6-1, except that continuous reinforcing fibers (B) were used.

[Comparative Example 6-1]

Using three non-interlaced polyamide 66 fibers [trade name LEONA[R] 470/144BAU (product of Asahi Kasei Fibers Corp.), fineness: 470 dtex, number of filaments: 144] and two continuous reinforcing fibers (A), both were doubled and aligned and then supplied in an essentially vertical manner to a fluid entangling nozzle for fluid entangling under the following conditions, to obtain a composite yarn.

- Fluid entangling nozzle: KC-AJI-L by Kyocera Corp. (1.5 mm diameter, propulsion type)
- Air pressure: 2 kg/cm$^2$
- Machining speed: 30 m/min

The composite yarn was used to form a woven fabric and continuous reinforcing fiber molded resin by the method described above. The woven fabric texture, die and molding method used were the same as in Example 6-1.

[Comparative Example 6-2]

A composite yarn was fabricated with reference to Example 1 of PTL 3 (Japanese Unexamined Patent Publication HEI No. 8-336879), with two continuous reinforcing fibers (A), a die temperature of 290°C and a cylinder temperature of 250°C. The throughput was adjusted so that the volume ratio of the continuous reinforcing fibers and resin was 50:50.
The composite yarn was used to form a woven fabric and continuous reinforcing fiber molded resin by the method described above. The woven fabric texture, die and molding method used were the same as in Example 6-1.
The evaluation results for Examples 6-1 to 6-5 and Comparative Examples 6-1 and 6-2 are shown in Table 1 below.
In Table 6-1, "-" means that the amount of coverage of the continuous reinforcing fibers by the resin (denominator) was 0, making calculation impossible.
[Table 8]

Table 6-1

| | | Example 6-1 | Example 6-2 | Example 6-3 | Example 6-4 | Example 6-5 | Comp. Example 6-1 | Comp. Example 6-2 |
|---|---|---|---|---|---|---|---|---|
| Molded article | Base section/lateral wall angle | 100 | 110 | 90 | 100 | 100 | 100 | 100 |
| Composite yarn | Compactness index | 0.57 | 0.57 | 0.57 | 0.57 | 0.54 | - | 0.41 |
| | Vf | 48 | 48 | 48 | 48 | 46 | 49 | 48 |
| | Reinforcing fiber strength | 1975 | 1975 | 1975 | 1975 | 1601 | 1578 | 1926 |
| Base material | Weaving | 4-4 Twill weave | 4-4 Twill weave | 4-4 Twill weave | Satin weave | 4-4 Twill weave | 4-4 Twill weave | 4-4 Twill weave |
| Molded article | Tensile strength | 440 | 440 | 440 | 460 | 400 | 340 | 300 |
| | Impregnation rate | 98 | 98 | 98 | 99 | 98 | 96 | 96 |
| | Vf | 50 | 50 | 50 | 50 | 50 | 50 | 50 |
| | Degree of strength exhibited (%) | 84% | 84% | 84% | 87% | 91% | 65% | 57% |
| Evaluation results | Reinforcing fiber crimp rate (%) | 3.5 | 3.5 | 3.5 | 1.5 | 3.5 | 1.0 | 5.5 |
| | Reinforcing fiber linearity (%) | 95% | 95% | 95% | 94% | 96% | 80% | 30% |
| | Reinforcing fiber continuity (%) | 80% | 95% | 45% | 85% | 87% | 40% | 45% |

The molded articles of both Examples 6-1 and 6-2 had virtually no breakage of the reinforcing fibers even at the corner sections of the molded articles, and exhibited excellent strength.

With Example 6-3, more breakage of the continuous fibers occurred compared to the molded articles of Examples 6-1 and 6-2 due to the small corner section angles, but the outer appearance was excellent.

In Example 6-4, a molded article was obtained with less breakage of the reinforcing fibers than Example 6-1 at the corner sections of the molded article.

In Example 6-5, a molded article was obtained with less breakage of the reinforcing fibers than Example 6-1 at the corner sections of the molded article, similar to Example 6-4.

With the combined filament yarn obtained in Comparative Example 6-1, the continuous reinforcing fibers were exposed, resulting in low strength of the composite yarn, low tensile strength of the molded article and breakage of the reinforcing fibers at the corner sections of the molded article.

In Comparative Example 6-2, the continuous reinforcing fibers suffered damage during production of the composite yarn and during processing of the woven fabric, due to uneven covering, and the strength of the compression-molded article was also reduced. Breakage of the reinforcing fibers also occurred at the corner sections of the molded article.

The method used in Examples 7-1 to 7-4 and Comparative Examples 7-1 to 7-3 will now be described.

[Continuous reinforcing fiber molded resin production method]

The molding machine used was an S100 V-8A by Toshiba Machine Co., Ltd., with a maximum mold clamping force of 300 tons.

A die was prepared to obtain a box-shaped continuous reinforcing fiber molded resin (150 mm length, 200 mm width, 50 mm height, 3 mm wall thickness).

The angle between the base section and lateral walls of the die was 100°.

Eight woven fabrics cut to a shape matching the die were prepared.

A heating and cooling cycle was carried out with repeated temperature increase and temperature decrease of the die cavity between 180°C and 300°C, and when the die cavity walls reached 200°C, the die was opened and the cut woven fabric was set at a predetermined location of the die, the die was closed until the cut woven fabric contacted with the die, and the temperature of the die cavity was increased to 280°C, after which the mold was clamped with a mold clamping pressure of 240 MPa while raising the die temperature to 300°C, and it was subsequently cooled to a die cavity wall temperature of 180°C. When the die cavity reached 180°C, the die was released and the molded article was released and removed. The heating times were molding for 1 minute at above the melting point [1-minute molding] and molding for 10 minutes at above the melting point [10-minute molding].

[Example 7-1]

Continuous reinforcing fibers (A) were used to form a composite yarn.

[Covering conditions]

Glass fiber bundle count: 3
Inner diameter of hole A: 0.55 mm
Inner diameter of hole B: 0.60 mm
Distance between holes AB: 2.0 mm
Take-up speed: 600 m/min
Die temperature (temperature at cylinder exit and holes A and B): 280°C
Preset temperature of extruder cylinder: 280°C
Yarn tension: 1.0 N

Operation was carried out with manual adjustment of the resin extrusion speed to a volume ratio of 50:50 for the continuous reinforcing fibers and resin. A rapier loom (Dornier Rapier Weaving Machine PI, product of Dornier) was used for weaving of the composite yarn obtained as described above as the warp yarn and weft yarn in a 4-4 twill weave, with a basis weight of 600 g/m$^2$.

The woven base material was used to fabricate a box-shaped molded article. A die designed for an angle of 100° between the base section and lateral walls of the molded article was used to fabricate a continuous reinforcing fiber molded resin by the method described above.

For evaluation, the tensile strength of the molded article was measured for a test piece cut out from the base section.

[Example 7-2]

This was carried out in the same manner as Example 7-1, except that the continuous reinforcing fibers (B) were used, and the inner diameter of hole B was 0.70 mm.

[Example 7-3]

A twin-screw extruder (TEM26SS) was used for compounding of PA66 and copolymer PA6/12 in a weight ratio of 8:1, and pellets were obtained. The rotational speed of the extruder was 200 rpm, the throughput was 15 kg/hr and the extrusion temperature was 270°C. The system interior was brought to a vacuum through a vacuum vent prior to using the die. The procedure was carried out in the same manner as Example 7-1, except for using these pellets.

[Example 7-4]

This was carried out in the same manner as Example 7-1, except that 8 woven fabrics cut to a shape matching the die were stacked and heated with a mid infrared heater to a woven fabric surface temperature of 300°C, and inserted into the die after continuing to heat for 20 seconds.

[Comparative Example 7-1]

Using three non-interlaced polyamide 66 fibers [trade name LEONA$^R$ 470/144BAU (product of Asahi Kasei Corp.), fineness: 470 dtex, number of filaments: 144] and two continuous reinforcing fibers (A), both were doubled and aligned and then supplied in an essentially vertical manner to a fluid entangling nozzle for fluid entangling under the following conditions, to obtain a composite yarn.

- Fluid entangling nozzle: KC-AJI-L by Kyocera Corp. (1.5 mm diameter, propulsion type)
- Air pressure: 2 kg/cm$^2$
- Machining speed: 30 m/min

The composite yarn was used to form a woven fabric and continuous reinforcing fiber molded resin by the method described above. The woven fabric texture, die and molding method used were the same as in Example 7-1.

[Comparative Example 7-2]

A composite yarn was fabricated with reference to Example 1 of PTL 3 (Japanese Unexamined Patent Publication HEI No. 8-336879), with two continuous reinforcing fibers (A), a die temperature of 290°C and a cylinder temperature of 250°C. The throughput was adjusted so that the volume ratio of the continuous reinforcing fibers and resin was 50:50.

The composite yarn was used to form a woven fabric and continuous reinforcing fiber molded resin by the method described above. The woven fabric texture, die and molding method used were the same as in Example 7-1.

[Comparative Example 7-3]

Using the same woven fabric as in Comparative Example 7-1, it was preheated before insertion into the die by the same method as Example 7-4, and molding was carried out.

Table 7-1 shows the evaluation results for [1-minute molding] and [10-minute molding] in Examples 7-1 to 7-4 and Comparative Examples 7-1 to 7-3.

[Table 9]

Table 7-1

| | | Example 7-1 | Example 7-2 | Example 7-3 | Example 7-4 | Comp. Example 7-1 | Comp. Example 7-2 | Comp. Example 7-3 |
|---|---|---|---|---|---|---|---|---|
| Molded article | Base section/lateral wall angle | 100 | 100 | 100 | 100 | 100 | 100 | 100 |
| Composite yarn | Compactness index | 0.57 | 0.54 | 0.57 | 0.57 | - | 0.41 | - |
| | Vf | 48 | 46 | 48 | 48 | 49 | 48 | 49 |
| | Surface roughness | 0.08 | 0.10 | 0.06 | 0.08 | - | 0.41 | - |
| | Long-range | 3.22 | 3.40 | 3.10 | 3.22 | - | 8.32 | - |
| | Reinforcing fiber strength | 1975 | 1601 | 1975 | 1975 | 1578 | 1926 | 1578 |
| Base material | Weaving | 4-4 Twill weave | 4-4 Twill weave | 4-4 Twill weave | 4-4 Twill weave | 4-4 Twill weave | 4-4 Twill weave | 4-4 Twill weave |
| Molded article 1 (1-minute molding) | Tensile strength | 440 | 400 | 500 | 460 | 340 | 300 | 240 |
| | Impregnation rate | 98.5 | 98 | 99.6 | 98.7 | 96.6 | 96.4 | 96.7 |
| | Vf | 50 | 50 | 50 | 50 | 50 | 50 | 50 |
| | Degree of strength exhibited (%) | 84% | 91% | 95% | 87% | 65% | 57% | 46% |
| Molded article 2 (10-minute molding) | Tensile strength | 440 | 400 | 490 | 450 | 390 | 420 | 270 |
| | Impregnation rate | 99.4 | 99.5 | 99.9 | 99.5 | 99.1 | 99.3 | 99.1 |
| | Vf | 47 | 48 | 48 | 47 | 52 | 52 | 52 |
| | Degree of strength exhibited | 89% | 95% | 97% | 91% | 71% | 77% | 49% |

The methods used in Examples 8-1 to 8-3 and Comparative Examples 8-1 and 8-2 will now be described.

[Continuous reinforcing fibers]

The continuous reinforcing fibers (A) used were glass fibers in a filament number of 800, with the following sizing agent (a) at 1.0 mass%, and with a fineness of 2900 dtex and a monofilament diameter of 13.4 μm. The winding form was roving. The strength was 1673 MPa.

[Method for producing braid]

One or a plurality of composite yarns may be used as the intermediate base material for pultrusion molding. A braid is used as the preferred form of the intermediate base material used for pultrusion molding, from the viewpoint of the strength and shape during pultrusion molding.

A braid, according to the embodiment, is 3 or more units of fibers alternately intersecting into a braid, with diagonal intersection angles for each of the fibers at the crossing points, and it may be in a square knit, spread knit or round knit assembly form.

The intersection angles may be set as appropriate for the required physical properties, with no particular limitation. When high strength is required in the lengthwise direction of the braid, the intersection angles may be set small, such as 0 to 60 degrees, preferably 10 to 45 degrees and more preferably 10 to 30 degrees. When high strength is required in the circumferential direction of the braid, the intersection angles may be set larger, such as 15 to 90 degrees, preferably 30 to 80 degrees and more preferably 45 to 80 degrees. The method for obtaining the braid is not particularly restricted, and any publicly known method and apparatus may be used that allow an appropriate braid to be formed according to the intended use and purpose.

A braid to be used in the method of the embodiment is not particularly restricted so long as it includes composite yarn of the embodiment, such that the braid inherits the properties of the composite yarn.

Since the composite yarn to be used in the method of the embodiment has the entire circumference of the continuous reinforcing fiber bundle covered by a thermoplastic resin, the continuous reinforcing fibers are not in direct contact during formation of the braid, and breakage of all or portions of the fibers is highly unlikely to occur.

The form of the braid derives from the apparatus used for braiding, and it may be not only in a string form but also an H-shaped or L-shaped structure, or a multiaxial structure as a multiaxial assembly, without being limited to a string form.

[Continuous reinforcing fiber molded resin production method]

[Pultrusion molding]

Fig. 8-1 is a process drawing for pultrusion molding, also serving as a schematic diagram of a pultrusion molding machine. The composite yarn feeder may be a batch process, and from the viewpoint of productivity it may be situated at a location allowing the molding substrate to be continuously supplied, or a braider or knitting machine may be set, depending on the final product to be produced. A preheating unit is not essential but may be provided as necessary, the heating method preferably being infrared heating or radiant heating, which allow heating in a non-contact manner. The temperature for preheating is preferably below and near the melting point. The composite yarn introduced into the heat melting shaping unit is heated inside a heating die with a taper (θ), and the thermoplastic resin is melted and passed through while impregnating the continuous reinforcing fibers. The fill factor of the molding substrate introduced into the hot melting section is preferably 100 to 150%, more preferably 100 to 130% and even more preferably 103 to 110%. The fill factor is an important parameter during molding, and is defined as the total area of the intermediate material (molding substrate) with respect to the cross-sectional area of the die outlet. If the fill factor is less than 100%, pressure on the resin at the shaping sections will not be sufficient, resulting in lack of impregnation of the resin into the continuous reinforcing fibers. If the fill factor is too high, conversely, problems may result such as inability for the material to be introduced, excessive load, or tearing of the material.

The pultrusion speed is largely governed by the size of the apparatus and need only be a level allowing the reinforcing fibers to be impregnated with the resin so that sufficient strength is obtained for the molded article, but it is preferably 0.1 to 300 mm/s, more preferably 1 to 100 mm/s and even more preferably 2 to 30 mm/s.

[Example 8-1]

Using a pultrusion molding machine such as shown in Fig. 8-1 (L2 = 200 mm), a composite yarn with Vf = 50% was formed under the following conditions using continuous reinforcing fibers (A).

[Covering conditions]

Glass fiber bundle count: 1
Inner diameter of hole A: 0.55 mm
Inner diameter of hole B: 0.65 mm
Distance between holes AB: 2.0 mm
Take-up speed: 600 m/min

By passing 15 of the formed composite yarns through the interior of a heating die in a hot melt shaping unit as shown in Fig. 8-2, a round bar with a diameter of 2 mm was fabricated. The angle θ of the tapered part was 3 degrees, and the pultrusion speed was 1 mm/s.

[Example 8-2]

A braider was attached to the composite yarn feeder in the pultrusion molding machine shown in Fig. 8-1, and a round cord-like structure with a hollow circular tubular form was produced. Using a heating die in the hot melt shaping unit as shown in Fig. 8-3, a core rod was set at the center section of the braid and a pultruded molded article with a hollow pipe form was produced. The outer diameter of the molded pipe was 18 mm, the inner diameter was 15 mm, the wall thickness was 1.5 mm, the angle θ of the tapered part was 3 degrees, and the pultrusion speed was 1 mm/s.

[Example 8-3]

A twin-screw extruder (TEM26SS) was used for compounding of the covering resin PA66 and copolymer PA6/12 in a weight ratio of 8:1, and pellets were obtained. The rotational speed of the extruder was 200 rpm, the throughput was 15 kg/hr and the extrusion temperature was 270°C. The system interior was brought to a vacuum through a vacuum vent prior to using the die. The pellets were used in the same manner as Example 8-2, except that the pultrusion speed was 3 mm/s.

[Comparative Example 8-1]

Pultrusion molding was carried out to fabricate a round bar in the same manner as Example 8-1, except that the following combined filament yarn was used instead of composite yarn. The pultrusion speed was 1 mm/s, but the round bar tore during the pultrusion.

[Combined filament yarn]

Using two non-interlaced polyamide 66 fibers [trade name LEONA [R] 470/144BAU (product of Asahi Kasei Corp.), fineness: 470 dtex, number of filaments: 144] and two continuous reinforcing fibers (A), both were doubled and aligned and then supplied in an essentially vertical manner to a fluid entangling nozzle for fluid entangling under the following conditions, to obtain a composite yarn.

- Fluid entangling nozzle: KC-AJI-L by Kyocera Corp. (1.5 mm diameter, propulsion type)
- Air pressure: 2 kg/cm$^2$
- Machining speed: 30 m/min

[Comparative Example 8-2]

Pultrusion molding was carried out to fabricate a hollow pipe molded article in the same manner as Example 8-2, except for using this combined filament yarn instead of composite yarn. The pultrusion speed was 1 mm/s, but the hollow pipe tore during the pultrusion.
In Examples 8-1, 8-2 and 8-3, the continuous reinforcing fibers were completely covered by the resin, there was no damage to the continuous reinforcing fibers during the composite yarn production process, and the processability was also excellent. Molding was also possible without problems even when increasing the pultrusion molding speed to 1 mm/s in Examples 8-1 and 8-2 and to 3 mm/s in Example 8-3, but with molding in Comparative Examples 8-1 and 8-2, the molded articles became torn during molding even at a pultrusion molding speed of 1 mm/s. In Examples 8-1, 8-2 and 8-3, the impregnation rates of the resin into the reinforcing fibers of the fabricated molded articles were all measured to be satisfactory at 99% or higher, while the flexural strength was 400 MPa or higher and the flexural modulus was 30 GPa or higher. In contrast, the molded articles of Comparative Examples 8-1 and 8-2 had low impregnation rates of 97% and 98%, and were only able to obtain values of 200 MPa or lower for the flexural strength and 20 GPa or lower for the flexural modulus.

INDUSTRIAL APPLICABILITY

A composite yarn produced by the method for producing a thermoplastic resin coating-reinforcing fiber composite yarn according to the invention has an excellent resin impregnating property during molding, since the multifilament bundle of continuous reinforcing fibers is covered with a thermoplastic resin in a specified compact state, and when it is used as a molding material it allows production of molded articles with high physical properties even by molding for short time periods, and in addition, even though the covering by the thermoplastic resin surrounding the entire circumference of the multifilament bundle of continuous reinforcing fibers is in contact with the continuous long reinforcing fibers at the outermost side of the continuous reinforcing fiber bundle, since it is not bonded or only very weakly bonded with the fibers, it has excellent flexibility as a yarn, and excellent manageability for weaving and knitting. Using the method of the invention drastically improves productivity because it allows high-speed production of composite yarn as a molding substrate. The method for producing the composite yarn of the invention can therefore be suitably used for production of composite molded articles having reinforcing materials, such as glass fibers or other reinforcing fibers, added to resins.

In addition, since the thermoplastic resin coating-reinforcing fiber composite yarn of the invention has low surface roughness, it has excellent manageability as yarn for processing into intermediate materials such as woven or knitted fabrics and excellent manageability of the intermediate materials themselves, as well as an excellent resin impregnating property during molding since the multifilament bundle of continuous reinforcing fibers is covered with a thermoplastic resin in a specified compact state, and when used as a molding material it allows production of molded articles with high physical properties even by molding for short time periods. Even though the covering by the thermoplastic resin that surrounds the entire circumference of the multifilament bundle of continuous reinforcing fibers in the thermoplastic resin coating-reinforcing fiber composite yarn of the invention is in contact with the continuous long reinforcing fibers on the outermost side of the continuous reinforcing fiber bundle, since it is not bonded or only very weakly bonded with the fibers, it has excellent flexibility as a yarn, and excellent manageability for weaving and knitting. The thermoplastic resin coating-reinforcing fiber composite yarn of the invention, and molded articles containing it, can therefore be suitably utilized as a reinforcing material for materials that require a high level of mechanical properties, such as structural parts of various machines and vehicles.

The continuous fiber-reinforced molded resin of the embodiment is industrially useful as a reinforcing material for materials that require a high level of mechanical properties, such as structural parts for various machines and vehicles, and also as a composite molded article material in thermoplastic resin compositions.

By using the method for producing molded composite materials having three-dimensional shapes according to the embodiment described herein, it is possible to produce molded articles with excellent resin impregnating properties during molding and high physical properties even with molding for short time periods, and by using the thermoplastic resin coating-reinforcing fiber composite yarn that has excellent flexibility as yarn and excellent manageability for weaving and knitting, it is possible to produce molded composite materials with three-dimensional shapes, having no disorder of the continuous reinforcing fiber bundle, having high strength especially at the corner sections and having excellent outer appearance and strength, as well as molded composite materials having a high impregnation rate at high speed, by a specified method that includes pultrusion molding. The present invention can therefore be suitably applied for production of reinforcing materials in materials that require a high level of mechanical properties, such as structural parts of various machines and vehicles.

REFERENCE SIGNS LIST

r Radius of continuous reinforcing fiber based on approximately circular cross-section

1 Region of outer peripheral edge separated from the perimeter of a continuous reinforcing fiber by 1/10 of the radius of a single continuous reinforcing fiber, at the boundary interface between the single continuous reinforcing fiber and a thermoplastic resin, in a cross-section perpendicular to the lengthwise direction of the continuous reinforcing fiber.

2 Continuous reinforcing fiber

3 Resin (secondary resin) other than resin with the highest occupying proportion of the entire resin region (primary resin) of two or more thermoplastic resins

4 Resin with the highest occupying proportion of the entire resin region (primary resin) of two or more thermoplastic resins

**Claims**

1. A thermoplastic resin coating-reinforcing fiber composite yarn in which the entire circumference of a multifilament bundle of continuous reinforcing fibers is covered by a thermoplastic resin, wherein the compactness index is 0.45 or greater, as represented by the following formula:

$$\text{Compactness index} = A/B$$

where the total area of the continuous reinforcing fibers in a cross-section of the composite yarn is A ($\mu$m$^2$) and the area occupied by continuous reinforcing fiber bundles in the composite yarn is B ($\mu$m$^2$).

2. A monofilament thermoplastic resin coating-reinforcing fiber composite yarn in which the entire circumference of a multifilament bundle of continuous reinforcing fibers is covered by a thermoplastic resin, wherein the surface roughness of the composite yarn is 0.25 $\mu$m or smaller.

3. The composite yarn according to claim 1 or 2, wherein the eccentricity, which is the value of the distance between the area center of gravity of the composite yarn in an arbitrary cross-section of the composite yarn and the area center of gravity of the continuous reinforcing fiber bundle in the composite yarn, divided by the circle area-equivalent radius of the composite yarn, is 12% or lower.

4. A thermoplastic resin coating-reinforcing fiber composite yarn in which the entire circumference of a multifilament bundle of continuous reinforcing fibers is covered by a thermoplastic resin, wherein the thermoplastic resin is composed of two or more different resins.

5. A thermoplastic resin coating-reinforcing fiber composite yarn in which the entire circumference of a multifilament bundle of continuous reinforcing fibers is covered by a thermoplastic resin, according to any one of claims 1 to 4, wherein the thermoplastic resin is composed of two or more different resins.

6. The composite yarn according to claim 5, wherein the thermoplastic resin forms a microphase-separated structure.

7. The composite yarn according to any one of claims 4 to 6, wherein the difference between the melting point of the thermoplastic resin that is the main component present at greater than 50 wt% and the melting point of the thermoplastic resin that is the accessory component is 20 to 170°C.

8. The composite yarn according to any one of claims 1 to 7, wherein essentially no thermoplastic resin is present inside the continuous reinforcing fiber bundle.

9. A wound body composed of thermoplastic resin coating-reinforcing fiber composite yarn according to any one of claims 1 to 8.

10. A fabric composed of thermoplastic resin coating-reinforcing fiber composite yarn according to any one of claims 1 to 8.

11. A braid of thermoplastic resin coating-reinforcing fiber composite yarn according to any one of claims 1 to 8.

12. A method for producing a thermoplastic resin coating-reinforcing fiber composite yarn, the method comprising the following steps:

a step in which a thermoplastic resin feeder is provided comprising a die having at the tip, a hole A, and a hole B which has an open area equal to or larger than the open area of hole A and is situated concentrically with hole A;
a step in which the multifilament bundle of continuous reinforcing fibers is passed through hole A and hole B at a predetermined tension while a molten thermoplastic resin is fed from the thermoplastic resin feeder through hole B at a predetermined pressure, to cover the outer periphery of the continuous reinforcing fiber bundle with the thermoplastic resin; and

a cooling/winding step in which the continuous reinforcing fiber bundle covered with the molten thermoplastic resin is cooled and wound up.

13. The method according to claim 12, wherein the continuous reinforcing fibers are glass fibers or carbon fibers.

14. The method according to claim 12 or 13, wherein the distance between the exit end of hole A and the entrance end of hole B of the die in the passage direction of the continuous reinforcing fiber bundle is restricted to a predetermined value so that a predetermined volume of molten resin remains pooled inside the die.

15. The method according to any one of claims 12 to 14, wherein the cross-sectional area of hole A is 101% to 1000% with respect to the cross-sectional area of the continuous reinforcing fiber bundle with closest packing of the continuous reinforcing fibers.

16. The method according to any one of claims 12 to 15, wherein the cross-sectional area of hole B is 100% to 1000% with respect to the cross-sectional area of hole A.

17. The method according to any one of claims 12 to 16, wherein the predetermined tension of the continuous reinforcing fibers is 0.01 N to 100 N.

18. The method according to any one of claims 12 to 17, wherein the predetermined tension is adjusted by a tension control device situated in front of hole A in the passage direction of the continuous reinforcing fiber bundle.

19. The method according to any one of claims 12 to 18, wherein the reinforcing fiber bundle is guided to hole A by a guiding device situated in front of hole A in the passage direction of the continuous reinforcing fiber bundle.

20. The method according to any one of claims 12 to 19, wherein the drawdown ratio of the thermoplastic resin coating-reinforcing fiber composite yarn is 0% to 50%.

21. The method according to any one of claims 12 to 20, wherein the surface temperature of hole B is 0°C to 100°C higher than the melting point of the thermoplastic resin.

22. The method according to any one of claims 12 to 21, wherein the resin pressure of the die or between the die and the thermoplastic resin feeder is 0.01 MPa to 50 MPa.

23. The method according to any one of claims 12 to 22, wherein operation is initiated by the following operation start-up procedures:

(1) the continuous reinforcing fiber bundle is passed through hole A and hole B at a speed of 800 m/min or lower;
(2) the thermoplastic resin is supplied from hole B at a throughput such that the continuous reinforcing fibers of the reinforcing fiber composite yarn after coating are not exposed, and
(3) after confirming that the resin has covered the outer periphery of the continuous reinforcing fiber bundle, the take-up speed (m/min) of the thermoplastic resin coating-reinforcing fiber composite yarn, as the final product, is increased while adjusting the throughput of the thermoplastic resin so that the continuous reinforcing fibers of the reinforcing fiber composite yarn after coating are not exposed.

24. The method according to claim 23, wherein the operation start-up procedure further includes the following procedure after the procedure of (3):
(4) forced cooling is initiated.

25. A method for producing the composite yarn according to any one of claims 4 to 8, which includes the following steps:

a step of preparing a multifilament bundle of continuous reinforcing fibers;
a step of preparing resin pellets comprising two or more compounded thermoplastic resins; and
a step of supplying the resin pellets to a melt extruder and covering the outer periphery of the continuous reinforcing fiber bundle with the molten thermoplastic resin mixture.

26. A method for producing the composite yarn according to any one of claims 4 to 8, which includes the following steps:

a step of preparing a multifilament bundle of continuous reinforcing fibers;
a step of preparing separate resin pellets of two or more thermoplastic resins; and
a step of dry blending the two or more different resin pellets and supplying them to a melt extruder, and covering the outer periphery of the continuous reinforcing fiber bundle with the molten thermoplastic resin mixture.

27. A continuous fiber-reinforced molded resin comprising continuous reinforcing fibers with approximately circular cross-sections and two or more thermoplastic resins, wherein at the boundary interface between a single continuous reinforcing fiber and the thermoplastic resin in a cross-section perpendicular to the lengthwise direction of the continuous reinforcing fiber, in a region of the outer peripheral edge separated from the perimeter of the continuous reinforcing fiber by 1/10 of the radius of a single continuous reinforcing fiber, the proportion of the two or more thermoplastic resins that is occupied by resin other than the resin with the highest occupying proportion of the entire resin region, is higher than the proportion occupied by the resin with the highest occupying proportion of the entire resin region, while in the resin region other than that region of the outer peripheral edge, the resin other than the resin with the highest occupying proportion of the entire resin region, of the two or more thermoplastic resins, is either evenly dispersed or mixed.

28. The continuous fiber-reinforced molded resin according to claim 27, wherein the resin with the highest occupying proportion of the entire resin region, of the two or more thermoplastic resins, is the resin with the highest melting point.

29. The continuous fiber-reinforced molded resin according to claim 27 or 28, wherein the melting point of the mixture of the two or more thermoplastic resins is essentially the same as the melting point of the resin with the highest occupying proportion of the entire resin region, of the two or more thermoplastic resins.

30. The continuous fiber-reinforced molded resin according to any one of claims 27 to 29, wherein the difference between the melting peak temperature during temperature increase and the crystallization peak temperature during temperature decrease for the mixture of the two or more thermoplastic resins is smaller than the difference between the melting peak temperature during temperature increase and the crystallization peak temperature during temperature decrease for the resin with the highest occupying proportion of the entire resin region, of the two or more thermoplastic resins.

31. The continuous fiber-reinforced molded resin according to any one of claims 27 to 30, wherein the resin impregnation rate is 99% or higher.

32. A method for producing a molded composite material having a three-dimensional shape, wherein the method includes the following step:
a step in which a thermoplastic resin coating-reinforcing fiber composite yarn that has the entire circumference of a multifilament bundle of continuous reinforcing fibers covered by a thermoplastic resin, is used as the molding substrate.

33. A method for producing a molded composite material, which includes the following steps:

a preheating step in which a thermoplastic resin coating-reinforcing fiber composite yarn in which the entire circumference of a multifilament bundle of continuous reinforcing fibers is covered by a thermoplastic resin, and/or a woven or knitted fabric of the composite yarn, is inserted into a die at ordinary temperature as a molding substrate, or is inserted into a preheated die as a molding substrate;
a step in which means other than a heat source is used for preheating from the die after insertion of the molding substrate, if necessary;
a temperature-elevating/closing step in which the cavity surface of the die is increased to above the flow temperature of the thermoplastic resin after the die has been closed, or the die is closed after the cavity surface of the die has been increased to above the flow temperature of the thermoplastic resin; and
a cooling/mold release step in which the cavity surface of the die is cooled to below the flow temperature of the thermoplastic resin, and then the die is opened to release the molded article.

34. A pultrusion molding method for a molded composite material, wherein the method includes the following steps:

a step in which a molding substrate is prepared that is selected from the group consisting of thermoplastic resin coating-reinforcing fiber composite yarns having the entire circumference of a multifilament bundle of continuous reinforcing fibers covered by a thermoplastic resin, and woven fabrics, knitted fabrics and braids of such composite yarns; and

a molding step in which the molding substrate is successively passed through a heating die in a hot melt shaping unit that is above the flow temperature of the thermoplastic resin and a cooling die in a cooling solidification unit that is below the flow temperature, to obtain a molded article.

**35.** The method according to claim 32, wherein the linearity of the continuous reinforcing fiber bundle in the molded composite material is 90% or higher.

**36.** The method according to claim 32 or 35, wherein the molded composite material with a three-dimensional shape has a structure with a base section and standing wall sections.

**37.** The method according to claim 36, wherein the standing wall sections are side walls situated at the edges of the base section, and the relationships E (%) > 2D(°) - 150 and D(°) ≥ 90° are satisfied, where D° is the interior angle formed between the base section and the side walls, and E% is the continuity of the continuous reinforcing fibers straddling the base section and the side walls.

**38.** The method according to claim 33, wherein the time (T min) above the flow temperature of the thermoplastic resin in the temperature-elevating step and the impregnation rate (I ≤ 100%) of the thermoplastic resin in the molded composite material satisfy the following inequality (2):

$$\text{Impregnation rate (I)} > 0.2 \times T + 97.4 \qquad \text{Inequality (2).}$$

**39.** The method according to claim 34, wherein the molding substrate is a braid, and in the molding step, a core rod is set in the center section of the braid.

# FIG. 1-1

Continuous reinforcing fiber bundle

Thermoplastic resin

Coating

Continuous reinforcing fiber
cross-sectional area A

Occupied
area B

Thermoplastic
resin

Circle area
equivalent diameter I

Cross-section of thermoplastic resin
coating-reinforcing fiber composite yarn

EP 3 763 860 A1

FIG. 1-2

Continuous reinforcing fiber single yarn

Line connecting contact points between continuous reinforcing fibers and thermoplastic resin (inner portion represents area occupied by continuous reinforcing fibers)

Thermoplastic resin

100.0μm

# FIG. 1-3

(a) SEM_Backscattered electron image

(b) Binarized image

# FIG. 1-4

(a) SEM_Backscattered electron image

(b) Binarized image

# FIG. 1-5

(a) SEM_Backscattered electron image

(b) Binarized image

# FIG. 1-6

(a) SEM_Backscattered electron image

(b) Binarized image

# FIG. 1-7

# FIG. 1-8

FIG. 1-9

FIG. 1-11

Pooled resin section

Hole B

Hole A

Resin inlet

Outlet end

Inlet end

Die cross-section

Resin
(polyamide, polypropylene, etc.)

Reinforcing fibers
(glass fibers, carbon fibers, etc.)

# FIG. 1-12

Textile composite forming step

Press molding step

(1) Mold opening    (2) Base material set

Hybrid (pressing + injection) molding step

(3) Mold closing
1. Hot melting
2. Cooling solidification
(4) Mold opening
Mold release
Press molded article

(3) Mold closing
1. Hot melting
2. Injection of resin for injection molding
3. Cooling solidification
(4) Mold opening
Mold release
Textile composite portion
Resin portion for injection molding
Hybrid molded article

FIG. 1-13

95mm

18mm

6mm

R14

R14

13mm

FIG. 2-1

EP 3 763 860 A1

# FIG. 2-2

# FIG. 3-1

Photograph of
Comparative Example 3-3 composite yarn

(a) SEM_Backscattered electron image          (b) Binarized image

# FIG. 3-2

# FIG. 4-1

(a) SEM_Backscattered electron image

(b) Binarized image

# FIG. 4-2

# FIG. 4-3

171117 - 0006 4.0kV 8.0mm x2.00k PDBSE(CP)          20.0μm

# FIG. 4-4

171117 - 0018 4.0kV 8.0mm x2.00k PDBSE(CP)                    20.0μm

# FIG. 5-1

FIG. 5-2

FIG. 5-3

# FIG. 6-1

# FIG. 6-2

FIG. 6-3

FIG. 6-4

FIG. 7

EP 3 763 860 A1

FIG. 8-1

Composite
yarn feeder

Preheating unit

Preheating unit

Heat melting
shaping unit

Molding unit

Cooling
solidification
unit

Take-up
unit

## FIG. 8-2

Heater

Shaping section

θ

2

L1

L2

## FIG. 8-3

Heater

Shaping section

θ

18

15

L1

L2

# FIG. 9

## INTERNATIONAL SEARCH REPORT

| International application No. |
| --- |
| PCT/JP2019/008480 |

**A. CLASSIFICATION OF SUBJECT MATTER**
Int.Cl. D02G3/36(2006.01)i, B29B11/16(2006.01)i, B29B15/14(2006.01)i,
B29C48/15(2019.01)i, B29C48/34(2019.01)i, B29C70/16(2006.01)i,
C08J5/04(2006.01)i, B29K105/18(2006.01)n
According to International Patent Classification (IPC) or to both national classification and IPC

**B. FIELDS SEARCHED**

Minimum documentation searched (classification system followed by classification symbols)
Int.Cl. D02G1/00-3/48, D02J1/00-13/00, B29B11/16, B29B15/08-15/14,
B29C48/00-48/96, B29C70/00-70/88, C08J5/04-5/10, C08J5/24

Documentation searched other than minimum documentation to the extent that such documents are included in the fields searched
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 6-506642 A (VETROTEX FRANCE S.A.) 28 July 1994, | 4-5, 9-26 |
| A | Best mode for carrying out the invention, examples, drawings & US 5571326 A, column 4, line 6 to column 5, line 33, examples, figures & WO 1993/015896 A1 & DE 69304157 C & FR 2687094 A & ES 2093410 T & BR 9304115 A & HU 67229 A & CA 2107670 A & CZ 9302358 A & FI 934372 A & IL 104630 D & MX 9300668 A & NO 933543 A & SK 123493 A & KR 10-0263104 B & TW 298148 U | 1-3, 7, 8 |

☒ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 07 May 2019 (07.05.2019) | 14 May 2019 (14.05.2019) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

## INTERNATIONAL SEARCH REPORT

International application No.

PCT/JP2019/008480

C (Continuation).   DOCUMENTS CONSIDERED TO BE RELEVANT

| Category* | Citation of document, with indication, where appropriate, of the relevant passages | Relevant to claim No. |
|---|---|---|
| X<br>A | JP 11-42693 A (SHIN-ETSU POLYMER CO., LTD.) 16 February 1999, claims, paragraph [0013], fig. 2 (Family: none) | 4-9, 12-26<br>1-3, 10, 11 |
| X<br>A | JP 6-2344 B2 (KOBE STEEL, LTD.) 12 January 1994, claims, column 6, line 10 to column 7, line 25, drawings & JP 62-60609 A | 12-24<br>1-11 |
| X | JP 2013-543906 A (E.I. DU PONT DE NEMOURS AND COMPANY) 09 December 2013, claims 1, 6-12, example E3 & WO 2012/058368 A1, claims 1, 6-12, example E3 & EP 2632717 A1 & CN 103221208 A | 27-31 |
| X<br>A | JP 4-185313 A (TOYOBO BOSEKI KABUSHIKI KAISHA) 02 July 1992, page 2, upper right column, lines 12-18, page 2, lower left column, lines 6-10, page 2, lower right column, line 15 to page 3, upper left column, line 8, example 6, fig. 6, 7, 9 (Family: none) | 32-39<br>1-11 |
| X<br><br>A | JP 3-236942 A (THE YOKOHAMA RUBBER CO., LTD.) 22 October 1991, page 2, upper right column, line 8 to lower left column, line 2, page 2, lower right column, line 15 to page 3, upper left column, line 15, fig. 1, 7 (Family: none) | 32, 35-37<br>1-11, 33, 34, 38, 39 |

Form PCT/ISA/210 (continuation of second sheet) (January 2015)

## INTERNATIONAL SEARCH REPORT

| International application No. |
| --- |
| PCT/JP2019/008480 |

**Box No. II**      **Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III**      **Observations where unity of invention is lacking (Continuation of item 3 of first sheet)**

This International Searching Authority found multiple inventions in this international application, as follows:
See extra sheet

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
     ☐ The additional search fees were accompanied by the applicant's protest and, where applicable, the payment of a protest fee.

     ☐ The additional search fees were accompanied by the applicant's protest but the applicable protest fee was not paid within the time limit specified in the invitation.

     ☒ No protest accompanied the payment of additional search fees.

Form PCT/ISA/210 (continuation of first sheet (2)) (January 2015)

**INTERNATIONAL SEARCH REPORT**

International application No.

PCT/JP2019/008480

<Continuation of Box No. III>

Document 7: JP 11-20059 A (NITTO BOSEKI CO., LTD.) 26 January 1999
Document 8: JP 8-336879 A (NITTO BOSEKI CO., LTD.) 24 December 1996
Document 9: JP 10-138379 A (TORAY INDUSTRIES, INC.) 26 May 1998

The claims are classified into the five inventions below.

(Invention 1) Claims 1, 3, 5-11, 25, and 26
Claims 1, 3, 5-11, 25, and 26 have the special technical feature of a thermoplastic resin-coated reinforced-fiber composite yarn in which the entire circumference of a continuous reinforced fiber bundle that is a multi-filament is coated with a thermoplastic resin, wherein when the total area of the continuous reinforced fibers in a cross section of the thermoplastic resin-coated reinforced-fiber composite yarn is A ($\mu m^2$) and the area occupied by the continuous reinforced fiber bundle in the composite yarn is B ($\mu m^2$), the denseness index represented by the formula below is at least 0.45, and are thus classified as invention 1:
Denseness index = A/B.
In addition, claims 25 and 26 are substantially identical or equivalent to the invention in claim 1, and are thus classified as invention 1.

(Invention 2) Claim 2
Claim 2 shares with claims 1, 3, 5-11, 25, and 26 classified as invention 1 the technical feature of a thermoplastic resin-coated reinforced-fiber composite yarn in which the entire circumference of a continuous reinforced fiber bundle that is a multi-filament is coated with a thermoplastic resin. However, said technical feature does not make a contribution over the prior art in light of the disclosures of document 7 (see claims and paragraph [0009]), document 8 (see claims and paragraph [0008]), and document 9 (see claims), and thus cannot be said to be a special technical feature. In addition, there do not exist other identical or corresponding technical features between these inventions.
In addition, claim 2 is not dependent on claims 1, 3, 5-11, 25, and 26. In addition, claim 2 is not substantially identical or equivalent to any of the claims classified as invention 1.
Thus, claim 2 cannot be classified as invention 1.
In addition, claim 2 has the special technical feature of a thermoplastic resin-coated reinforced-fiber composite yarn which has a mono-filament shape and in which the entire circumference of a continuous reinforced fiber bundle that is a multi-filament is coated with a thermoplastic resin, the composite yarn having a surface roughness of no greater than 0.25 μm, and is thus classified as invention 2.

**INTERNATIONAL SEARCH REPORT**

| International application No. |
| --- |
| PCT/JP2019/008480 |

(Invention 3) Claims 4 and 27-31

Claim 4 shares with claims 1, 3, 5-11, 25, and 26 classified as invention 1 and claim 2 classified as invention 2 the technical feature of a thermoplastic resin-coated reinforced-fiber composite yarn in which the entire circumference of a continuous reinforced fiber bundle that is a multi-filament is coated with a thermoplastic resin. However, said technical feature does not make a contribution over the prior art in light of the disclosures of document 7 (see claims and paragraph [0009]), document 8 (see claims and paragraph [0008]), and document 9 (see claims), and thus cannot be said to be a special technical feature. In addition, there do not exist other identical or corresponding technical features between these inventions.

In addition, claim 4 is not dependent on claims 1, 3, 5-11, 25, 26, and 2. In addition, claim 4 is not substantially identical or equivalent to any of the claims classified as invention 1 or 2.

Thus, claim 4 cannot be classified as invention 1 or 2.

In addition, claim 4 has the special technical feature of a thermoplastic resin-coated reinforced-fiber composite yarn which has a mono-filament shape and in which the entire circumference of a continuous reinforced fiber bundle that is a multi-filament is coated with a thermoplastic resin, the thermoplastic resin being composed of at least two types of resins, and is thus classified as invention 3.

(Invention 4) Claims 12-24

Claims 12-24 are not dependent on claims 1, 3, 5-11, 25, and 26, claims 2, and claims 4 and 27-31. In addition, claims 12-24 are not substantially identical or equivalent to any of the claims classified as invention 1, invention 2, or invention 3.

Thus, claims 12-24 cannot be classified as any of inventions 1-3.

In addition, claims 12-24 have the special technical feature of a method for producing a thermoplastic resin-coated reinforced-fiber composite yarn, the method comprising:

a step for preparing a thermoplastic resin supply device provided with a die having, at the tip thereof, hole A and hole B having the same or larger hole area as the hole area of hole A and arranged concentrically with hole A;

a step for supplying a fused thermoplastic resin through hole B from the thermoplastic resin supply device under a predetermined pressure and coating the circumference of a continuous reinforced-fiber resin bundle with the thermoplastic resin while passing the continuous reinforced-fiber resin bundle that is a multi-filament through hole A and hole B with a predetermined tension; and

a cooling · winding step for cooling the continuous reinforced-fiber bundle coated with the fused thermoplastic resin and winding the cooled continuous reinforced-fiber bundle, and are thus classified as invention 4.

(Invention 5) Claims 32-39

Claims 32-39 are not dependent on claims 1, 3, 5-11, 25, and 26, claims 2, claim 4, and claims 12-24. In addition, claims 32-39 are not substantially identical or equivalent to any of the claims classified as invention 1, invention 2, invention 3, or invention 4.

Thus, claims 32-39 cannot be classified as any of inventions 1-4.

In addition, the invention in claims 32-39 has the special technical feature of a method for manufacturing a composite material molded body, the method comprising a step for using, as a molding base material, a thermoplastic resin-coated reinforced-fiber composite yarn in which the entire circumference of a continuous reinforced fiber bundle that is a multi-filament is coated with a thermoplastic resin, and is thus classified as invention 5.

Form PCT/ISA/210 (extra sheet) (January 2015)

**EP 3 763 860 A1**

**Patent documents cited in the description**

- JP 2015101794 A
- JP 11020059 A
- JP 8336879 A
- WO 2013042763 A
- JP 5987335 B
- JP 10138379 A
- JP 5878544 B